(19) Europäisches Patentamt
European Patent Office
Office européen des brevets

(11) **EP 3 879 942 A1**

(12) **EUROPÄISCHE PATENTANMELDUNG**

(43) Veröffentlichungstag:
**15.09.2021 Patentblatt 2021/37**

(21) Anmeldenummer: **21161371.6**

(22) Anmeldetag: **08.03.2021**

(51) Int Cl.:
**H05B 47/165** (2020.01)  **H05B 47/18** (2020.01)
**H02J 9/06** (2006.01)  **G08B 29/06** (2006.01)
**H05B 45/10** (2020.01)  **H05B 47/21** (2020.01)
**H05B 47/23** (2020.01)  **G08B 7/06** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.03.2020 DE 102020202947**

(71) Anmelder: **RP-Technik GmbH**
**63110 Rodgau (DE)**

(72) Erfinder: **Pasedag, Roland**
**63110 Rodgau (DE)**

(74) Vertreter: **Cremer & Cremer**
**Patentanwälte**
**St.-Barbara-Straße 16**
**89077 Ulm (DE)**

(54) **NOTLICHTBELEUCHTUNGSANLAGE MIT EINEM EXTERN WEITERGEFÜHRTEN INTERNEN BUS UND VERFAHREN ZU IHREM BETRIEB SOWIE HERSTELLUNGSVERFAHREN**

(57) Eine Notlichtbeleuchtungsanlage 101 ist aus einzelnen, jeweils autark arbeitenden Modulen 15, 15$^I$, 15$^{II}$, 113, die eine eigene Kernfunktion wahrnehmen, zusammengesetzt. Die Module sind gebäudeweit verteilbar und über einen einzigen internen Bus 151 untereinander verbunden, der unverändert als externer Bus 151 weiterführbar ist. Eine Verbindung zwischen allen Modulen einer Zentrale ist von Modul zu Modul durchgeschleift. An den externen Bus 151 sind weitere Module, wie die Module CCM, CES, CEV, CMT, CMA, CLM, CMM, CPS, BBC, anschließbar. In einem Verfahren zum Betrieb einer entsprechenden Notlichtbeleuchtungsanlage 101 mit mehreren Notlichtleuchten 31, 31$^I$, 31$^{II}$, 33, wobei die Module 15, 15$^I$, 15$^{II}$, 113 zumindest teilweise in Serie verschaltet sind und zwischen den Modulen mit Hilfe eines Bus-Systems 151 kommuniziert wird, überwacht ein einziges Überwachungsmodul CMM das Funktionieren des Intern-Extern-Busses 151. In einem Verfahren zur Erstellung einer entsprechenden update-fähigen Notlichtbeleuchtungsanlage 101 werden mehrere Module installiert und über einen externen Bus 151 verbunden.

Figur 1

EP 3 879 942 A1

## Beschreibung

Die vorliegende Erfindung behandelt eine Notlichtbeleuchtungsanlage, die sich modular aus einzelnen, über einen internen Bus untereinander verbundenen Modulen zusammen setzt, ein Verfahren zum Betrieb einer Notlichtbeleuchtungsanlage, die mehrere Notlichtleuchten aufweist, sowie ein Verfahren zur Erstellung einer Notlichtbeleuchtungsanlage.

## Technisches Gebiet

Die Erfindung liegt auf dem Gebiet von Notlichtbeleuchtungsanlagen, auch Sicherheitsbeleuchtungsanlagen genannt, sowie damit im Zusammenhang stehenden Verfahren. Notlichtbeleuchtungsanlagen sind laut geltenden Vorschriften u. a. in öffentlich genutzten Gebäuden anzubringen, um z. B. im Falle eines Stromausfalls sowohl eine Orientierung im Gebäude als auch ein möglichst rasches Verlassen desselben zu ermöglichen. Bestandteil einer Notlichtbeleuchtungsanlage für ein Gebäude ist eine Anzahl an Notlichtleuchten, wobei grundsätzlich zwischen drei Leuchtenbetriebsarten und einem weiteren Zustand unterschieden wird:

* Dauerlichtleuchten - diese Leuchten sind im Normal- und im Notbetrieb immer eingeschaltet,
* Bereitschaftslichtleuchten - diese Leuchten sind nur im Notbetrieb eingeschaltet und ansonsten ausgeschaltet,
* geschaltete Dauerlichtleuchten - diese Leuchten können im Normalbetrieb ein- und ausgeschaltet werden, sind im Notbetrieb jedoch immer eingeschaltet und
* modifizierte Bereitschaft - bei Wegfall einer Spannung an einem Eingang werden alle Bereitschaftslichtleuchten und alle geschalteten Dauerlichtleuchten zugeschaltet.

Generelle Kernfunktionen einer Notlichtbeleuchtungsanlage sind solche Funktionen wie Strom-und Spannungsversorgung, Schalten von Notlichtleuchten, Detektion von Gefahrensituationen, Überwachung des Zustands von Batterien, Überwachung der Netzversorgung, Überwachung eines kritischen Kreises und ähnliches. Aufgaben und damit die Kernfunktionen der Notlichtbeleuchtungsanlagen ergeben sich aus den in jeweiligen Territorien bzw. Staaten, in denen die Notlichtbeleuchtungsanlage eingesetzt bzw. verbaut werden soll, geltenden Normen und gesetzlichen Bestimmungen. Somit kann bei einzelnen Anforderungen und damit bei einzelnen Kernfunktionen eine aus dem Einsatzgebiet herrührende Abweichung zwischen zwei Notlichtbeleuchtungsanlagen, die z. B. in unterschiedlichen europäischen Staaten verbaut werden sollen, zu beachten sein.

Bei bestehenden Notlichtbeleuchtungsanlagen sind Updates recht aufwändig. Updates werden z. B. notwendig, weil sich einschlägige Normen geändert haben oder weil sich die Größe der Notlichtbeleuchtungsanlage ändern muss, z. B. weil mit der gleichen Notlichtbeleuchtungsanlage zu versorgende Flächen nach einer Gebäudenutzungsänderung hinzukommen oder sich die einheitlich zusammenhängende, von der gleichen Notlichtbeleuchtungsanlage versorgte Fläche verkleinert. Ein derzeit viel diskutiertes Beispiel für die Änderung von Normen ist die dynamische Fluchtwegslenkung.

Wird also ein Anlagenkonzept entwickelt, das eine Erleichterung bei einem durchzuführenden Update im Vergleich mit bisher bekannten Notlichtbeleuchtungsanlagen darstellt, so ist der in dieser Hinsicht erkaufte Vorteil häufig mit Nachteilen in anderer Hinsicht verbunden, sodass zu überlegen ist, ob und wie die neu auftretenden Nachteile ausgeräumt werden können.

## Stand der Technik

Beispielhaft zu nennender Stand der Technik, der sich entweder auch mit Notlichtbeleuchtungsanlagen oder zumindest mit artähnlicher Beleuchtungstechnik beschäftigt, sind die Dokumente:

DE 10 2014 112 726 A1 (Anmelderin: INOTEC Sicherheitstechnik GmbH),
DE 10 2007 018 884 A2 (Anmelderin: GfS Gesellschaft für Stromversorgungstechnik mbH),
DE 10 2006 033 673 A1 (Anmelderin: ABB AG Germany),
DE 100 07 895 A1 (Anmelderin: Siemens AG),
GB 2 404 474 A (Anmelderin: Cooper Lighting and Security Limited) und
US 5 734 230 A (Patentinhaberin: Continuum Corporation).

Ein Auszug von einschlägigen Normen, die bei der Auslegung einer Notlichtbeleuchtungsanlage zu beachten sind (in Abhängigkeit des Einsatzortes bzw. beeinflusst durch das Einsatzland), sind z. B. die folgenden Normen:

DIN EN 50171 (z. B. in der Fassung von 2013) und

IEC 62034 bzw. DIN EN 62034.

**Aufgabenstellung**

Die Erfinder stellten sich deshalb die Aufgabe, eine updatefähige Notlichtbeleuchtungsanlage, d. h. eine Notlichtbeleuchtungsanlage mit einer verbesserten Update-Fähigkeit ausgestattet, in einer Weise bereitzustellen, so dass Updates mit einem im Vergleich zu herkömmlichen Notlichtbeleuchtungsanlagen verringerten Aufwand durchgeführt werden können und trotzdem eine ausreichende Betriebssicherheit gegeben ist.

**Erfindungsbeschreibung**

Die erfindungsgemäße Aufgabe wird durch eine Notlichtbeleuchtungsanlage nach Anspruch 1 gelöst, ein geeignetes Verfahren zum Betrieb einer Notlichtbeleuchtungsanlage lässt sich Anspruch 11 entnehmen. Ein Verfahren zum Erstellen einer Notlichtbeleuchtungsanlage ist in Anspruch 14 angegeben. Vorteilhafte Weiterbildungen lassen sich den abhängigen Ansprüchen entnehmen.

Um ein flexibles Produkt für die sich ändernden Rahmenbedingungen (Normenänderungen, Gebäudenutzungsänderungen; geänderte Wünsche der Kunden etc.) im Angebot zu haben, ist eine Notlichtbeleuchtungsanlage als modulare Notlichtbeleuchtungsanlage entwickelt worden. Anders als bei klassischen Zentralbatterieanlagen wird nicht eine zentral gesteuerte Anlage bereitgestellt, sondern es werden einzelne Module bereitgestellt, die jeweils für sich (nahezu bzw. ziemlich) autark arbeiten. Die einzelnen Module können sowohl als einzelne Hardware-Baugruppen, z. B. als Treiberstufen für Leuchten, ausgelegt sein als auch virtuell durch ein Prozessorboard, das abgekürzt durch die Buchstabenfolge "BBC" bezeichnet wird, realisiert sein.

Die Erfindung trägt dazu bei, solche Notlichtbeleuchtungsanlagen sicherer, zuverlässiger und ausfallsicherer zu machen.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Werden mehrere für eine bestimmte Notlichtbeleuchtungsanlage notwendige Module auf einem Prozessorboard (z. B. "CCM" (Abkürzung für "Core-Circuit-Modul") und "CIO" (Abkürzung für "Core-Input-Output-Modul") - siehe auch weiter unten) zusammengefasst (z. B. virtuell oder als Baugruppen-Realisierung), so kann auf diesem Weg eine Kompaktanlage realisiert werden. Reichen die Anschlussmöglichkeiten der Kompaktanlage nicht mehr aus oder sollten in der klassischen Art und Weise aufgebaute, größere, jedoch über mehrere Installationsorte verteilte Zentralbatterieanlagen realisiert werden, so können die Einzelmodule an den Bus, z. B. der Prozessorplatine, angeschlossen werden.

Die vorliegende Notlichtbeleuchtungsanlage unterscheidet sich neben weiteren Kriterien von den klassischen Zentralbatterieanlagen u. a. dadurch, dass nicht mehr eine einzige, zentrale, häufig in einem gesonderten Brandabschnitt wie einem besonders brandgesicherten Kellerraum angeordnete, Anlage geschaffen wird, sondern die Module in einem Gebäude verteilt angeordnet sein können.

Als ein Modul kann eine physikalisch getrennte Einheit (jedes Modul in einem eigenen Gehäuse, über den Core-Bus bzw. den Anlagenbus mit dem Gesamtsystem, d. h. mit allen anderen Modulen, verbunden) bezeichnet werden. Ein solches Modul kann aber auch durch einen Teil der Zentrale in einem kompakteren System gebildet werden (d. h., die Funktionen eines oder mehrerer der hier beschriebenen Module ist durch Software innerhalb eines Prozessors in der Zentrale realisiert, wobei auch diese "emulierten" Module prozessorintern über eine virtuelle Form des Core-Bus kommunizieren, also mit einem identischen Protokoll).

Zwischen den einzelnen Modulen werden über ein Bus-System Datenpakete ausgetauscht; die Datenpakete dienen zur Kommunikation zwischen den Modulen. Die Datenpakete können diverse Informationen umfassen, z. B. Prozessdaten, Befehle, Rückantworten auf Befehle, Ereignisse, Netzwiederkehr, Betriebsartumschaltung, Zustandswechsel an einem Eingang oder die Information, dass ein kritischer Kreis getrennt ist. Innerhalb der Notlichtbeleuchtungsanlage werden die Datenpakete vorteilhafterweise von einem Modul zum nächsten Modul geschickt, als bloße Information, ohne Steuerbefehle (Beispiel einer Event-Steuerung). Das empfangende Modul entscheidet dann, in Folge seiner Programmierung, was mit den empfangenen Datenpaketen bzw. der darin enthaltenen Information gemacht werden soll (bzw. was das "Event" bedeutet) - sollen die Datenpakete weiter geschickt werden, sollen sie gespeichert werden, sollen sie verarbeitet und in Steuerbefehle für die Notlichtleuchten umgesetzt werden etc.

Als Beispiel sei nachfolgend die Übertragung von Ereignissen näher erklärt (Event-Steuerung). Was das einzelne Modul mit den Ereignissen macht, entscheidet das jeweilige Modul selbständig aufgrund seiner Programmierung. So könnte in einem Modul das Einschalten in einen Notbetriebszustand für den Fall konfiguriert werden, dass zuvor gewisse Ereignisse auf dem Bus ("Core-Bus") identifiziert worden sind. Ein anderes Modul teilt die Ereignisse nur wieder anderen Bus-Teilnehmern mit. Auf dem Bus werden also Ereignisse übertragen. Die Module entscheiden aufgrund ihrer Programmierung, wie sie auf die Ereignisse reagieren.

Die Bus-Struktur zwischen den einzelnen Modulen ist ein von Modul zu Modul durchgeschliffener Bus. Um ein "Hängen" des gesamten Bus-Systems, d. h. um das Risiko "unterbrochener Bus" abzufangen, ist eine "fail-safe"-Funktionalität (auch als Fail-Safe-Funktionalität bezeichnet) bei zumindest einem Teil der Module einprogrammiert. Sollte z. B. der Bus (auch "CORE-Bus" genannt) zu einem CCM-Modul zusammenbrechen, so ist in einer Ausführungsvariante das CCM-Modul so programmiert, dass über ein Signal auf dem Leuchten-Bus (bzw. den Endstromkreisen) oder aufgrund einer Spannung am Leuchten-Bus (bzw. den Endstromkreisen) die Notlichtleuchten standardmäßig eingeschaltet werden. Ein Notbetrieb der Notlichtbeleuchtungsanlage kann als Standardreaktion bei einem derart gestalteten Programm in einzelne Module einprogrammiert sein.

Als eine Variante eines Standard-Prozessorboards (z. B. "BBC") ist vorzugsweise ein LINUX-Board vorgesehen, auf dem eine Datenbankverwaltung laufen kann. Auf einem solchen LINUX-Board kann zudem ein Webserver laufen (siehe z. B. das EP-Patent EP 2 081 415 B1 der Patentinhaberin RP-Technik e. K.). Außerdem kann ein weiteres Modul über einen geeigneten Bus an das LINUX-Board angeschlossen werden, z. B. ein Touchscreen.

Die kompakteste Ausführungsvariante der vorliegenden Erfindung ist bevorzugt so gestaltet, dass mehrere CCM-Module (Notlichtleuchtenmodul bzw. Stromkreismodul-Einheiten), insbesondere wenigstens zwei bis fünf Notlichtleuchtenmodul- bzw. Stromkreismodul-Einheiten (CCM-Module), zusammengeschlossen und über einen Bus (z. B. einen "Core-Bus") miteinander verbunden sind. Bevorzugt ist eine Anlage (in einer besonders einfachen Ausführungsvariante) mit vier Leuchtenstromkreisen realisiert.

Wie gesagt, gehören zu den Kernfunktionen einer Notlichtbeleuchtungsanlage eine Sammlung von verschiedenen Funktionen. Funktionen, die eine Notlichtbeleuchtungsanlage erfüllen sollte, sind eine Strom- und eine Spannungsversorgung. Auch sollte eine Notlichtbeleuchtungsanlage ihre Notlichtleuchten schalten können (z. B. aufgrund einer dynamischen Fluchtwegsführung). Weitere Anforderungen, die gelegentlich an eine Notlichtbeleuchtungsanlage gerichtet werden sind die Detektion von Gefahrensituationen, eine Überwachung des Zustands von Batterien, eine Überwachung der Netzversorgung, eine Überwachung eines kritischen Kreises und ähnliches.

Aufgrund der höheren Flexibilität und der Konzentration der einzelnen Module auf ihre Kernfunktionen (Assoziationsgrundlage für den Begriff "Core"), ist es möglich, viele Module weiter zu betreiben, obwohl die Normenwelt immer wieder neue Anforderungen stellt und vermutlich auch zukünftig stellen wird. Auch kann leicht eine geänderte Software auf jedes einzelne Modul, je nach Wahl bzw. nach Belieben bzw. nach Notwendigkeit, "nachgeschickt" werden. Eine entsprechende Notlichtbeleuchtungsanlage hat somit eine mehrfache Updatefähigkeit:

1. Es gibt eine erste Art der Updatefähigkeit, weil einzelne Module ergänzt werden können und so eine auf geänderte räumliche Anforderungen bzw. auf eine geänderte Gebäudenutzung (z. B.: der eine Betrieb bzw. das eine Unternehmen in einem Gebäude wächst, ein anderer Betrieb, eine andere Abteilung oder ein anderes Unternehmen in dem gleichen Gebäude gibt Mietfläche auf) ausgerichtete Notlichtbeleuchtungsanlage nach und nach adaptiert werden kann.

2. Es ist eine zweite Art der Updatefähigkeit für den Fall vorgesehen, dass andere Normen erfüllt werden sollen. In diesem Fall wird einfach ein weiteres Core-Modul an dem Bus ergänzt.

3. Bei einer weiteren Art der Updatefähigkeit, nämlich falls weitere Anforderungen an Notlichtbeleuchtungsanlagen gerichtet werden, kann ein Softwareupdate für einzelne Module durchgeführt werden.

Wie bereits erläutert, weist eine erfindungsgemäße Notlichtbeleuchtungsanlage eine Familie von Modulen auf, die unterschiedliche Funktionen haben und über einen gemeinsamen Bus miteinander kommunizieren. Module der Notlichtbeleuchtungsanlage sind insbesondere:

- Stromkreis-Modul, auch CCM-Modul genannt,
- Eingangs-Modul, auch CIM-Modul genannt,
- Ausgangs-Modul, auch COM-Modul genannt,
- Netzteil-Modul, auch CEV-Modul genannt,
- Leuchten-Modul, auch als LM genannt,
- Leuchtenmanagement-Modul, auch CMM-Modul genannt,
- Mainboard-Modul, auch CMB-Modul genannt,
- Modul zur Überwachung eines kritischen Kreises, auch CCC-Modul genannt,
- Bus-Splitter-Modul, auch CBH-Modul genannt,
- Batterie-Modul, auch CES-Modul genannt,
- Netzwächter-Modul, auch CLM-Modul genannt,
- Fernmeldeanzeige-Modul, auch CMA-Modul genannt,
- Meldetableau-Modul, auch CMT-Modul genannt,
- Stromversorgungsmodul, auch CPS-Modul genannt,

- Core IO-Modul, auch CIO genannt.

Mit anderen Worten, eine gängige Notlichtbeleuchtungsanlage kann auf Basis einer ersten Überlegung in einzelne Module aufgeteilt werden, die (nahezu) nach Belieben zu einer Gesamtanlage zusammengestellt werden können. Hierbei können z. B. die durch folgende Zusammenstellung sich ergebenden Unterteilungen als Funktionstrennungen bzw. Schnittstellen zwischen den Modulen in der Gesamtanlagenkonfiguration gewählt werden.

Das Core-Critical-Circuit (CCC-Modul) bzw. das Modul für den kritischen Kreis überwacht eine Ruhestromschleife bzw. einen kritischen Kreis. Verändert dieser seinen Widerstandswert signifikant, so sendet das Modul für den kritischen Kreis ein Event.

Das Core-Circuit-Modul (CCM-Modul) bzw. das Stromkreis(-Management)-Modul steuert in der Notlichtbeleuchtungsanlage mehrere, vorzugsweise vier, physikalisch getrennte Stromkreise. Das CCM-Modul schaltet eventgesteuert die Stromversorgung der Stromkreise ein und aus. Es liefert sowohl Messwerte der Stromkreise als auch Messwerte der angeschlossenen Leuchten.

Die Stromkreise, die an einem CCM-Modul angeschlossen sind, funktionieren jeweils eigenständig. Der Ausfall eines Stromkreises hat keine Auswirkungen auf andere Stromkreise. Die Stromkreise versorgen und steuern die angeschlossenen Leuchten, insbesondere die angeschlossenen Notlichtleuchten, und lesen Messwerte der Leuchten aus. Die Kommunikation mit den Leuchten (zur Steuerung, Diagnose etc.) findet bevorzugt direkt auf der (Energie-)Leitung des Stromkreises statt (Powerline-Kommunikation), wobei ein eigenes Kommunikationsprotokoll verwendet wird. Diese Kommunikation ist unabhängig vom Core-Bus, dem Anlagenbus; sie stellt eine zweite Kommunikation dar.

Bei einer Kommunikationswiederkehr, wenn wieder eine Verbindung zu Leuchten eines Stromkreises gegeben ist, wird der Wert der Variablen in der Leuchte von dem CCM-Modul ausgelesen. Diese Leuchten (bzw. die entsprechend anzusprechende Leuchte) erhalten gemäß den zwischenzeitlich stattgefundenen Events den jetzt gültigen Helligkeitswert. Es gibt einen expliziten Core-Bus-Befehl, der den Wert der Variablen in der Leuchte ausliest, zurücksetzt, eine zehnminütige Nachlaufzeit einhält und einen "Leuchte-dauerhaft-an-Modus" beendet. Die Gesamtzahl der Ausfälle wird dann zentral vom CMM-Modul (für nähere Erläuterungen siehe weiter unten) gespeichert und verarbeitet.

Das Stromkreis-Modul (CCM-Modul) steuert Notlichtleuchten an, d. h. es ist an einen Stromkreis angeschlossen, an dem eine Reihe (z. B. bis 20 oder auch mehr) Notlichtleuchten angeschlossen sind. Die Notlichtbeleuchtungsanlage wird in einer Ausgestaltungsvariante bevorzugt als Niedervoltanlage betrieben. Die Spannung im Stromkreis beträgt z. B. in einem solchen Fall 20 V - 24 V. Die Leuchten kommunizieren mit dem Stromkreis-Modul (CCM-Modul) bidirektional, z. B. über eine Powerline-Kommunikation.

Nach einer bevorzugten Ausführung beinhaltet die Leuchtenansteuerung u. a. eine Helligkeits-/Dimmungssteuerung, die aus zwei Schritten besteht:

1. Jeder Leuchte wird ein Helligkeitswert im Bereich von 0 bis 100 übermittelt. Dazu sind im Stromkreis-Modul sogenannte Helligkeitstabellen oder Szenarien hinterlegt. Jedes Szenario ordnet einer oder mehreren (ggf. allen) Leuchte(n) eine Helligkeit zu. Jedes Szenario kann "aktiv" oder "inaktiv" sein, d. h. es können mehrere Szenarien gleichzeitig aktiv sein. Der Helligkeitswert, der jeder Leuchte mitgeteilt wird, ergibt sich aus dem aktiven Szenario mit der höchsten Priorität. Die Szenarien sind durch den Benutzer einstellbar.

2. In jeder Leuchte ist eine Kennlinie hinterlegt. Diese bestimmt, wie der empfangene Helligkeitswert von 0 bis 100 in physikalische Steuerparameter für das Leuchtmittel zu übertragen ist. Die Leuchtenelektronik rechnet also anhand der Kennlinie für einen gegebenen Helligkeitswert beispielsweise aus, welcher Strom durch das Leuchtmittel fließen soll oder mit welchem PWM-Dutycycle das Leuchtmittel betrieben werden soll etc. Die Kennlinie ist einstellbar und hängt praktisch vom Leuchtentyp und dem eingesetzten Leuchtmittel ab.

Das Stromkreis-Modul (CCM-Modul) ist ein Modul, das zwei Stromkreise mit unterschiedlichen Protokollen verbindet. Der Anlagenbus und der Leuchtenbus werden mithilfe des CCM-Moduls miteinander verbunden. Das Stromkreis-Modul kann auch als Protokoll-Umsetzer-Baustein bezeichnet werden, der ein erstes Protrokoll auf dem Anlagenbus in eine zweites Protokoll auf dem Leuchtenbus (und umgekehrt) umsetzt.

Als eine Kernfunktion für das CCM-Modul kann daher festgehalten werden, das CCM-Modul sollte die Kernfunktion "Schalten von Notlichtleuchten" erfüllen.

Das Eingangs-Modul (CIM-Modul) erkennt eine Spannung an einem analogen Eingang (oder mehreren) und erzeugt ein logisches Signal: z. B. in Abhängigkeit von "Spannung vorhanden" / "Spannung nicht nicht vorhanden".

Das Core-Input-Modul (CIM-Modul) bzw. das, insbesondere digitale, Eingangsmodul überwacht mehrere (allgemein: ein oder mehrere, in der vorliegenden Realisierung vier) Spannungseingänge und interpretiert das Anliegen oder Nichtanliegen einer Gleich- oder Wechselspannung als digitale Information (Spannung ein/aus). Das CIM-Modul kann konfiguriert werden, um bei Zustandsänderung (ein → aus, aus → ein) eines jeden Eingangs ein Event aus einer Gruppe ausgewählter Events zu senden.

Das Ausgangs-Modul (COM-Modul) setzt ein logisches Signal (an/aus) in den Schaltzustand eines oder mehrerer Relaiskontakte um.

Das Core-Output-Modul (COM-Modul) bzw. das, insbesondere digitale, Ausgangsmodul verfügt über mehrere (allgemein: ein oder mehrere, in der vorliegenden Realisierung vier) potenzialfreie Relaiskontakte (Wechsler), die es eventgesteuert schalten kann (Anziehen/Abfallen).

Das Netzteil-Modul bzw. Batterie-Modul (CEV-Modul) lädt einen vorhandenen Energiespeicher. Vorzugsweise erkennt das CEV-Modul ein Anliegen oder einen Ausfall einer Netzversorgung. Außerdem ist es vorteilhaft, wenn das CEV-Modul die Energieversorgung von Netz- auf Batteriebetrieb umschaltet.

Das Core-External-Voltage-(CEV)-Modul bzw. das VAUX-Modul liefert eine schaltbare Spannungsversorgung (Hilfspannung, "auxiliary"), die für den Anschluss externer Module gedacht ist. Diese Hilfsspannung kann durch Events (siehe auch weiter unten) ein- und ausgeschaltet werden.

Als eine Kernfunktion für ein CEV-Modul kann somit festgehalten werden, dass es das Vorhandensein einer Spannungsversorgung an seinen Anschlüssen überwacht und bei Bedarf Energie zur Verfügung stellt.

Das Core-Emergency-Supply (CES-Modul) bzw. das Batterie-Modul besteht aus einer Batterie und einem Ladegerät. Ist eine Netzversorgung in der Notlichtbeleuchtungsanlage vorhanden, wird die Batterie geladen. Ist dies nicht der Fall, versorgt die Batterie die Notlichtbeleuchtungsanlage. Fällt die Batterie unter einen gewissen Ladepegel, so wird ein "Event" ausgesendet, das in der gesamten Notlichtbeleuchtungsanlage (unter anderem) zur Abschaltung ausgewählter oder aller Leuchtenstromkreise und damit von ausgewählten oder von allen Leuchten genutzt wird, um eine Tiefentladung der Batterie zu verhindern.

Als eine Kernfunktion für ein CES-Modul kann somit festgehalten werden, dass es die Funktionstüchtigkeit des Akkumulators bzw. der Batterie sowie des Ladegeräts überwacht und den Energiefluss zu und von dem Akkumulator (bzw. Batterie) steuert.

Das Core-Mainboard bzw. Mainboard-Modul (CMB-Modul) ist ein spezielles Modul, welches Informationen über die Hardware bereitstellt. Es zeichnet Messwerte (z. B. Temperaturen, Spannungen, Reaktionen einer Lichtschranke) auf dem Mainboard auf. In diesem Modul ist außerdem ein Speicher integriert, der zur Ablage einer Update-Datei für eine Leuchtensoftware der Leuchten, insbesondere der Notlichtleuchten, genutzt wird.

Das Core-Management-Modul (CMM-Modul) dient zur Steuerung, Programmierung und Konfiguration aller am Core-Bus befindlichen Module. Es verarbeitet Daten einer übergeordneten Steuerung (z. B. eines WEB-UI) und gibt diese an die Module weiter. Des weiteren werden Statusinformation der Module gesammelt und der übergeordneten Steuerung zur Verfügung gestellt. Hierbei bedeuten

- Steuerung: Veränderung des (z. B. Schalt-)Zustands eines Moduls durch Senden eines Befehls;
- Programmierung: Übertragen einer Firmware über den Core-Bus zu einem bestimmten Modul, woraufhin das Modul diese Firmware übernimmt und sich damit aktualisiert;
- Konfiguration: Übertragung von Parametereinstellungen und anderen Informationen an ein Modul. Dies beinhaltet Vorgaben, auf welche Events ein Modul wie reagieren soll und welche Events es unter welchen Bedingungen senden soll.

Generell kann das Modul "CMM" (CMM-Modul) deutlich intelligenter als die übrigen Module ausgelegt sein, d. h., ein CMM-Modul erkennt mehr Fehlerfälle und kann umfassender "Events" verarbeiten.

Mit anderen Worten, eine Notlichtbeleuchtungsanlage besitzt bevorzugt ein Leuchtenmanagement-Modul, das auch als "CORE Monitoring Module" (abgekürzt auch als "CMM") bezeichnet wird. Dieses Leuchtenmanagement-Modul kommt insbesondere nur einmal in einer Notlichtbeleuchtungsanlage/Station vor. Das Leuchtenmanagement-Modul hat zwei zentrale Aufgaben (Teil seiner zu erfüllenden Kernfunktionen): 1. Überwachung des Systems, z. B. die Anwesenheit aller Bus-Teilnehmer und 2. Durchführung und Protokollierung der automatischen Prüfung nach Norm.

Da dieses Modul in jedem System dem Grunde nach genau einmal vorhanden sein braucht, können weitere immer in einer Notlichtbeleuchtungsanlage integrierte Komponenten enthalten sein. Beispiele hierfür sind: Webserver, Logfile, Cloud-Anbindung, normrelevante Anzeigen, Anlagenabbild.

Die zentrale Überwachungseinheit hat z. B. folgende Aufgaben:

- Fehler auslösen, wenn eine Anlagenkomponente ausfällt.
- Automatische und manuelle Funktionsprüfung durchführen.
- Automatische und manuelle Dauerprüfung durchführen.
- Prüfbuch führen.
- Sicherung der Anlagenkonfiguration durchführen.
- Datenaustausch mit der Cloud.
- Anlagenkonfiguration für alle Komponenten bereitstellen.
- Notlichtbeleuchtungsanlage durch Webzugriff konfigurieren und steuern.

Nachfolgend Anforderungen an das CMM ("CORE Monitoring Module"):

- Überwachung von Anlagenkomponenten am Bus, Fehlerauslösung bei ausbleibender Kommunikation.
- Funktionsprüfung steuern. Ausgelöst durch internen Timer oder durch Bedieneinheit (auch externe Bedieneinheit).
- Dauerprüfung steuern. Ausgelöst durch internen Timer oder durch Bedieneinheit (auch externe Bedieneinheit).
- Prüfbuch nach Norm führen.
- Automatisch ein Abbild aller Einstellungen von allen Anlagenkomponenten erstellen.
- Gateway für die Cloudanbindung.
- Vernetzung von Anlagen oder abgesetzten Anlagenbausteinen über Ethernet.
- Bedienoberfläche über Webserver zur Verfügung stellen.
- Bedienoberfläche über Touch-Display zur Verfügung stellen.
- Zeitsynchronisation über Internet.

Nachfolgend wird eine Beschreibung für ein Modul zur zentralen Einspeisung vorgestellt, das auch als "CORE Power Switch" (abgekürzt auch als "CPS") bezeichnet wird. Es gibt eine zentrale Einspeisekomponente für eine Notlichtbeleuchtungsanlage, die eine SIBE-Spannung zur Verfügung stellt. Mit der SIBE-Spannung werden die Leuchten versorgt. Die Einspeisekomponente kann zwischen zwei oder mehr Quellen umschalten. Die Einspeisung soll eine einheitliche Schnittstelle für verschiedene Versorgungsquellen (z. B. Batterie, Netz, Brennstoffzelle, Generator) zur Verfügung stellen. Die Art der Versorgungsspannung (z.B. AC/DC) stellt keine Information für die Anlagenkomponenten da, sie kann beliebig sein. Der Effektivwert der Spannung soll bei ca. 216/230V liegen und weitestgehend zu Leuchten aus der Allgemeinbeleuchtung kompatibel sein. Es können auch mehrere Netzspannungen zur Umschaltung verwendet werden. So kann bei einem Ausfall von L1 auf L2 umgeschaltet werden und bei einem Ausfall von L1 und L2 auf eine Batterieversorgung. Die SIBE-Spannung wird von einem oder mehreren Netzteilen in einer Notlichtbeleuchtungsanlage auf eine Kleinspannung (z. B. 24 V) heruntertransformiert. Mit dieser Kleinspannung werden die Logikkomponenten in allen Anlagenkomponenten versorgt. Jede Anlagenkomponente muss für den Umschaltvorgang beim Wechsel der SIBE-Quelle eine für den eigenen Betrieb ausreichende Energiereserve speichern.

Falls eine Abrechnung der Stromkosten für bestimmte Teilabschnitte der Notbeleuchtungsanlage gewünscht wird, so können mehrere Energienetze mit jeweils einem Einspeise-Modul versehen werden. Die gemeinsame Notversorgungsspannung wird an jedes Einspeise-Modul geführt. Die Teilnetze sind mit dem Anlagen-Bus untereinander verbunden. Alternativ kann ein Energiezähler in die Stromkreisbaugruppen integriert werden.

Fälle für das CPS-Modul:

- Eine Netzeinspeisung und eine Batterieeinspeisung.
- Eine Netzeinspeisung, eine Notstromgeneratoreinspeisung.
- Unterstation mit eigener Netzeinspeisung und Mieterstromzähler, bei Ausfall der lokalen Versorgung Umschaltung auf Zuleitung der Hauptstation. Die Hauptstation kann die Unterstation mit Netz oder Batterie über eine Zuleitung versorgen.
- Keine Netzspannung, nur 24V-Versorgung für kleine Anlagen.

Anforderungen an das CPS-Modul:

- Umschaltung zwischen zwei Quellen. Eine dreiphasige (Netz) und eine einphasige (Batterie) Quelle.
- Netzwächter nach Norm für jede Netzphase, einzeln aktivierbar/deaktivierbar.

Das Core-Power-Supply-Modul (CPS-Modul) bzw. das Stromversorgungs-Modul schaltet die Energieversorgung der Notlichtbeleuchtungsanlage von einer Netzversorgung auf eine Batterieversorgung um und sendet ein Event aus, falls es einen Ausfall der Netzversorgung oder deren Wiederkehr detektiert. Hierfür beinhaltet es einen Netzwächter zur Überwachung wenigstens einer Phase der Netzversorgung (idealerweise aller drei Phasen der Netzversorgung). Weiterhin steuert es einen Lüfter und liest Werte der Netzfrequenz, des Stroms und der Spannung aus dem Netzteil aus.

Als eine Kernfunktion für ein CPS-Modul kann somit festgehalten werden, dass es die Energieversorgung der Notlichtbeleuchtungsanlage von einer Netzversorgung auf eine Batterieversorgung umschaltet.

Das Leuchten-Modul (auch LM-Modul genannt) ist ein Modul, das an einem Leuchtenbus zum Einsatz kommt, wenn Leuchten an dem Leuchtenbus bzw. an dem Endstromkreis vorhanden sein sollen bzw. eingebaut sein sollen, die ohne eigene Berechnungseinheiten wie Mikrocontrollereinheiten ausgestattet sind. Solche einfachen Leuchten können Befehle auf den Leuchtenbus nicht erkennen. Damit Leuchten, die am Leuchtenbus angeschlossen sind, auf Befehle reagieren können, kann solchen Leuchten ein LM-Modul vorgeschaltet werden. Das LM-Modul ist sozusagen das Gegenstück zu einem CCM-Modul am Leuchtenbus. Das LM-Modul kann auch in einer Leuchte integriert sein, z. B. in einem Gehäuse der Leuchte eingebaut sein.

Daneben kann es noch eine ganze Reihe externer Module geben.

Ein Core-Bus-Hub-Modul (CBH) bzw. ein Bus-Splitter-Modul hat einen Core-Bus-Eingang und zwei Ausgänge (einer davon galvanisch getrennt), um zusätzliche Module anschließen zu können. Für einen Aufbau komplexerer, verzweigter Bus-Topologien wird ein CBH-Modul in dem Bus eingesetzt.

Der Core-Line-Monitor (CLM) bzw. das Modul für den Netzwächter dient zur Überwachung der Phasen der Netzversorgung. Das Modul sendet "Events" bei Detektion eines oder mehrerer Phasenausfälle sowie bei deren Wiederkehr.

Der Core Message Advisor (CMA-Modul) bzw. das Fernmeldeanzeige-Modul erfüllt die in Normen geforderte externe Fernmeldeanzeige zur optischen und akustischen Anzeige des Anlagenzustandes. Das CMA-Modul verarbeitet diesbezügliche Events, indem es seine Zustandsanzeige immer wieder aktualisiert. Außerdem gibt es einen Taster in oder an dem CMA-Modul zur (vorübergehenden) Deaktivierung von akustischen Meldungen.

Das Modul Core-Message-Tablet (CMT-Modul) bzw. das Meldetableau-Modul ist ein externes Bedientableau zur Überwachung und Fernsteuerung der Notlichtbeleuchtungsanlage und ist eine erweiterte Form des vorstehenden CMA-Moduls. Es besitzt einen oder mehrere Taster oder andere Bedienelemente, mit dem konfigurierbare Funktionen ausgelöst werden können (z. B. Testauslösung oder Notlichtfunktion aktivieren bzw. Notlichtfunktion deaktivieren).

Ein Modul, bezeichnet als "CORE Emergency Supply" (CED) bzw. als "Lader", wird nachfolgend vorgestellt. Die Notstromquelle fügt sich so in das System ein, dass sie einen beliebigen Energiespeicher beinhalten kann. Es werden für eine Energiequelle allgemeingültige Informationen und Steuerungsschnittstellen geschaffen und solche, die spezifisch für einen Energiespeicher einer bestimmten Art benötigt werden.

Nachfolgend wird zunächst nur eine Batterie als Energiespeicher betrachtet. Folgende Anwendungsfälle können auftreten:

- Batterie laden.
- Batterie entladen, die Ladung wird dabei abgeschaltet.
- Normrelevante Angaben zur Batterie anzeigen (z. B. Spannung, Strom, Temperatur)
- Zustand überwachen.

An das System werden folgende Anforderungen gestellt:

- Bleibatterie laden, wenn Netz vorhanden.
- Gesamtbatteriespannung messen.
- Batteriesymmetrie an Mittelabgriff gegen B+ und B- messen.
- Lade-/Entladestrom messen.
- Batterietemperatur messen (externer Fühler im Batterieschrank).
- Kapazitätsanzeige
- Energiesparmodus bei niedrigem Kapazitätsstand durch Senden eines Telegramms einleiten (Tiefentladung vermeiden).
- Abtrennen der Batterie von den Verbrauchern bei Tiefentladung.

Nachfolgend wird ein Modul "CORE 10" (auch abgekürzt: "CIO") vorgestellt.

Es können beliebig viele Module mit Schalteingängen und Ausgängen angebunden werden. Diese Module können auch Zeitschaltuhren oder Treppenhausautomaten enthalten. Zeitsteuerungen können wie normale Eingänge behandelt werden. Ein Schalteingang kennt nur die Art und Zustand seines Eingangs. Die Art des Eingangs ist für ein entsprechendes Telegramm (Netzwächter haben hohe Priorität) und die Triggerschwelle(n) notwendig. Es sind auch analoge Ein- und Ausgänge in einer Ausführung vorgesehen. Über analoge Eingänge kann z. B. ein Dimmer angeschlossen werden. Auch hier wird nur ein Analogwert übertragen, die Funktion wird in den Stromkreis-Modulen programmiert. Die Schalteingänge übertragen nur die Information welche Schaltstellung ein Schalter hat, die Auswertung und Aktion übernehmen die Empfänger. Ausgänge können auf bestimmte Telegramme und dessen Daten getriggert werden. Schalteingänge / Netzwächter können auch in anderen Modulen integriert sein. Es werden also die Telegramme für Schalterstellungen und Netzwächter entsprechend flexibel gestaltet.

Anwendungsfälle für CIO ("CORE IO"):

- Leuchte(n) über Eingänge ein-/ausschalten.
- Anzeige (Ausgang): Sammelstörung; betriebsbereit; Notlicht blockiert; Tiefentladung; Lüfterbetrieb; Betriebszustand Netz oder Batterie.
- Schalten von (Eingänge): Betriebsart Ladebetrieb oder betriebsbereit; Lüfter ein; Funktionstest durchführen; Putzlicht; Not-Aus für Feuerwehr; Notbetrieb.
- Eingang als Netzwächter mit Schaltschwellen nach Norm.

- Schalten mit 24V externer Spannung.
- Schalten mit 230V externer Spannung.
- Schalter ohne externe Versorgung anschließen.
- Treppenhauslicht: Ein Timer, der Leuchten für eine einstellbare Zeit einschaltet, ausgelöst durch ein externes Signal wie Taster oder Bewegungsmelder.

Wie zuvor schon gesagt, gibt es zwischen den Modulen einen Bus, der markant auch als Core-Bus bezeichnet werden kann. Er stellt eine informationstechnische Verbindung zwischen den Modulen her, über welche Statusinformationen, Befehle und Events übertragen werden können. Jedes Modul ist in der Lage, diese Informationen, Daten bzw. Events zu empfangen, zu verarbeiten, zu senden und weiterzugeben.

Somit kann eine Einheit der Notlichtbeleuchtungsanlage, das eine bestimmte Aufgabe erfüllt und über eine oder mehrere Core-Bus-Schnittstellen verfügt, als Modul bezeichnet werden. Über die Schnittstelle kommuniziert das Modul auf dem Core-Bus. Hierbei kann via dem Bus über eine eindeutige Adresse (z. B. 16 Bit lang, z. B. 32 Bit oder z. B. 64 Bit lang) ein einzelnes Modul identifiziert und angesprochen werden. Ein Modul kann dazu konfiguriert werden, beim Eintreten bestimmter, von der Modulfunktion abhängiger Ereignisse ein Event oder mehrere Events zu senden. Beim Empfang eines einzelnen Events, für das das Modul ausgelegt ist, reagiert das Modul in einer ganz bestimmten, durch eine Modulfunktion beeinflusste, Form.

Die Bus-Struktur ist in Serie geschaltet, besteht jedoch aus sog. Peer-to-Peer-Elementen, d. h., es besteht immer nur eine Verbindung von einem Modul zum nächsten Modul. Die Module hängen nicht alle an einem gemeinsamen "Stück Draht". Jedes Modul hat folglich zumindest zwei Bus-Anschlüsse. Eine Meldung auf dem Bus gelangt über die Bus-Verbindung zum Eingangskanal des 1. Bus-Anschlusses eines Moduls; dort gelangt es in einen Puffer und von da über den Ausgangskanal des 2. Bus-Anschlusses nach draußen, d. h. zu einem weiteren Modul. Es entsteht damit bei jedem Modul eine Latenz. Sternförmige Bus-Strukturen und Verzweigungen erfordern eigene Module mit drei oder mehr Bus-Anschlüssen, die als zusätzliche Module in eine Notlichtbeleuchtungsanlage eingebaut werden können.

Auf dem Bus wird mit Datenpaketen kommuniziert. Diese können sein:

* Prozessdaten: Von einzelnen Modulen z. B. in Intervallen gesendete Mess- und Zustandsdaten
* Befehle, ggf. mit Parametern
* Rückantworten auf Befehle
* Ereignisse: Module, die bestimmte Dinge detektieren, wie z. B. das Netzteil einen Netzausfall, informieren darüber systemweit durch das Senden von Ereignissen
* Netzwiederkehr
* Betriebsartumschaltung auf Ladebetrieb
* Betriebsbereit
* Zustandswechsel an einem Eingang
* kritischer Kreis getrennt
* Events

Die erfindungsgemäße Notlichtbeleuchtungsanlage ist modular aufgebaut. Dadurch wird ein hohes Maß an Flexibilität erreicht. Ein bemerkenswerter Aspekt ist das Konzept einer "verteilten Anlage". Das bedeutet, dass einzelne Module eine ausreichende Intelligenz haben, um ihre Aufgabe autark auszuführen und nicht auf andere Komponenten bzw. Module angewiesen zu sein. Auf eine zentrale Einheit zur Steuerung wird vorzugsweise verzichtet. Es reicht ein CMM-Modul. Die einzelnen Komponenten integrieren sich weitgehend eigenständig in die Notlichtbeleuchtungsanlage und erzeugen einen möglichst geringen Konfigurationsaufwand. Daher hat jedes Modul einen sehr eingeschränkten Funktionsumfang und ein eingeschränktes Aufgabengebiet.

Dank der einzelnen Module, aus denen eine Notlichtbeleuchtungsanlage zusammengesetzt werden kann, kann ein dezentrales Notlichtbeleuchtungssystem aufgebaut werden. In diesem reagiert jedes Modul selbständig, autark und führt die Aktionen durch, die für das Modul vorgesehen sind. Es kann auf eine zentrale Steuerung - im Endeffekt - verzichtet werden.

Ein weiterer Schwerpunkt besteht in der Vernetzung von Notlichtbeleuchtungsanlagen oder das Auslagern von Komponenten in einen anderen Raum eines Gebäudes (Beispiel: Unterverteiler, Bedienterminal). Dazu findet die gesamte Kommunikation der Anlagenkomponenten in einer möglichst flachen Hierarchie über verschiedene Kommunikationswege (z.B. Powerline, Ethernet) statt. Es ist auch eine Vernetzung mit anderenNotlichtbeleuchtungsanlagen wie der "WirelessControl" und verschiedenen Haus-Bussen (DALI, BACNet) möglich.

Die erfindungsgemäße Notlichtbeleuchtungsanlage, hier auch CORE-System genannt, erhält in einer bevorzugten Ausführung eine Cloud-Anbindung. In der Cloud sind beispielsweise Kopien von Konfigurationen und Log-Daten/Events gespeichert und es kann auch der Anlagenstatus in Echtzeit angezeigt und modifiziert werden.

Zur Bedienung können verschiedene Ein-/Ausgabegeräte dienen. Eine Minimalanzeige mit normrelevanten Informationen an der Notlichtbeleuchtungsanlage ist erforderlich. Die Konfiguration und weitere Informationen werden beispielsweise über eine Weboberfläche im Responsive Web Design zur Verfügung gestellt. Hierzu sind Einbaudisplays für die Notlichtbeleuchtungsanlage/Bedienterminal vorgesehen oder die Bedienung erfolgt über einen Webserver. Der Webserver könnte z. B. auch über eine Smartphone App erreichbar gemacht werden (Verbindung über Ad-Hoc WLAN oder Bluetooth). Das CORE-System und die "WirelessControl" erhalten eine angeglichene Oberfläche und Bedienung.

Zum mechanischen Aufbau der Baugruppen ist ein Anlagenschaltschrank vorgesehen, in welchem die Anlagenkomponenten auf eine Hutschiene oder Backplane montiert werden können. Der Träger verfügt über Leitungen für die Netzspannung (L/N), über eine Kleinspannung zur Versorgung der Module und über Kommunikationsleitungen verfügen, die beim Aufstecken einer Baugruppe kontaktiert werden.

Als Daten-Bus ist vorzugsweise ein Multimaster-Bus mit priorisierten Telegrammen verwendet. Dadurch wird eine schnelle Reaktionszeit erreicht. Der Daten-Bus dient sowohl intern in einer Notlichtbeleuchtungsanlage, als auch zur Anbindung von weiteren Notlichtbeleuchtungsanlagen oder Unterverteilern. Der Bus kann auch über eine Netz-/Batterieleitung übertragen werden, um eine Einleitertechnologie bei der Verwendung von Unterverteilern zu realisieren. Für eine Anlagenvernetzung ist der Bus auch über Ethernet übertragbar.

Jeder Baustein hat eine fest eingestellte Adresse, dabei muss ein Kompromiss zwischen Adresslänge und der Wahrscheinlichkeit eines Adresskonflikts gefunden werden.

Die physikalische Ebene entspricht dem klassischen CAN-Bus. Es wird der gleiche Bus intern und zur Vernetzung verwendet. Wird der Bus aus einer Notlichtbeleuchtungsanlage herausgeführt, wird dieser galvanisch getrennt und auf Funktionalität überwacht. Bei einem dauerhaften Fehler des Bus (z. B. Kurzschluss) wird der Bus abgetrennt, um die Funktionalität der einzelnen Notlichtbeleuchtungsanlagen sicherzustellen.

Die Übertragung über Powerline (Einleitertechnik) kann mit einer geringen Geschwindigkeit sehr einfach realisiert werden. Ein dominantes Bit wird mit 100% Amplitude der Trägerfrequenz moduliert, ein rezessives Bit mit 0%. Zu beachten ist dabei die Verzögerungszeit zwischen gesendetem Bit und Auswerten der Trägerfrequenz. Diese Verzögerung muss kleiner sein als der Abtastzeitpunkt, damit ein überschriebenes Bit erkannt wird. Bei diesem Verfahren ist die Echtzeitfähigkeit weiterhin gegeben. Die Übertragung ist bei Wechselspannung (AC) und Gleichspannung (DC) gleichermaßen anwendbar.

Die Übertragung über Ethernet wird insbesondere wie folgt realisiert:

1. EtherCAT (echtzeitfähig)
2. Ein eigenes Protokoll durch UDP-Pakete (echtzeitfähig)
3. TCP/IP (nicht echtzeitfähig, Verschlüsselung möglich)

Bei Anbindung an ein Netzwerk ist eine Absicherung (Verschlüsselung) der Daten vorzusehen, um eine Manipulation der Notlichtbeleuchtungsanlage zu verhindern.

Das Arbitrierungsfeld (CAN-ID) wird in zwei Teile aufgeteilt. Der erste Teil ist der Telegrammtyp, der zweite Teil die Adresse des Senders. Somit ist das Arbitrierungsfeld eines Telegramms einmalig.

Es wird zwischen zwei Telegrammtypen unterschieden:

1. Broadcast wie oben beschrieben. (Standardtelegrammtyp)
2. Adressiertes Telegramm, wobei die Empfängeradresse in das Datenfeld geschrieben wird.

Typ 2 sollte nur zur Konfiguration von Komponenten oder spezielle Statusabfragen verwendet werden, die nicht zyklisch stattfinden. Eine Abfrage besteht aus zwei Telegrammen, ein Telegramm zur Anfrage und ein Telegramm als Antwort.

Typ 1 sollten nur "Prozessdaten" enthalten und zyklisch wiederholt werden. Die Zykluszeit richtet sich nach der jeweiligen Anforderung der Daten. So ist ein Telegramm, das einen Notbetrieb meldet, in kürzeren Zeitabständen zu senden als ein Telegramm, das den Notbetrieb beendet. Um die Reaktionsgeschwindigkeit zu erhöhen kann ein Telegramm sofort bei Änderung eines Prozessparameters (z. B. Schalterstellung wurde geändert) gesendet werden.

Beispiele für Prozessdaten: Schalterstellungen, Leuchten an/aus, Batteriespannung, Momentanleistung.

Jede Komponente sendet zyklisch seine Prozessdaten. Anhand der Prozessdaten kann das Überwachungsmodul Bausteine detektieren und einen Ausfall einer Komponente beim Ausbleiben der Statusinformation feststellen.

Ein Beispiel, wie eine Eventsteuerung funktioniert, sei nachfolgend zusammengestellt:

• Ein Stromkreis-Modul (CCM-Modul) schaltet bei Empfang eines bestimmten Events eine zuvor festgelegte Gruppe von Leuchten ein.
• Das Modul mit einer Notstromquelle (Stromversorgungs-Modul bzw. CES-Modul) sendet ein Event bei Erkennung eines Netzausfalls.
• Eine Konfiguration bzw. Einstellung dieser beiden Module, CCM-Modul und CES-Modul, kann z. B. beinhalten, dass das Stromkreis-Modul die festgelegte Gruppe Leuchten genau bei Empfang desjenigen Events einschaltet, welches das Stromversorgungsmodul (CES-Modul) bei Erkennen eines Netzausfalls sendet.

Generell kann gesagt werden, dass zu einem beliebigen Ereignis in der Notlichtbeleuchtungsanlage (z. B. ein Netzausfall, eine Netzwiederkehr, eine Zustandsänderung eines digitalen Einganges oder ein Schaltbefehl) eine korrespondierende, auf dem Anlagenbus ("Core-Bus") in Form eines Datenpakets gesendete Information übertragen wird. Ein Event zeichnet sich durch eine eindeutige Kennung aus, die im Zuge der Konfiguration des Gesamtsystems festgelegt wird. Auf diese Weise ist es beispielsweise möglich, dass systemweit alle Module auf ein einziges Event reagieren können Auch ist es ist möglich, jedes Modul und jede seiner Funktionen durch individuelle Events einzeln anzusprechen.

Eine Notlichtbeleuchtungsanlage, die sich aus den zuvor beschriebenen Modulen zusammensetzt, wobei natürlich nicht alle Module Teil der Notlichtbeleuchtungsanlage sein müssen, kann bei besonderen Situationen in einen sicheren Zustand gelangen. Zustände, die als sicher angesehen werden können, können wie folgt beschrieben werden.

Den Informationen "Zeit" und auch einzelnen sicherheitskritischen Informationen wird ein Telegramm mit hoher Priorität zugeordnet. Ein Beispiel für Informationen, die mit einer hohen Priorität zu übertragen ist, sind Benachrichtigungen bzw. Informationen, dass es ausgelöste Netzwächter gibt.

Für den Kommunikationsbus "CORE-Bus" wird jeweils ein Differenzsignal für die Sende- und für die Empfangsleitung verwendet (z. B. gem. dem Protokoll "RS422"). Es wird bevorzugt ein Standard-Ethernetkabel mit RJ45-Steckern verwendet. Es sind in einer bevorzugten Ausführung ausschließlich Ende-zu-Ende-Verbindungen erlaubt. Somit können keine Kollisionen entstehen. Bei Ende-zu-Ende-Anschlüssen, die üblicherweise die Eingangs- und Ausgangskanäle an den Modulen darstellen, kann eine Sterntopologie nur mit einem Hub erreicht werden, der 3 Teilnehmer miteinander verbindet und einen Speicher für Datenpakete aufweist.

Vorteilhafterweise werden immer (nur) Datenpakete gesendet (keine anderen Signale oder Datenformate). In einer bevorzugten Ausführung hat ein Paket folgende Felder:

- Type (Broadcast, Unicast, usw.)
- Size
- Sender address
- Receiver address (nur bei Type Unicast)
- Daten

Die Leuchten sollen möglichst flexibel ansteuerbar sein. Dazu ist es notwendig, die einzelne Leuchte möglichst detailliert über den Anlagen-Bus anzusteuern. Die Steuerungsmöglichkeiten üblicher bzw. gemeinhin verbreiteter Haus-Busse kann zusätzlich gegeben sein. So besteht die Möglichkeit, die Notlichtbeleuchtungsanlage sehr flexibel und vollständig in einen Haus-Bus zu integrieren und so die Hoheit über die Leuchten und eingesetzten Vorschaltgeräte zu behalten, bzw. mit einer kleinen Anzahl von Vorschaltgeräten aus dem Allgemeinlicht zu arbeiten. Hierbei spielt auch die dynamische Fluchtwegführung eine wichtige Rolle. Denkbar ist auch eine Integrierung von Schalteingängen in einer Leuchte, dessen Zustände an die gesamte Notlichtbeleuchtungsanlage übertragen werden.

Die Daten in einer üblichen bzw. gängigen Leuchte sollten sich auf ein Minimum beschränken.

Jede Leuchtenelektronik bekommt eine Seriennummer. Diese Seriennummer wird vorzugsweise bei einer Fertigungsendkontrolle automatisch in einem Cloud-Speicher gespeichert. Anhand einer Auftragsnummer ist der Leuchtentyp bekannt. Der Leuchtentyp wird in dem Cloud-Speicher der Elektronik zugeordnet. Für einen Elektroniktyp sind weitere Informationen in der Cloud hinterlegt. Eine erfindungsgemäße Anlage kann anhand der Elektronikseriennummer weitere Informationen zu der Leuchte aus der Cloud abfragen. Zu den Informationen gehören:

- Art der Leuchte RZ/NL,
- Anschlussleistung,
- Erkennungsweite.

Ersatzelektroniken werden in die Cloud-Datenbank ebenfalls gespeichert, aber keinem Leuchtentyp zugeordnet. Die Zuordnung zu einem Leuchtentyp kann ein Kunde nach Tausch einer Elektronik selbst vornehmen. Der entsprechende Kunde trägt die Zuordnung dabei in die Cloud ein.

Alle Daten wie Typ, Art der Leuchte, Anschlussleistung werden in der Leuchtenelektronik gespeichert. Bei einem Tausch der Elektronik können die Daten über eine Bedienerschnittstelle der Notlichtbeleuchtungsanlage oder mit einem Serviceprogrammer über eine Schnittstelle an der Leuchte einprogrammiert bzw. von einer anderen Elektronik kopiert werden.

Eine Datenübertragung zwischen Stromkreis-Modul und Leuchten soll eine Übertragung von Informationen zu einzelnen Leuchten ermöglichen. Zu den Leuchten zu übertragende Daten sind z. B.: "An/Aus", "Dimmung", "Notbetrieb". Der Notbetrieb kann kreisweit aktiviert werden, um die Einschaltzeit zu verkürzen. Die Leuchte kann Informationen zum Leuchtmittelzustand und ihren Typ übertragen. Stromkreis-Modul ist der Bus-Master.

Jede Leuchte hat eine einmalige, vorzugsweise nicht änderbare, Adresse. Die Leuchten sollen von einem Stromkreis-Modul detektiert werden können. Die Adresse wird ähnlich wie bei Notlichtbeleuchtungsanlagen im Funkbetrieb kurz gehalten. Die Adresse ist so kurz, dass sie für einen Menschen einfach zu lesen ist und keinen großen Overhead erzeugt. Die Adresse ist idealerweise aber groß genug, um die Wahrscheinlichkeit für einen Adresskonflikt klein zu halten. Sie kann z. B. aus einer Seriennummer generiert werden. Die Leuchtenadresse wird nur für die Kommunikation zwischen Leuchte und ihrem Stromkreis-Modul verwendet. Sie kann aber auch zur Darstellung in der Benutzeroberfläche verwendet werden.

Die Daten von einem Stromkreis-Modul zu den (an ihm angeschlossenen) Leuchten werden bevorzugt mit einem Powerline-Verfahren übertragen. Die Datenübertragung soll von der SIBE-Spannung unabhängig sein und funktioniert sowohl im AC- als auch im DC-Betrieb.

In einer Ausgestaltung erfolgt eine Datenübertragung von den Leuchten zum Stromkreis-Modul mit Stromimpulsen. Im AC-Betrieb können die Stromimpulse auf die fallende Flanke des Sinus synchronisiert werden, um Störungen zu vermeiden.

Alternativ zu Vorstehendem kann der Rückkanal ebenfalls eine Powerline-Modulation mit einer einzigen Frequenz verwenden. Die Demodulation auf der Stromkreisbaugruppe erfolgt analog durch einen Bandpass und ggf. eine zusätzliche Glättung. Dadurch werden Rechenressourcen gespart. Durch Verwendung einer dritten Frequenz für den Rückkanal ist ein Duplexbetrieb möglich.

Eine Konfiguration des Systems findet bevorzugt dezentral in verschiedenen Baugruppen statt. So können Baugruppen direkt auf Ereignisse reagieren (z. B. Schalteingang von Modul A wird betätigt → (daraus folgt:) Leuchte B wird eingeschaltet).

Die Konfiguration einer Komponente wird in Register unterteilt. Bei der Übertragung wird die Startadresse zum Lesen/Schreiben und die Länge der Daten angegeben, anschließend folgen die Daten. So können Konfigurationen beliebiger Länge (aufgeteilt in mehrere Telegramme) oder selektive Änderungen übertragen werden. Da jedes Modul eine lokale Konfiguration besitzt, ist diese beim Tausch einer Komponente verloren. Daher ist ein Backup der Komponenten erforderlich. Bei jeder Konfigurationsänderung wird deshalb bevorzugt ein Backup auf dem Anlagenüberwachungsmodul abgelegt. Das Überwachungsmodul, z. B. das CMM-Modul, ruft zyklisch von allen Modulen die Konfiguration ab und speichert diese. Dadurch werden Inkonsistenzen vermieden und es wird automatisch ein Initialbackup erstellt. Möchte der Benutzer ein Backup der Daten und der Programme und ihrer Teile der gesamten Notlichtbeleuchtungsanlage durchführen, werden zuerst die Backups von allen Modulen aktualisiert und anschließend zum Download für den Benutzer zur Verfügung gestellt. Beim Tausch eines Moduls werden die Anwesenheit eines neuen Moduls und das Fehlen eines registrierten Moduls festgestellt. Der Benutzer kann anhand von zwei Listen (fehlende Module, neue Module) dem neuen Modul die Konfiguration des ausgetauschten Moduls zuweisen. Die Backups sind ausschließlich als solche zu verwenden. Zur Anzeige von Konfigurationen müssen die Daten aus den jeweiligen Modulen gelesen werden. Das gesamte Backup aller Komponenten kann periodisch oder über eine Aktion eines Benutzers in die Cloud übertragen werden. Somit können automatische und manuelle Backups der gesamten Notlichtbeleuchtungsanlage erfolgen, die zum Wiederherstellen der gesamten Anlagenkonfiguration genutzt werden können.

Eine Anlagenvernetzung soll durch die Verbindung von zwei Notlichtbeleuchtungsanlagen-Bussen stattfinden. Es sollen verschiedene Datenübertragungsverfahren zum Transport des Anlagen-Busses zwischen Notlichtbeleuchtungsanlage, Unterverteilern oder abgesetzten Anlagenkomponenten genutzt werden können. Je nach Übertragungsverfahren sind unterschiedliche Datenraten und Echtzeitkommunikation möglich. Bei einer Übertragungsrate, die kleiner als die Datenrate des Anlagenbusses ist, sollte ein Gateway mit Filterfunktion eingesetzt werden, der nur relevante Informationen weiterleitet. Für die in einschlägigen Normen geforderten Umschaltzeiten erfolgt idealerweise eine Echtzeitübertragung zwischen den CAN-Netzen.

Es werden bevorzugt die folgenden Übertragungsverfahren genutzt:

- CAN separate Bus-Leitung, volle Funktionalität,
- Ethernet IT-Infrastruktur wird mitbenutzt, Absicherung erforderlich,
- Powerline-CAN,
- CAN-kompatible Lösung, mit niedriger Übertragungsrate möglich.

Steht kein echtzeitfähiges Ethernet (CAN-over-Ethernet (CAN-over-Ethercat)) zur Verfügung, macht die Verwendung von Ethernet nur Sinn, wenn Anlagen oder Anlagenteilbereiche miteinander verbunden werden sollen, die keine Informationen zu einem oder in einem Notbetrieb über die gemeinsame Schnittstelle kommunizieren müssen. In diesem Fall sind nur Systeme mit eigenen Notstromquellen (Batterien) sinnvoll. Es soll geprüft werden, ob eine Übertragung mit Ethercat (auch über unsichere Netze) sinnvoll ist. Der Vorteil von Ethernet ist die hohe Übertragungsgeschwindigkeit, die es erlaubt alle anfallenden Daten zu übertragen.

Mit der direkten Verbindung von CAN-Netzwerken können zwei Notlichtbeleuchtungsanlagen "verschmolzen" werden. Hier kann von einer verteilten Notlichtbeleuchtungsanlage gesprochen werden. Die Energienetze können vollständig voneinander getrennt sein, trotzdem werden bestimmte Baugruppen, wie z. B. die Anlagenüberwachung, nur einmal benötigt.

Die Powerline-Anbindung ist durch die geringe Datenübertragungsrate bei kleineren Teilnetzen sinnvoll. Wird mit einem Gateway gearbeitet, tritt eine Verzögerung der Telegramme von mehr als einer Telegrammlänge auf, was eine längere Einschaltzeit im Notbetrieb verursacht. Da die Übertragung über die Energieleitung stattfindet, ist die Powerline-Kommunikation nur bei der Vernetzung von Unterverteilern oder ausgelagerten Anlagenkomponenten, die keine eigene (Not-)Stromversorgung haben, sinnvoll. Es ist ein Verfahren anzuwenden, das mit AC- und DC-Netzen arbeitet und Frequenzen von 3 kHz bis 148,5 kHz benutzt (gem. der Norm EN50065-1). Um eine Echtzeitfähigkeit zu erreichen, kann ein "CAN Over PLC", das die Anforderungen des CAN-Protokolls erfüllt, oder eine Übertragung auf verschiedenen Trägerfrequenzen realisiert werden.

Jede Komponente sollte eine eindeutige Seriennummer haben. Die Seriennummer kann zum Informationsaustausch mit der Cloud dienen. Die Software und Hardware einer Komponente sind getrennt zu betrachten. Die Software stellt ein Betriebssystem dar, das möglichst alle Hardwarestände einer Komponente unterstützen soll.

Ein Bedieninterface ist vorzugsweise vorgesehen und gestaltet, dass dieses nicht für die Funktion der Notlichtbeleuchtungsanlage notwendig ist. Es stellt lediglich eine Benutzeroberfläche zur Verfügung. Das Bedieninterface hält keine Daten von anderen Komponenten vor. Die für eine Anzeige nötigen Daten werden bei Bedarf von den jeweiligen Komponenten abgefragt. Es wird bevorzugt eine einheitliche Web-Oberfläche gestaltet, die auf allen Bedieninterfaces inkl. Web-Server verwendet wird. Das Interface soll sich vorzugsweise passiv am Notlichtbeleuchtungsanlagen-Bus verhalten und seine Daten aus den zyklischen Prozessdaten beziehen. Es können mehrere Bedieninterfaces an eine Notlichtbeleuchtungsanlage angeschlossen werden. Die Rechteverwaltung übernimmt das jeweilige Interface. Hier ist ein besonderes Augenmerk auf die Sicherheit gegen Angriffe zu legen.

Nachfolgend wird nur die Bedienoberfläche beschrieben und auf welchen Geräten und unter welchen Bedingungen diese Oberfläche verwendet wird.

- Inbetriebnahme der Notlichtbeleuchtungsanlage.
- Konfigurieren der Notlichtbeleuchtungsanlage.
- Prüfungen durchführen.
- Status ablesen.
- Dokumentation zur Installation und Inbetriebnahme erstellen.
- Betriebszustand der Notlichtbeleuchtungsanlage oder einzelner Komponenten ändern.
- Prüfbuch einsehen.
- Fehleranalyse.
- Bedienung an der Notlichtbeleuchtungsanlage.
- Bedienung durch ein abgesetztes Interface in einem anderen Raum.
- Fehleranalyse, Support und Wartungsvorbereitung durch Fernzugriff über Internet.
- Installation oder Fehleranalyse an einem beliebigen Punkt im Gebäude.

Lasten:

- Konfiguration der Notlichtbeleuchtungsanlage und Komponenten in anwendungsorientierter Ansicht.
- Status und Zustand der Notlichtbeleuchtungsanlage und aller Komponenten anzeigen.
- Alle Informationen zu einer Komponente anzeigen (Version, Seriennummer, usw.).
- Funktions- und Dauerprüfung manuell starten.
- Betriebszustand der Notlichtbeleuchtungsanlage oder einzelner Komponenten ändern (z.B. Ladebetrieb).
- Dokumentationsansicht und Übersicht über Notlichtbeleuchtungsanlage und Gebäude.
- Inbetriebnahme-Assistent mit abschließender Dokumentation.
- Einheitliche Darstellung als Website auf allen Anzeigegeräten (Responsive Webdesign).
- Mögliche Anzeigegeräte: in Notlichtbeleuchtungsanlagenüberwachung integrierter Touchscreen; abgesetztes Gerät mit Touchscreen, angeschlossen über Notlichtbeleuchtungsanlagenbus oder Ethernet; PC mit Webbrowser; Smartphone; Tablett.

Updates können in einer bevorzugten Ausführung aus der Cloud bzw. dem Internet bezogen werden. Hierbei kann eine Kompatibilitätsprüfung aller Komponenten in der Notlichtbeleuchtungsanlage stattfinden und weitere nötige Updates vorgeschlagen werden. Die Abhängigkeiten können auf einem Updateserver hinterlegt werden. Als Vorbild zur Bedienung kann ein Paketmanager von Linux dienen.

Die Komponenten einer Notlichtbeleuchtungsanlage haben bevorzugt durch einheitliche Schnittstellen eine möglichst hohe Kompatibilität zueinander. Neue Funktionen sollen von Komponenten, die diese nicht beherrschen, ignoriert werden. Es kann z.B. ein neuer Telegramm-Identifier verwendet werden, der von älteren Komponenten nicht ausgewertet wird.

Alle am Notlichtbeleuchtungsanlagenbus angeschlossenen Komponenten erhalten insbesondere über diesen Bus Updates. Die bevorzugte Methode ist, dass eine Komponente die Firmware zuerst komplett empfängt und prüft. Anschließend wird das Update installiert. Es soll somit gewährleistet werden, dass eine Komponente nach einem fehlgeschlagenen Update noch voll einsatzfähig ist. Jedes Update soll eine Liste an unterstützter Hardware enthalten. Diese Liste kann z.B. Seriennummernbereiche oder Hardwareversionen enthalten. Anhand dieser Liste kann eine Komponente prüfen, ob das Update durchgeführt werden darf. Die Seriennummer muss daher in einem nicht überschreibbaren Bereich, z.B. im Bootloader/Updaterutine enthalten sein.

Das Einspielen der Firmware soll für nur ein Gerät oder für alle angeschlossenen Geräte eines Typs durchführbar sein. Daher soll es zwei Arten von Updatetelegrammen geben: adressiert und broadcast. Der Firmwarebroadcast soll den Updatevorgang in großen Notlichtbeleuchtungsanlagen mit vielen Komponenten beschleunigen.

Durch eine flache Bus-Struktur, über die alle Komponenten erreichbar sind, ist es möglich, die Notlichtbeleuchtungsanlage mit weiteren Modulen und neuen Funktionen einfach zu erweitern. Es können z. B. verschiedene Haus-Busse wie DALI mit Gateways an die Notlichtbeleuchtungsanlage angeschlossen werden.

Es kann eine Anlagen-Diagnose vorgesehen sein. In der Diagnose wird der aktuelle Zustand der Anlagenkomponenten dargestellt bzw. durch einen entsprechenden Test ermittelt. Folgende Parameter können diagnostiziert werden:

- Zustand der Einspeisung/Netz.
- Zustand der Batterie.
- Zustand der Stromkreise.
- Zustand der Leuchten.
- Zustand der Eingänge (E1-E4, CCIF): Schalteingang; Netzwächter; CCIF.
- Log anzeigen.
- Manuelle Auslösung des Funktionstest.
- Manuelle Auslösung des Kapazitätstest (Dauerprüfung).

Berichte über die Diagnose werden erstellt, wobei diese z. B. im HTML- oder PDF-Format dokumentiert werden:

- Testergebnisse betrachten: Ergebnisse des letzten Tests.
- Fehlerliste betrachten (gefundene Fehler im letzten Funktionstest).
- Inbetriebnahmedokumentation erstellen (Zustand der Notlichtbeleuchtungsanlage, Konfigurationsübersicht der Notlichtbeleuchtungsanlage, usw.).
- Wartungsdokumentation erstellen.
- Diagnoseprotokolle erstellen: Dokumente zur Weiterleitung an den Service.

Eine vorteilhafte Einnahme eines sicheren Zustands der Notlichtbeleuchtungsanlage ist gegeben, wenn es sich bei der Einnahme um einen "fail-safe"-Zustand entweder der Leuchtenmodule und/oder der CCM-Module handelt. An dem einen oder an dem anderen Modul sind Leuchten angeschlossen. Die Leuchten sind Teil einer Notlichtbeleuchtungsanlage und gelangen bei Einnahme des Zustands in einen bestimmten Beleuchtungszustand. In dem Beleuchtungszustand entsteht ein Beleuchtungsbild bzw. eine Ausleuchtung in dem Gebäude (Lichtverteilungsmuster über die gesamte auszuleuchtende Fläche), das als Lichtverteilung für einen sicheren Gebäudebetriebszustand angesehen wird. Das Beleuchtungsbild kann auch anhand der angeschalteten und ausgeschalteten Leuchten ausgedrückt werden. Es werden einzelne Notlichtleuchten eingeschaltet, die für eine Beleuchtung des Gebäudes in einer Helligkeit sorgen, dass ein sicheres Verlassen des Gebäudes ermöglicht wird. Je nach Umgebungshelligkeit und je nach Helligkeit vor der Einnahme des sicheren Zustands muss eine Helligkeit erzeugt werden; die Helligkeit, die die Notlichtleuchten liefern sollen, hängt von der Phase vor dem Einschalten und von den Umgebungshelligkeiten ab. Natürlich kann es aber auch unabhängig von der Phase vor dem Einschalten und unabhängig von der Umgebungssituation die Notwendigkeit geben, dass alle Notlichtleuchten mit maximaler Helligkeit abstrahlen, z. B. in einem Brandfall oder in einem Fall von verrauchten Gängen und Räumen.

Ein besonderes Augenmerk kann dabei auf das Abfangen des besonderen Zustands während der Kommunikation gelegt werden, bei der im Endeffekt keine Kommunikation über den Bus mehr erfolgt. Wenn es keine Kommunikation mehr gibt, sollte (trotzdem) die gesamte Notlichtbeleuchtungsanlage in einen sicheren Zustand gelangen.

Die "fail-safe"-Funktionen sollen daher an drei verschiedenen Stellen ansetzen:

1. Gesamte Notlichtbeleuchtungsanlage.
2. Bus-Kommunikation.
3. in den Modulen selbst, z. B. aufgrund von Selbst-Tests.

Es kann auch die Situation eintreten, dass eine Leitung oder ein Modul eine Störung aufweist. Dadurch ergeben sich zwei Teilanlagen, weil aufgrund der Trennung bzw. Unterbrechungsstelle in dem Bus Module jenseits der Unterbrechungsstelle und Module diesseits der Unterbrechungsstelle eine eigene (Sub-)Notlichtbeleuchtungsanlage bilden. Bei den Modulen hinter der Unterbrechungsstelle kommt die Information des CMM-Moduls nicht an. Die Module vor der Unterbrechungsstelle könnten "glauben", dass es gar keine Unterbrechung gibt. Beide Fehlerbilder sollten von jedem der Beleuchtungsmodule abgefangen werden.

Die Sicherheitsbeleuchtungsanlage bzw. die Notlichtbeleuchtungsanlage kann vorteilhafterweise mit Zeitkonstanten, die ggf. auch aufgrund anderer Parameter anpassbar sind, operieren, um mit höherer Sicherheit das Ereignis "Unterbrechung des Busses" zu erkennen. Bei Überschreitung einer voreingestellten Zeitspanne (z. B. T_ub) kann ein Modul die Erkenntnis gewinnen (z. B. das CMM-Modul oder das CCM-Modul), dass keine gültige Kommunikation auf dem Bus mehr erfolgt ist. Daten, die übertragen werden und mit richtigen Prüfsummen ausgestattet sind oder in einer Eventtabelle aufscheinen, sind Daten, die zu einer gültigen Kommunikation gehören. Daten, die fehlerbehaftet sind, weil sie z. B. eine ungültige Prüfsumme haben (CRC-Summe), sind Daten, die auf eine fehlerhafte Bus-Kommunikation deuten. Sind innerhalb eines Zeitfensters keine gültigen Daten von einem Modul erhältlich, kann das Modul von einer Busstörung ausgehen.

Die Steuerung erfolgt also über "Events" ("Szenen"). Die Beleuchtungsbilder/Lichtverteilmuster können als 1., 2. und 3. Szene benannt werden.

Das momentan vorgesehene Standardvorgehen bei Core-Bus-Kommunikationsausfällen kann wie folgt aussehen:

Sobald der Ausfall der Core-Bus-Kommunikation von einem Modul detektiert wird, geht die gesamte Notlichtbeleuchtungsanlage in den sicheren Zustand (Der sichere Zustand wird gelegentlich auch "modifizierte Bereitschaft" bezeichnet).

Dies geschieht dadurch, dass jedes Modul, welches den Ausfall detektiert, ein entsprechendes "Core-Bus-Kommunikation-gestört-Event" oder ein Signal "Modul XY Bus Störung" sendet. Auf dieses reagieren die anderen Module, indem sie ihrerseits in den sicheren Zustand wechseln.

Das CMM-Modul fragt regelmäßig alle Module an, erhält es keine Antwort, so wird das auf den User Interfaces (dem Web User Interface/WebUI, General User Interface/GUI, i. e. dem Frontdisplay) angezeigt, z. B. "Modul XY ausgefallen, Anlage geht in den sicheren Zustand".

Das CMM-Modul verschickt zusätzlich Benachrichtigungen, z. B. eine E-Mail (mit Logg Informationen) und zeigt den Fehler in der Anlagenübersicht im WebUI an, o. ä.

Bei Anlagenbus-Kommunikationsausfällen, die vom CCM-Modul aus gesehen werdeb, schaltet das CMM-Modul alle Endstromkreise und dort alle Leuchten an. Das Verhalten der Leuchten bezüglich der Kommunikation zum CCM-Modul via Powerline-Kommunikation ist weiter unten beschrieben.

In einer möglichen, alternativen Vorgehensweise können auch die zusätzlichen Abläufe und Ereignisse sowie Antworten berücksichtigt werden.

Die nachfolgende Zusammenstellung unterscheidet zwischen der Antwort auf die Frage, wie reagieren die einzelnen Module auf eine Störung der Core-Bus-Kommunikation und wie das CMM-Modul, wenn es erfährt, welches Modul (genau lokalisierbar) nicht mehr ordnungsgemäß funktioniert.

- CMT-Modul: BusKomm. Gestört → Event "Bus Störung" senden, CMT-Modul zeigt entsprechenden Fehler an+akustische Meldung.
- CMA-Modul: BusKomm. Gestört → Event "Bus Störung" senden, CMT-Modul zeigt entsprechenden Fehler an + akustische Meldung Netzwächter: BusKomm. gestört→Event "Bus Störung" senden.
- CIM-Modul: BusKomm. Gestört → Event "Bus Störung" senden.
- CCC-Modul: BusKomm. Gestört → Event "Bus Störung" senden.
- COM-Modul: BusKomm. Gestört → Event "Bus Störung" senden, dieser Fall muss für jeden einzelnen Ausgang konfiguriert werden können, mach an/aus/nichts (default).
- CMB-Modul: BusKomm. Gestört → Event "Bus Störung" senden.
- CCM-Modul: Event "Bus Störung" senden. Es schaltet alle Endstromkreise und dort alle Leuchten an.
- CEV-Modul: BusKomm. gestört→Event "Bus Störung" senden, dieser Fall muss für jeden einzelnen Ausgang konfiguriert werden können, mach an/aus/nichts (default).
- CPS-Modul: BusKomm. gestört→Event "Bus Störung" senden.
- CES-Modul: BusKomm. gestört→Event "Bus Störung" senden.
- CMM-Modul:

  Standardvorgehen: BusKomm. gestört→Event "Modul XY Bus Störung" senden.
  Notlichtbeleuchtungsanlage verschickt z. B. eine E-Mail (mit Logg Informationen) und zeigt den Fehler in allen Uls an.
  Mögliches Sondervorgehen abhängig vom detektierten Modulfehler:

◦ CMT-Modul: Standardvorgehen.

◦ CMA-Modul: Standardvorgehen.

◦ CIM-Modul: Event "CIM Kommunikation gestört" senden. Dieser Fall muss für jeden einzelnen Eingang konfiguriert werden können, mach an/aus/nichts (default). Ist ein Eingang mit der Funktion "Netzwächter" belegt, muss das CMM-Modul das Event "Netzwächter" aktivieren.

◦ CCC-Modul: Event "CCC-Kommunikation gestört", gehe in sicheren Zustand senden.

◦ COM-Modul: Event "Kommunikation mit COM-Modul gestört" senden. Dieser Fall muss für jeden einzelnen Ausgang konfiguriert werden können, setze Pegel high/low/keine Veränderung (default).

◦ CMB-Modul: Standardvorgehen.

◦ CCM-Modul: Event "CCM-Kommunikation gestört", gehe in sicheren Zustand senden.

◦ CEV-Modul: Muss für jedes System einzeln konfiguriert werden, denn wird dieses Modul zur Versorgung eines externen Netzwächters verwendet wird es z.B. notbetriebsrelevant.

◦ CPS-Modul: Event "CPS-Kommunikation gestört", gehe in sicheren Zustand senden.

◦ CES-Modul: Event "CES-Kommunikation gestört", gehe in sicheren Zustand senden.

◦ GUI-Modul: Standardvorgehen.

Eine Leuchte checkt bei Kommunikationsstörungen der Powerline-Kommunikation die Kommunikation auf dem Stromkreis mit einem z. B. Fünfzehn-Sekunden-Timer, der sich nach einer Feststellung einer erfolgreichen Kommunikation selbständig zurücksetzt. Sobald in diesem Zeitfenster keine Kommunikation auftritt, schaltet die Leuchte eine LED ein (die Leuchte geht in einen sicheren Zustand).

Bei Kommunikationswiederkehr vom Stromkreis-Modul schaltet die Leuchte die LED wieder aus bzw. in einen Zustand, in dem sie sich vorher befand. Gibt es innerhalb eines zehnminütigen Zeitraums nach der Kommunikationswiederkehr erneut einen Kommunikationsausfall bzw. mehrere Kommunikationsausfälle und wenigstens eine Wiederkehr, so bleibt sie dauerhaft an und startet den "Leuchte-dauerhaft-an Modus". Szenen, i.e. ein/aus/Helligkeitsänderungs-Befehle in diesem Zeitraum werden ignoriert. Treten im "Leuchte-dauerhaft-an Modus" zusätzliche Ausfälle auf, zählt die Leuchte diese. Diese Zustandsvariable wird nicht persistent gespeichert. Strom aus-ein-schalten am Endstromkreis, i.e. versetzen in den Ladebetrieb und zurück in Bereitschaftsbetrieb, beendet den "Leuchte-dauerhaft-an Modus" und setzt auch die Variable zurück.

Eine besonders interessante Variante ist es, wenn der BBC via CCM-Modul reihum mit allen Leuchten "redet", um auf diesem Weg neue Messwerte auszulesen. Er merkt, wenn dabei eine Leuchte fehlt, und kann dies dem CMM-Modul mitteilen.

Für alle anderen Module können Ausfälle in der Kommunikation gezählt werden. Eine so geartete Überwachung des Anlagenbusses und die darauf stattfindenden Kommunikationsausfälle können mit der gleichen Strategie behandelt werden, wie die Kommunikationsausfälle bezüglich der Leuchten behandelt werden.

Einige Besonderheiten zur Kommunikation sollen nachfolgend hervorgehoben werden.

A) Allgemeines

Als Übertragungsformat dient eine asynchrone serielle Datenübertragung mit 500kBaud. Als Übertragungsmedium dient eine RS-422 im 'Full-Duplex Modus'. Dabei werden die Daten differentiell über die Busleitungen übertragen. Es gibt zwei Möglichkeiten, Nachrichten über den Anlagenbus zu übertragen. Nachrichten können an alle Busteilnehmer (Module) gleichzeitig gesendet werden (Broadcast) oder an einen bestimmten Busteilnehmer (Unicast). Zur Adressierung ist jedem Modul eine einmalige 32-Bit-Adresse zugeordnet mit der es sich in der Core Bus API (Application Programming Interface) registriert.

Die Bezeichnung der Schnittstellen mit 'IN' und 'OUT' dienen ausschließlich der korrekten Busverkabelung. (die Leitungspaare RX und TX müssen bei der Verbindung der Schnittstellen gekreuzt werden).

B) Senden von Daten

Ein Modul generiert eine Nachricht und sendet diese über den Kommunikationskanal an die Core Bus API. In der Modulverwaltung wird der Typ der Nachricht überprüft (Broadcast oder Unicast). Ist die Nachricht für alle (Broadcast), wird sie gleich an alle anderen registrierten Module weitergeleitet und in das Senderegister abgelegt. Bei einer direkt adressierten Nachricht (Unicast) wird geschaut, ob die betreffende Moduladresse registriert ist. Wenn ja, wird Nachricht an das betreffende Modul weitergeleitet und nicht in das Senderegister abgelegt. Trifft keine der vorhergehenden Varianten zu, wird die Nachricht nur im Senderegister abgelegt. Ist das Senderegister belegt, wird die Nachricht in der Paketverwaltung zu einem Datenpaket ("Core Bus Paket") komplettiert und mit einer CRC versehen. Dieses Paket wird in einem Sende-Zwischenspeicher abgelegt und gleichzeitig über den Serializer der Schnittstellenverwaltung zugeführt. Die Schnittstellenverwaltung transferiert diesen seriellen Datenstrom in den jeweiligen Sendebuffer aller angeschlossen Schnittstellen. Nun werden die Daten durch die Hardware übertragen, bis der Sendebuffer wieder leer ist.

C) Empfang von Daten

Die Schnittstellenhardware empfängt Daten vom Bus und schreibt diese in den Empfangsbuffer der Schnittstelle. Gleichzeitig findet eine Datenflusskontrolle statt, die in der Paketverwaltung einen Übertragungsfehler meldet, wenn der Datenstrom eine gewisse Zeit unterbrochen ist. Wenn Daten im Empfangsbuffer einer Schnittstelle stehen, werden diese mit der entsprechenden Schnittstelleninformation an die Paketverwaltung weitergeleitet. Die Streamsynchronisierung kontrolliert nun das Sync-Byte des Datenstromes und die Anzahl der Nutzdaten. Im Fehlerfall wird ein Übertragungsfehler gesetzt. Der Deserializer baut aus dem Datenstrom nun ein Datenpaket ("Core Bus Paket") zusammen. Ist das Paket komplett, wird anhand der CRC die Richtigkeit der Daten überprüft. Im Fehlerfall wird ein Übertragungsfehler gesetzt. Wenn ein Übertragungsfehler erkannt wurde, werden die betreffenden Daten gelöscht und vom Paketgenerator eine spezielles Core Bus Paket generiert. Dieses Paket wird über die Schnittstelle versendet, dessen empfangener Datenstrom einen Übertragungsfehler verursacht hat. Das Paket fordert den Empfänger auf, den Inhalt des Sende-Zwischenspeichers noch einmal zu senden. Wurde das Core Bus Paket erfolgreich empfangen und dekodiert, wird die Nachricht an die Modulverwaltung weitergeleitet. Ist die Nachricht an alle gerichtet (Broadcast), wird sie an alle registrierte Module gesendet. Des weiteren wird diese Nachricht auch wieder über alle Schnittstellen (außer der Schnittstelle auf dem die Nachricht empfangen wurde) weitergeleitet. Ist die Nachricht nur an einen gerichtet (Unicast), wird geschaut, ob dieses Modul registriert ist. Wenn ja, wird die Nachricht an dieses Modul gesendet. Anderenfalls wird diese Nachricht über alle Schnittstellen (außer der Schnittstelle auf dem die Nachricht empfangen wurde) weitergeleitet.
Mit der Konfiguration der Notlichtbeleuchtungsanlage werden Betriebsparameter der Anlagenkomponenten eingestellt:

- Grundeinstellungen: Versorgungsdauer (Autonomiezeit) / Bemessungsbetriebsdauer (licht.wissen 10).
- Netzwerkeinstellungen (LAN, WLAN).
- Stromkreise konfigurieren: Strom/Leistungsüberwachung (SÜ) konfigurieren; SÜ-Grenzwerte manuell einstellen; SÜ-Grenzwerte automatisch (per Referenzmessung) einstellen.
- Leuchten konfigurieren.
- Leuchtengruppen erstellen.
- Stromkreisgruppen erstellen.
- Zeitpläne für automatische Funktionen erstellen.
- Automatischen Funktionstest konfigurieren.
- Automatischen Kapazitätstest konfigurieren.

Zusätzlich kann auch eine Gesamtstromüberwachung (Feature der Multicontrol MDC) vorgesehen sein:

- Messung des Batteriestroms im Notbetrieb.
- Fehlerauslösung bei Unter/Überschreiten eines einstellbaren Schwellwerts.

CORE-Lichtszenarien

Nachfolgend werden Notlicht- bzw. Lichtszenarien, die über Ereignisse (digitale Eingänge) auf der verteilten Notlichtbeleuchtungsanlage geschaltet werden. Als verteilte Notlichtbeleuchtungsanlage wird eine Sicherheitsbeleuchtungsanlage bezeichnet, die aus mehreren Stationen besteht, die untereinander über TCP/IP oder CORE/Bus vernetzt sind.
Die Lichtszenarien werden über Ereignisse von Ereignisquellen gesteuert. Eine Ereignisquelle (z. B. Schalter) kann bevorzugt zu einem Zeitpunkt genau ein Ereignis (z. B. Einschalten) auslösen, Eine Auslösung von mehreren Ereignissen ist bevorzugt nicht vorgesehen. Der dauerhafte Zustand der Ereignisquelle liefert keine weiteren Ereignisse (unabhängig von der Protokollebene).
Ereignisquellen können folgende Komponenten (digitaler Eingang) sein:

- Digitaler Weitbereichseingang mit einem Schalter, Taster, Präsenzmelder oder Bewegungsmelder.
- Integrierte Zeitschaltuhr (Timer).
- Digitale Zustände, die über Gateways übermittelt werden (Alarmanlage: Bereich scharfgeschaltet).
- Sensoren für die Umgebungshelligkeit (adaptive Lichtsteuerung).

Ein Eingang ist entweder aktiv (High-Pegel) oder inaktiv (Low-Pegel).
Lichtszenarien definieren den Zustand von Leuchtengruppen (z. B. Dimm-Level, Piktogramm, Lichtfarbe, usw.)

in Abhängigkeit von Ereignisquellen (digitale Eingänge). Sie bilden eine zusätzliche Ebene zwischen Ereignisquelle und Leuchte. Ein Ereignis aktiviert ein Szenario. Leuchtengruppen sind zu einem Szenario zusammengefasst. Beide sind voneinander entkoppelt. Die zusätzliche Ebene ist vorteilhaft, um Fremdsystemen einfach einen definierten Zugriff auf Szenarien zu ermöglichen (z. B. bei der Fluchtwegslenkung). Es ist in einer weitergehenden Ausführung vorgesehen, dass für den Fremdzugriff noch eine Zwischenebene vorhanden ist, um externe und interne Szenarien voneinander zu entkoppeln.

Anwendung:

- Netzwächter schaltet Leuchte im Kreis ein (Mod-Bereit).
- Geschaltetes Dauerlicht.

Jedes Szenario verfügt über eine Priorität, die über die Szenarionummer (1 ... N) definiert wird.

Dabei steht die Nummer 1 für die höchste Priorität, alle nachfolgenden Nummern haben eine absteigende Priorität. Die zuletzt aktivierte Szeanrionummer wird gespeichert. Ein Ereignis löst eine Szenarionummer aus. Ist die Nummer kleiner oder gleich dem aktiven Szenario, so wird das neue aktiviert, anderenfalls wird das Ereignis verworfen. Das aktive Szenario kann zurückgestellt werden. Ein Ereignis oder mehrere Ereignisse können den Notbetrieb auslösen. Mehrere aktive Lichtszenarien können entgegengesetzte Zustände für die Leuchten hervorrufen. Beispielsweise soll eine Leuchte gleichzeitig aus- und eingeschaltet werden, was zu einem Konflikt führt. Um einen solchen Konflikt aufzulösen, erhalten die Zustände der digitalen Eingänge, die einschalten, Vorrang vor denen, die ausschalten. Eine konfigurierbare Priorisierung kann realisiert werden, jedoch erhöht dies die Komplexität der Notlichtbeleuchtungsanlage.

Jede Station verfügt in einer bevorzugten Ausführung über vordefinierte Standard-Szenarien, die nicht verändert werden können:

- Szenario #0: Alle Kreise AUS: Alle Leuchten der Station aus.
- Szenario #1: Alle Kreise EIN: Alle Leuchten der Station ein.

Anwendung:

- Ruhestromschleifen (Kritischer Kreis).

Weitere vordefinierte Szenarien für jeden Kreis:

- Szenario K1 AUS: Alle Leuchten im Kreis 1 aus.
- Szenario K1 EIN: Alle Leuchten im Kreis 1 ein.
- Szenario K2 AUS: Alle Leuchten im Kreis 2 aus.

Anwendung:

- Netzwächter in Stromkreisen (Mod-Bereit).

Es werden insbesondere Szenariotabellen vorgesehen, welche Eingangsereignisse (Lichtschalter, Netzwächter, usw.) in Lichtszenarien (Leuchte an, aus, gedimmt, Piktogramm) umsetzen. Mit dieser Technik können die Leuchten sehr flexibel geschaltet werden. Hierbei gibt es zwei Arten:

- Szenariotabellen für Eingänge.
- Szenariotabellen für Leuchten.

Die Szenario-Tabellen werden lokal in der Station gespeichert und dort periodisch verarbeitet.

Szenario-Tabellen für Eingänge überführen Ereignisse in Szenario-Nummern und bilden eine Zwischenebene bei der Ermittlung der Szenarien. Mit der Zwischenebene lassen sich beliebige Zuordnungen flexibel und anwenderfreundlich abbilden:

- N Ereignisse auf ein Szenario (N : 1) - Konzentration.
- Ein Eingang auf M Szenarien (1 : M).
- Allgemein: N Eingänge auf M Szenarien (N : M).

Die Tabellen können auch in anderen Stationen verwendet werden (Wiederverwendung), um standarisierte Konfigurationen zu erstellen. Es besteht keine Notwendigkeit, Eingänge direkt mit Szenarien zu verknüpfen.

Szenario-Tabellen für Leuchten definieren Szenarien für die lokalen Leuchten. Eine Zeile in der Tabelle enthält folgende Angaben:

- Szenario Nummer.
- Zustand der lokalen Leuchten in den Stromkreisen.

Sobald ein Szenario aktiviert wird, werden die lokalen Leuchten in den neuen Zustand gebracht. Auch hier können die Tabellen in anderen Stationen wiederverwendet werden (Standarisierung) .

Nachfolgend sei beispielhaft eine Verarbeitung von Szenarien in der Station erläutert:
Annahme: Das Prozessorboard kann auch Base-Board-Controller, abgekürzt BBC, genannt werden und umfasst einen leistungsfähigen Microcontroller, der die hardwarenahen und zeitkritischen Aufgaben übernimmt. Im BBC laufen drei Tasks. Der Task 1 im BBC wertet zyklisch die digitalen Eingänge in den Stromkreisen aus (Digitaler Eingang am Leuchtenmodul). Die digitalen Eingänge in eigenständigen Modulen werden in dem Zyklus ebenfalls erfasst. Der Zustand wird in einer Tabelle eingetragen und kann von Task 3 gelesen werden. Der Task 2 liest den aktuellen Leuchtenzustand ("aus", "ein" sowie "Dimm-Level") aus einer Tabelle und sendet diesen zyklisch an die Leuchten. Task 3 kann auf die Tabelle schreiben. Der Task 3 ermittelt aus den digitalen Eingängen das aktive Lichtszenario und setzt dieses in den Leuchtenzustand um (für Task 2). Szenario-Nachrichten von anderen Stationen werden hier auch verarbeitet. Szenario-Nachrichten für andere Stationen werden auch in diesem Schritt generiert und versendet. Das genaue Timing der Tasks wird hier nicht weiter ausgeführt und muss die Anforderungen an die Umschaltzeiten berücksichtigen.

Bei den Leuchtenbetriebsarten gibt es drei Arten:

1. Dauerlicht (DS): Diese Leuchten sind im Normal- und Notbetrieb immer eingeschaltet.
2. Bereitschaftsleuchten (BS): Diese Leuchten sind nur im Notbetrieb eingeschaltet und sonst ausgeschaltet.
3. Geschaltetes Dauerlicht: Diese Leuchten können im Normalbetrieb ein- und ausgeschaltet werden. Im Notbetrieb sind sie immer eingeschaltet.

Mit diesen drei Betriebsarten für die Leuchten lassen sich in einer Konfiguration der Notlichtbeleuchtungsanlage (Ausführungsform) alle Anwendungsfälle für Leuchten abdecken. In einer anderen Konfiguration (z. B. mit geschaltetem Dauerlicht) werden mehr Leuchtenbetriebsarten benötigt. Die Betriebsart wird vom Stromkreis-Modul durch die Ansteuerung realisiert. Eine Konfiguration in der Leuchte selbst ist dafür nicht erforderlich.

Es werden zwei Leuchtentypen unterschieden - Zentralbatterie- und Einzelbatterie-gespeiste Leuchten.

Bei von einer Zentralbatterie gespeisten Notlichtleuchten erfolgt die Stromversorgung im Notfall von zentraler Stelle über den Stromkreis. Die Netzeinspeisung führt immer Spannung (AC oder DC). Der Stromkreis sendet Befehle zum Schalten der Leuchtmittel bzw. zum Einleiten des Notbetriebs. Die Prüfung der Leuchte kann auch von zentraler Stelle erfolgen. Die Leuchte liefert nur Messergebnisse. Die Leuchte wird umfangreich von der Zentralbatterieanlage aus konfiguriert und eingestellt; dazu gehören z. B. die Betriebsart und Helligkeit (Dimmung).

Bei Notlichtleuchten mit Einzelbatterieeinspeisung erfolgt die Energieversorgung im Notfall über den Batterieeingang. Der Netzausfall wird über die Netzeinspeisung an den Anschlüssen "L"/"N" erkannt. Die Leuchte verfügt über ein ATS ("automatisches Test-System) und führt die Prüfung selbstständig durch. Das Ergebnis wird gespeichert und kann abgefragt werden.

Die weiter oben stehenden Erläuterungen und Ausführungen zu einer modularen Notlichtbeleuchtungsanlage können auch in folgenden Aspekten zusammengefasst werden.

Zu einer üblichen Beleuchtungsanlage gehören mehrere Notlichtleuchten und die eigentliche Steuerungs- und Überwachungselektronik, die modular realisiert ist, d. h. durch unter einander mittels einem (Kommunikations-)Bus verbundene Module. Andere geläufige Namen für klassisch in einem Gehäuse oder in einem Schaltschrank konzentrierte Notlichtbeleuchtungsanlagen sind Zentralbatterieanlage bzw. Gruppenbatterieanlage. Gelegentlich werden auch Begriffe wie Steuerungslogik, Ersatzstromversorgung usw. benutzt, um den Teil der Notlichtbeleuchtungsanlage zu bezeichnen, der ohne Leuchten die eigentliche Steuerung und Energieversorgung darstellt. Manchmal wird die Zentrale bzw. die zentrale Steuerung auch ohne Notstromenergiequellen wie Akkumulatoren betrachtet, d. h. in solchen Fällen werden die Notlichtleuchten und die Akkumulatoren als periphäre Komponenten betrachtet. Diese Module kommunizieren untereinander auf einem Bus.

Zu einer Notlichtbeleuchtungsanlage gehören wenigstens zwei unterschiedliche Module. Eine Notlichtbeleuchtungsanlage kann z. B. durch ein CMM-Modul und ein CCM-Modul realisiert werden. Das CCM-Modul ist ein Stromkreis-Modul. Ein Stromkreis-Modul steuert wenigstens eine Notlichtleuchte. Vorzugsweise hat ein Stromkreis-Modul mehrere Stromkreise, die an dem Stromkreis-Modul angeschlossen sind, z. B. vier Stromkreise, durch die die Leuchten versorgt werden. Das CCM-Modul ist ein Modul zur Steuerung und/oder Programmierung und/oder Konfiguration weiterer Module der Notlichtbeleuchtungsanlage.

Wenigstens eines der Module ist ein sicherheitskritisches Modul der Notlichtbeleuchtungsanlage. Wird ein Fehlerfall mit, anhand, durch oder an dem sicherheitskritischen Modul festgestellt, soll die Notlichtbeleuchtungsanlage in einen Notbetrieb (von ggf. mehreren verschiedenen Notbetriebsszenarien) gehen. Hierbei können die Notbetriebszustände von Fehlerfall zu Fehlerfall bzw. von einem ersten sicherheitskritischen Zustand zu einem anderen sicherheitskritischen Zustand abweichen. Tritt ein solcher Fall ein, kann auch von der Übernahme durch eine "fail-safe"-Funktion geredet werden.

Eine "fail-safe"-Funktion wird z. B. dann ausgeführt, wenn eine gestörte Bus-Kommunikation vorliegt. Die auf dem Bus kommunizierenden Module können nicht so kommunizieren, wie sie es erwarten. Z. B. kann eine Dauer eines regulären Zeitfensters, bis eine nächste Information über den Bus hätte übertragen werden sollen, überschritten sein. Eine solche gestörte Bus-Kommunikation kann aufgrund einer Programmierung eines Moduls oder aufgrund eines Schaltkreises des Moduls hervorgerufen sein. In einem solchen Fall, dass eine "fail-safe"-Funktion greifen soll, versetzt die Notlichtbeleuchtungsanlage einen Teil der Notlichtleuchten in einen eingeschalteten Zustand.

Der eingeschaltete Zustand wird dadurch erreicht, dass wenigstens für einen der Stromkreise eine Spannungsversorgung sichergestellt wird. Es wird eine Spannung an einem Eingang eines Stromkreises sichergestellt. Dadurch werden die am Stromkreis angeschlossenen Notlichtleuchten eingeschaltet. Die Energie am Eingang des Moduls wird auf die (End-)Stromkreise durchgeschaltet. Jedes Modul hat zumindest zwei Busanschlüsse. Ein Busanschluss ist zumindest für ein Eingangskanal vorgesehen. Ein Bus-Anschluss ist zumindest für einen Ausgangskanal vorgesehen.

Idealerweise hat jedes Modul einen Puffer. In dem Puffer kann ein eintreffendes Signal über einen Eingangskanal hineingeschrieben werden. Das Signal ist in dem Puffer abgelegt.

Bedarfsabhängig kann das Signal über einen Ausgangskanal des Moduls wieder ausgegeben werden. Dadurch können Signale an nachfolgende Module gesendet werden.

An dem Stromkreis-Modul ist wenigstens ein Stromkreis angeschlossen. An dem Stromkreis sind Notlichtleuchten angeschlossen. Mehrere Notlichtleuchten gehören zu einem Stromkreis. Die Notlichtleuchten können durch das Modul gesteuert werden. Eine Möglichkeit der Steuerung ist eine Powerline-Kommunikation.

Es gibt verschiedene Module, unter anderem kann eine Beleuchtungsanlage durch eine Auswahl aus den nachfolgend aufgelisteten Modulen zusammengestellt sein (wobei einzelne Module auch mehrfach in einer Notlichtbeleuchtungsanlage vorhanden sein können):

- ein CMB-Modul,
- ein CEV-Modul,
- ein CIM-Modul,
- ein COM-Modul,
- ein CCC-Modul,
- ein CES-Modul,
- ein CPS-Modul,
- ein CBH-Modul,
- ein CLM-Modul,
- ein CMA-Modul,
- ein CMT-Modul.

Einzelne Module können eine Detektionsvorrichtung für ein Detektieren einer gestörten Kommunikation aufweisen. Ein mit einer Detektionsvorrichtung ausgestattetes Modul kann eine Busstörung erkennen. Eine solche Busstörung kann mittels "Event" signalisiert werden. Eine Störung einer Kommunikation kann als sicherheitskritisch angesehen werden. Eine Detektionsvorrichtung für ein Detektieren einer gestörten Kommunikation, z. B. einer gestörten Bus-Kommunikation, kann als Detektionsvorrichtung zur Detektion sicherheitskritischer Zustände angesehen werden. Bei einer solche Detektion kann z. B. ein "fail-safe"-Zustand eingenommen werden. Module, die mit solchen Detektionsvorrichtungen ausgestattet sind, können als sicherheitskritische Module angesehen werden. Werden Module aufgrund ihrer Aufgabe als sicherheitskritische Module angesehen, so können diese Module mit Funktionen ausgestattet werden, damit diese bei Detektion eines sicherheitskritischen (Notlichtbeleuchtungsanlagen-)Zustands in einen "fail-safe"-Zustand gelangen.

Ein CMM-Modul kann eine Zeitsteuerung umfassen. Die Zeitsteuerung bestimmt, wann eine Abfrage übriger Module, die an dem Bus angeschlossen sind, stattfindet.

In der Notlichtbeleuchtungsanlage sind einzelne Komponenten in gesonderten Modulen ausgestaltet bzw.

ausgeführt. Zwischen den Modulen findet eine Kommunikation auf dem Bus statt. Die Module sind zumindest teilweise in Serie verschaltet. Tritt eine Störung bei der Bus-Kommunikation ein, gelangt wenigstens eines der Module in eine "fail-safe"-Funktion bzw. in einen "fail-safe"-Zustand. Das Modul hat einen "fail-safe"-Zustand. Dieser wird eingenommen wenn es eine Störung auf der Bus-Verbindung bzw. in der Bus-Kommunikation gibt. Idealerweise haben alle sicherheitskritischen Module eine "fail-safe"-Funktion. Durch eine solche "fail-safe"-Funktion können die Module in einen sicheren Zustand gelangen. Ein sicherer Zustand eines CCM-Moduls ist z. B. dann gegeben, wenn ein Mindestsatz (eine Mindestanzahl) an Notlichtleuchten eingeschaltet wird.

Signale werden über den Bus von einem ersten Modul zu einem zweiten Modul geleitet. In dem zweiten Modul ist zumindest ein Puffer. Der Puffer verarbeitet das Signal. Die Signale werden von Modul zu Modul weitergeleitet. Mit Hilfe eines solchen Signals kann ein Einschalten und auch ein Ausschalten (aufgrund eines anderen Signals) bewirkt werden.

Auf dem Bussystem können unterschiedliche Informationen übertragen werden. Zu der Gruppe der unterschiedlichen Informationen gehören Prozessdaten, Events, Befehle, Rückantworten auf Befehle, Ereignisse, Netzwiederkehrsignale, Betriebsartumschaltungen, Zustandswechsel an einem Eingang und die Information über den stattgefundenen Zustandswechsel an einem Eingang sowie Informationen über das Verhalten eines kritischen Kreises. Ein kritischer Kreis ist ein Überwachungskreis, der prüft, ob eine Spannung einer bestimmten Stelle der Stromversorgungsanlage eines Gebäudes gegeben ist.

Ein Modul kann reguläre Ereignisse detektieren. Ein Modul kann sicherheitskritische Ereignisse detektieren. Ein sicherheitskritisches Ereignis kann z. B. vorliegen, wenn ein Netzausfall stattgefunden hat, wenn ein Spannungsausfall stattgefunden hat, wenn ein Spannungsabfall stattgefunden hat, wenn ein Ausfall einer Notlichtbeleuchtung stattgefunden hat oder auch wenn mehrere Notlichtleuchten ausgefallen sind. In einem solchen Fall soll das Modul, das eines dieser sicherheitskritischen Ereignisse detektiert hat, die (übrige) Notlichtbeleuchtungsanlage informieren.

Von einem Modul zum nächsten Modul wird das Ereignis oder das Event übertragen. Das das Ereignis oder das Event empfangene Modul reagiert aufgrund seiner eigenen Programmierung, d. h. autark. Das Modul wird selbständig tätig. Das Modul entscheidet, wie es mit einem Ereignis oder mit einem Event umgehen soll.

Zusätzlich können Helligkeitswerte übertragen werden. Statt Helligkeitswerte können auch Dimm-Werte übertragen werden. Auch Kombinationen aus Helligkeits- und Dimmwerten können übertragen werden. Durch eine Helligkeitssteuerung oder eine Dimmungssteuerung kann dafür gesorgt werden, dass einzelne Notlichtleuchten einen bestimmten Helligkeitswert nicht unterstreiten (und genauso nicht überschreiten). Anhand eines übermittelten Helligkeitswertes wird, insbesondere steuerparameterabhängig, die Helligkeit einer Notlichtleuchte gesteuert.

Zur Steuerung der Helligkeit einer Notlichtleuchte kann die Notlichtleuchte auf eine Helligkeitstabelle zurückgreifen, die z. B. im Inneren der Notlichtleuchte abgelegt ist. So kann die Notlichtleuchte eine elektronische Schaltung aufweisen, die sog. "Intelligenz der Leuchte" ("intelligente Leuchte").

Eine Erkennung eines Ereignisses "Unterbrechung des Busses" bei Überschreitung einer voreingestellten Zeitspanne sollte dazu führen, dass eine gestörte Bus-Kommunikation festgestellt wird. Es kann also festgestellt werden, dass keine Prozessdaten, keine Events, keine Befehle, keine Rückantworten auf Befehle, keine Ereignisse, keine Netzwiederkehr und auch keine Betriebsartumschaltung stattgefunden hat.

Das CMM-Modul kann in regelmäßigen Abständen prüfen, ob die übrigen, die Notlichtbeleuchtungsanlage ausmachenden Module vorhanden sind und einwandfrei arbeiten.

Eine Notlichtbeleuchtungsanlage, die modular aus einzelnen Modulen zusammengesetzt ist, kann gebäudeweit verteilt werden. Jedes Modul hat (wenigstens) eine Kernfunktion oder Kernaufgabe, die das Modul erfüllt. Idealerweise ist ein Modul nur für eine einzige oder für wenige Kernfunktionen oder Kernaufgaben verantwortlich. Dadurch ist das Modul von anderen Aufgaben entbunden. Ein mögliches Modul ist z. B. das Modul CCM-Modul, das sich darum kümmert, dass Leuchten, die an den Endstromkreisen des Moduls angeschlossen sind, auf Geheiß des Busses eingeschaltet werden.

Die einzelnen Module sind, wie gesagt, über einen internen Bus miteinander verbunden.

Der Bus verläuft von Modul zu Modul im Inneren des - wenn vorhanden- zentralisierten Gerätes. Der Bus ist von Modul zu Modul durchgeschliffen. Ein solcher Bus kann, obwohl er ein interner Bus ist, als externer Bus weitergeführt werden. Weil die einzelnen Module, obwohl sie alle zulässigen Informationen an die übrigen Module weiterleiten, mit einem von außen zugänglichen Bus operieren bzw. agieren (weil jedes Modul ausreichend mit Intelligenz ausgestattet ist, um zu erkennen, ob eine Information wie ein Event für das Modul von Interesse ist), kann bzw. darf ein extern angeschlossenes Gerät durchaus auch eine Information liefern, mit der das interne Modul nichts anfangen kann. In einem solchen Fall wird die Information, sofern es sich bei der Information um eine grundsätzlich zulässige Information handelt, an die übrigen Module weitergeleitet. Dadurch ist es möglich, dass extern weitere Module beliebig angeschlossen werden können. Eine einmal geschaffene Notlichtbeleuchtungsanlage, z. B. als Grundkonfiguration, kann jederzeit erweitert werden.

In einer Ausgestaltung der Notlichtlbeleuchtungsanlage ist zumindest ein Notlichtleuchten-Modul vorhanden, an einem Notlichtleuchten-Modul ist wenigstens eine Notlichtleuchte angeschlossen. Idealerweise versorgt ein Notlichtleuchten-Modul mehrere Notlichtleuchten. Außerdem gibt es ein Leuchten-Management-Modul.

Jedes Modul hat zumindest zwei Anschlüsse. Ein erster Anschluss ist für einen Eingangskanal vorgesehen. Ein zweiter Anschluss ist für einen Ausgangskanal vorgesehen. Natürlich können Eingangskanal und Ausgangskanal auch untereinander getauscht werden. Zu einem Zeitpunkt ist ein Eingangskanal ein Eingangskanal, während er zu einem anderen Zeitpunkt zu einem Ausgangskanal geworden ist.

Jedes Modul weist einen Puffer auf. Ein Puffer ist für eine Aufnahme eines über den Eingangskanal eintreffenden Signals vorgesehen. Das Modul weist einen Puffer zur Aufnahme eines Eingangssignals auf. Das Signal kann gegebenenfalls auch wieder über einen Ausgangskanal ausgegeben werden. Das Modul prüft das Signal insoweit, dass die Validität des Signals festgestellt wird. Wird ein Signal über den Eingangskanal in ein Modul hineingegeben, dass kein valides Signal ist, weil z. B. eine Checksumme nicht richtig berechnet ist (fehlerhafte Prüfsumme), wird das Signal verworfen. Ist das Signal ein Signal, mit dem die Anlage etwas anfangen kann, so wird das Signal an dem Ausgangskanal wieder ausgegeben. Im Übrigen entscheidet das Modul selbständig, d. h. autark, ob es das Signal auch für sich selbst verwenden möchte.

In einer Ausgestaltung weist die Notlichtbeleuchtungsanlage ein Stromkreis-Modul auf. An dem Stromkreis-Modul kann ein Stromkreis angeschlossen sein. Idealerweise ist ein Stromkreis-Modul so gestaltet, dass mehrere Stromkreise von dem Stromkreis-Modul gesteuert werden können. In einem solchen Stromkreis können Notlichtleuchten platziert sein. Eine Datenverbindung zwischen Stromkreis-Modul und einzelnen Leuchten oder ihnen vorgeschalteten Leuchtenmodulen kann über eine Einleitertechnik, z. B. über eine Powerline-Kommunikation erfolgen. Stromimpulssteuerungen sind ebenfalls gut einzusetzende Steuerungsvarianten.

Idealerweise gibt es zwischen den Modulen einen differentiell operierenden Bus. Der Anlagenbus kann ein differentiell operierender Bus sein. Ein solcher differentiell operierender Bus kann z. B. ein CAN-Bus sein. Idealerweise ist der interne Bus ein galvanisch getrennter Bus, d. h., die Module schalten über eine magnetische Kopplung auf den Bus ihre Signale auf bzw. beziehne hinter einer Spule ihre Signale. Die Spule bzw. der induktive Koppler kann Teil des Moduls sein.

Der interne Bus kann über einen Koppler an einen Bus-Hub angeschlossen sein. Durch den Bus-Hub ist es möglich, Stichleitungen oder externe Verdrahtungen an dem internen Bus anzuschließen.

Ein Bus-Hub hat mindestens ein isolierten Port. Vorzugsweise gibt es zwei isolierte Ports an einen Bus-Hub. Dadurch können extern angeordnete Module und eine schon vorhandene Notlichtbeleuchtungsanlage besonders leicht zu einer größeren Notlichtbeleuchtungsanlage verbunden werden. Externe, zur Ermittlung von sicheren Fluchtwegen eingerichtete Systeme können an den externen Bus angeschlossen werden (der tatsächlich ein interner Bus ist). Eine solche Schnittstelle ist eine Schnittstelle zum internen Bus. Hierüber kann eine Fluchtwegslenkung durchgeführt werden. Die Notlichtbeleuchtungsanlage ist also in der Lage, um eine dynamische Fluchtwegslenkung mittels Ansteuerung von Notleuchten durchzuführen.

Die Notlichtbeleuchtungsanlage kann noch mehr Informationen verarbeiten, wenn Präsenzsensoren, Bewegungssensoren, Anwesenheitssensoren und/oder sonstige Sensoren zur Detektion von Personen und Gefahren Teil der Notlichtbeleuchtungsanlage sind.

Der Betrieb einer Notlichtbeleuchtungsanlage mit mehreren Notleuchten kann durch eine Kommunikation zwischen ihren Modulen stattfinden.

Einzelne Komponenten der Notlichtbeleuchtungsanlage sind in gesonderten Modulen vorhanden. Zwischen den einzelnen Modulen gibt es einen Bus, den Anlagenbus. Der Bus kann auch als interner Bus bezeichnet werden, der innerhalb einer Zentrale vorhanden ist. Dank eines weitergeführten internen Busses, der jenseits der Zentrale als externer Bus zwar adressiert wird, können weitere Module gebäudeweit verteilt angeordnet werden. Diese Module sind trotzdem Teil der Notlichtbeleuchtungsanlage. Zumindest einige der Module sind in Serie miteinander verschaltet und bilden so den Bus. Das Überwachungsmodul, idealerweise das CMM-Modul, überwacht interne und auch alle externen Module, die an dem gemeinsamen Intern-extern-Bus vorhanden sind.

Von einem ersten Modul zu einem zweiten Modul wird ein Signal über den Bus geleitet. Ein solches Signal gelangt zunächst in einen Puffer. Und wird dann dort intern in dem Modul bearbeitet, in dem die Validität des Signals geprüft wird. Gegebenenfalls kopiert das Modul selbst die Informationen zur Verarbeitung in ein anderes Register (neben dem Eingangspuffer). Anschließend wird, insbesondere wenn es sich um ein valides Signal handelt, dieses am Ausgang wieder zur Verfügung gestellt. Auch der Ausgang kann einen Puffer aufweisen.

Über den Bus können Datenpakete übertragen werden. Solche Datenpakete sind z. B. Prozessdaten, Befehle oder Messwerte. Solche Datenpakete können auch Befehle zum Programmieren von Modulen sein. Datenpakete können auch Rückantworten auf Befehle sein. Datenpakete können Ereignisse sein. Über Datenpakete kann eine Netzwiederkehr ausgedrückt werden. Über Datenpakete kann das Ereignis einer Netzwiederkehr korrigiert werden. Ein Datenpaket kann eine Betriebsartumschaltung zum Ausdruck bringen. Ein Datenpaket kann einen Zustandswechsel anzeigen. Es können weitere Betriebsparameter, wie z. B. Stromwerte, Spannungswerte, Leuchtenstromwerte oder sonstige Daten zur Identifikation einzelner Module durch ein Datenpaket übertragen werden. Eine geeignete Notlichtbeleuchtungsanlage kann eine Auswahl der oben aufgeführten Datenpakete umfassen.

Eine Notlichtbeleuchtungsanlage, die so aufgebaut ist, wie zuvor beschrieben, hat den Vorteil, dass sie unbegrenzt update-fähig ist. Fehlen irgendwelche Teile in der Notlichtbeleuchtungsanlage, so können an den Intern-extern-Bus weitere Module angeschlossen werden. Somit kann die Beleuchtungsanlage, wenn einzelne Module fehlen sollten, beliebig erweitert werden. Ein Gebäude, dessen Nutzung geändert wird, benötigt keine komplett neu aufgebaute Notlichtbeleuchtungsanlage. Es muss nur noch der zusätzliche Bedarf bei Nutzungsänderung des Gebäudes ermittelt werden. Anschließend kann überlegt werden, ob ein Modul der Notlichtbeleuchtungsanlage eventuell entfernt werden kann. So kann überlegt werden, welche weiteren Module am internen Bus oder am externen Bus hinzugesetzt werden, die die Notlichtbeleuchtungsanlage der geänderten Flächennutzung des Gebäudes gerecht wird.

Eine Beleuchtungsanlage, die mit modular, einzelnen, autark arbeitenden Modulen zu einer entsprechenden Beleuchtungsanlage zusammengebaut ist, kann mit möglichst einfachen Modulen realisiert werden, wenn jedes Modul nur seine für das Modul bestimmte Kernfunktion wahrnimmt. Diese Module können zusammen die Notlichtbleuchtungsanlage bilden. Die module können durch eine Busstruktur verbunden sein. Zwischen den Modulen können Datenpakete übertragen werden. Die Module sind alle in die Busstruktur eingebunden.

Wenn es sich bei der Beleuchtungsanlage um eine Notlichtbeleuchtungsanlage handelt, sollten einzelne Module Notleuchten mit (elektrischem) Strom und gegebenenfalls auch mit Informationen versorgen. Auf einem Bus sind die Module vorhanden. Wenigstens ein Typ der auf dem Bus kommunizierenden Datenpakete ist für eine Steuerung der Notlichtleuchten gestaltet.

Die Beleuchtungsanlage kann eine Lichtsteuerung durchführen.

Die Programmierung in den einzelnen Modulen bestimmt, wie das Modul auf ein Datenpaket zu reagieren hat. Ein Datenpaket kann ein Ereignis ausdrücken, woraufhin einzelne Leuchten an einem Modul ein- oder ausgeschaltet werden sollen. Hierdurch ist es möglich, Fluchtwegsführungen oder Fluchtwegslenkungen durchzuführen. Es können auch Anzeigebilder in Leuchten verändert werden. So kann eine Leuchte mehrere Anzeigen haben, zwischen denen die Leuchte wechseln kann. Hierdurch kann das Vorliegen/Vorhandensein/der Eintritt eines Ereignisses anhand einer Änderung eines Fluchtweges zum Ausdruck gebracht werden.

An einem Notlichtleuchten-Modul ist wenigstens eine Notlichtleuchte angeschlossen. Außerdem gibt es ein CORE-Management-Modul als Teil der Beleuchtungsanlage.

Idealerweise hat jedes Modul zwei Bus-Anschlüsse. Ein erster Anschluss ist ein Anschluss für einen Eingangskanal. Ein zweiter Anschluss ist ein Anschluss für einen Ausgangskanal.

Jedes Modul weist wenigstens einen Puffer, idealerweise mehrere Puffer, auf, in denen ein Eingangssignal eingelegt werden kann. Das Eingangssignal wird zunächst einmal gepuffert. Es findet die Bearbeitung des Eingangssignals statt.

Idealerweise gibt es in einem Modul der Notlichtbeleuchtungsanlage eine Szenarientabelle. Anhand der Szenarientabelle wird ein zu aktivierendes Szenario ausgewählt. In Abhängigkeit einer Ereignissteuerung entscheidet das Modul anhand seiner Szenarientabelle, welches Szenario zu wählen ist. Das Modul arbeitet autark. Das Modul empfängt über den Anlagenbus eine Information. Anschließend entscheidet das Modul selbständig, wie das Modul mit der Information umgehen möchte. Das Modul schaut in seine Szenarientabelle. Anhand der Szenarientabelle bestimmt das Modul, welche Notlichtleuchten einzuschalten sind und welche Notlichtleuchten oder sonstige Leuchten auszuschalten sind bzw. auszubleiben haben.

Ein Szenario kann aus einer Szenarientabelle entnommen werden. Anhand eines Ereignisses wird bestimmt, welches Szenario aus der Szenarientabelle zu entnehmen ist. Das Ereignis gelangt über den Eingang des Moduls zu dem Modul. Hierdurch bestimmt sich das Szenario der Notlichtbeleuchtungsanlage.

Idealerweise können auch Helligkeitswerte verändert werden. Es gibt nicht nur ein einfaches Einschalten und ein einfaches Ausschalten, sondern es wird mit Helligkeitsstufen gearbeitet. Die Notlichtleuchten können mit unterschiedlichen Helligkeiten betrieben werden. Anhand eines Zustands wird festgelegt, wie der Helligkeitswert der Notlichtleuchte umzusetzen ist. Zur Notlichtleuchte kann ein Piktogramm oder eine Lichtfarbfläche gehören. Oberhalb einer Kommunikationsschicht wird zwischen einem Ereignis und einem Schaltzustand unterschieden.

Die Datenpakete werden nach Datenpaketen, die Ereignisse ausdrücken, und Datenpaketen, die Schaltzustände ausdrücken, unterschieden.

Die Priorität der Szenarien können unterschiedlich sein. Es kann Szenarien geben, die eine höhere Priorität haben, als andere Szenarien. Das Modul bestimmt selbsttätig, d. h. also autark, welche von mehreren möglichen Szenarien das richtige Szenario ist. Gibt es Konfliktfälle bezüglich der Priorität bzw. aufgrund der Datenpakete zu einem Zeitpunkt, darf das Modul selbständig auswählen, welches Szenario das richtige Szenario ist.

Jedes Modul enthält eine vollständige Kopie einer Konfiguration der Notlichtbeleuchtungsanlage. Anhand der Konfiguration kann das Modul auf verschiedene Ereignisse reagieren. Eine gemeinsame Sicherungskopie der vollständigen Konfiguration wird an einer zentralen Stelle abgelegt. Nach einem Tausch eines Moduls ist es in der Lage, selbständig sich wieder eine lokale Kopie der zentral abgelegten Sicherungskopie zu beschaffen. Auch dies trägt zur "fail-safe"-Sicherheit bei.

Einzelne Module der Notlichtbeleuchtungsanlage sind komponentenartig realisiert. Zwischen den Modulen gibt es einen Bus. Die Module sind in Serie, zumindest teilweise, verschaltet. Das Modul kann selbständig entscheiden, wie es auf einzelne Ereignisse reagieren möchte.

Die Kommunikation von einem ersten Modul zu einem zweiten Modul kann dadurch stattfinden, dass ein Datenpaket, ein Signal oder Ereignis zunächst in einen Puffer eines Moduls geschrieben wird. Die hinterlegten Daten in dem Puffer werden dann weiterverarbeitet. Aufgrund eines bestimmten Ereignisses, z. B. aufgrund eines detektierten Netzausfalls, z. B. aufgrund eines Spannungsausfalls, z. B. aufgrund eines Spannungsabfalls, z. B. aufgrund eines Ausfalls einer oder mehrerer Notlichtleuchten, z. B. aufgrund eines Ansteuerungswerts einer Helligkeitssteuerung, z. B. aufgrund einer Ansteuerung einer Dimmungssteuerung, z. B. aufgrund einer Abweichung von einem Parameter jenseits einer Parametergrenze, wird ein Datenpaket von Modul zu Modul übertragen. Jedes Modul entscheidet selbständig, was es mit der Information anfangen möchte und ob es auf die Information zu reagieren hat.

Helligkeitswerte können in Form von Szenarien bestimmt und eingestellt werden. Es wird das Szenario festgelegt. Aufgrund des festgelegten Szenarios ergeben sich Helligkeitswerte für einzelne Notlichtleuchten der Notlichtbeleuchtungsanlage.

Eine Beleuchtungsanlage kann aus einzelnen Modulen zusammengesetzt werden, wobei die Beleuchtungsanlage modular erweiterbar ist. Einzelne Module können hinzugenommen werden. Es können aber auch einzelne Module aus der Beleuchtungsanlage wieder herausgenommen werden. Jedes Modul für sich ist ein autark arbeitendes Modul. Einzelne Module können programmierbare Microcontroller und Datenspeicher umfassen. Außerdem gibt es eine Busstruktur und eine Busanbindung in der Notlichtbeleuchtungsanlage. Die Anbindung findet zwischen einem einzelnen Modul und der Busstruktur statt. Über die Busstruktur bzw. über den Bus werden Informationen von Modul zu Modul weitergereicht. Hierfür haben die Module idealerweise wenigstens zwei Anschlüsse. Ein Anschluss ist ein Bus-Anschluss, an dem die Daten und/oder Steuerbefehle abgefangen werden können. Signale werden in einem Datenspeicher zunächst einmal archiviert. Damit die Beleuchtungsanlage als Notlichtbeleuchtungsanlage operieren kann, entscheiden die Module, was sie mit den ankommenden Daten machen wollen. Solange die ankommenden Daten valide Daten sind, werden sie auf jeden Fall zu dem nächstfolgenden Modul weitergeleitet.

Es gibt verschiedene Module, eines dieser Module ist ein Notlichtleuchten-Modul. Ein anderes der Module ist ein Leuchten-Management-Modul.

Idealerweise hat jedes Modul einen Puffer. In diesem Puffer können Signale eingelegt werden. Die Signale stehen dann auch entsprechend im Ausgangskanal zur Verfügung.

Idealerweise werden Signale und Daten, die an ein Modul gelangen, in dem Modul geprüft.

Signale können durch das Bussystem von einem ersten Modul zu einem zweiten Modul weitergeleitet werden. Zwischen den Übertragungen findet eine Pufferung in einem Puffer statt.

Datenpakete, die über den Bus übertragen werden können, sind Datenpakete wie Prozessdaten, Befehle, Antworten auf Befehle, Ereignisse, Befehle zur dynamischen Fluchtwegslenkung, Betriebsartenumschaltungen, Zustandswechsel an einem Eingang, Betriebsparameter und wie Daten zur Identifikation der Module oder Leuchten.

Idealerweise sind Module mit Microcontrollern ausgestattet. Idealerweise gibt es eine zyklische Auswertung.

Sicherheitswerte können gestuft, z. B. in Stufen zwischen 1 und einhundert, eingestellt werden.

**Figurenkurzbeschreibung**

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei

Figur 1 beispielhaft und schematisch eine erfindungsgemäße Notlichtbeleuchtungsanlage zeigt,
Figur 2 ein Beispiel für eine Notlichtbeleuchtungsanlage intern mit drei Modulen zeigt,
Figur 3 ein Beispiel für eine Notlichtbeleuchtungsanlage intern mit mehr als drei Modulen zeigt,
Figur 4 ein Beispiel für eine Notlichtbeleuchtungsanlage intern mit mehr als drei Modulen, wobei ein Modul als Sammelmodul ausgebildet ist, zeigt,
Figur 5 ein System (einer Notlichtbeleuchtungsanlage) zeigen,
Figur 6 ein System (mit lighttpd-Webserver) zeigen,
Figur 7 ein System (mit Extern-WLAN-Verbindung) zeigt,
Figur 8 ein System (mit CC24-WLAN-Verbindung) zeigt,
Figur 9 einen ersten strukturellen Aufbau bezüglich der Schnittstellenkommunikation zwischen Modulen zeigt,
Figur 10 einen zweiten strukturellen Aufbau bezüglich der Schnittstellenkommunikation zwischen Modulen zeigt,
Figur 11 ein erstes Beispiel für eine Leuchte ohne Überwachung mit einem Leuchtmittel zeigt,
Figur 12 ein zweites Beispiel für eine Leuchte mit Überwachung und mit einem Leuchtmittel zeigt,
Figur 13 ein drittes Beispiel für eine Leuchte mit Überwachung und mehreren Leuchtmitteln zeigt,
Figur 14 ein Beispiel für eine Leuchte (Einzelbatterie) mit Überwachung und einem Leuchtmittel zeigt,

Figur 15 ein Beispiel für eine Leuchte (Einzelbatterie) mit Überwachung und mehreren Leuchtmitteln zeigt,

Figur 16 ein Beispiel für externe Komponenten zeigt,

Figur 17 ein Beispiel für eine Schienenverbindung in einer Anlage zeigt,

Figur 18 eine Eingangskennlinie zeigt,

Figur 19 DIN Timing (Zeitverhalten der digitalen Eingänge) zeigt,

Figur 20 ein Gerät (Format MU) zeigt,

Figur 21 sowie Figur 22 ein Gerät (Format RLED) zeigen,

Figur 23 ein Betriebsgerät (Format IL) zeigt und

Figur 24 sowie Figur 25 ein Betriebsgerät (Format KM) zeigen.

## Figurenbeschreibung

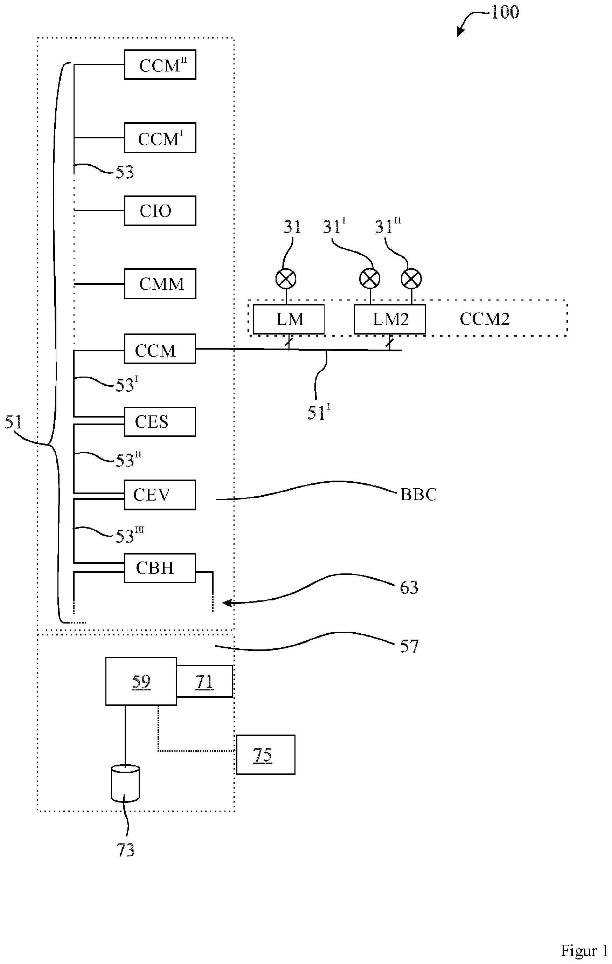

Die Figur 1 zeigt einen Bus, der auch als erster Anlagebus 51 bezeichnet werden kann, mit einigen Modulen CCM, CCM$^I$, CCM$^{II}$, CIO, CMM, CES, CEV, CBH, CCM2, LM, LM2, auf denen Szenarien übertragen werden können. Daneben ist ein weiterer Bus 51$^I$ in der Figur 1 zu sehen. Die Busse 51, 51$^I$ gehören zu einer Beleuchtungsanlage 100.

Die in der Figur gezeigte Ausgestaltungsmöglichkeit lässt sich auch mit weiteren Offenbarungen der Beschreibung in beliebiger Form verbinden.

Der erste Bus, der Anlagenbus 51 setzt sich aus Teil-Bussen 53, 53$^I$, 53$^{II}$, 53$^{III}$ zusammen. Die Teil-Busse 53, 53$^I$, 53", 53$^{III}$ sind in einer linearen Abfolge des ersten Anlagebus 51 zwischen Modulen CCM, CCM$^I$, CCM$^{II}$, CIO, CMM, CES, CEV, CBH angeordnet. Die Module CCM, CCM$^I$, CCM$^{II}$, CIO, CMM, CES, CEV, CBH, CCM2, LM, LM2 sind dezentral, z. B. über mehrere Räume eines Gebäudes verteilt, angeordnet. Es ist möglich, den Bus 51 mit mehreren Modulen (nicht dargestellt) in Räumen verschiedener Gebäude zu verbinden bzw. den Bus 51 durch diese Module hindurch zu schleifen. Außerdem sind Aufstellorte von an dem Bus 51 angeschlossenen Modulen außerhalb von Gebäuden möglich.

Auf dem Bus 51, einem I$^2$C-Bus, werden Szenarien übertragen. Die Szenarien werden als Instruktionsdatensätze, die Ereignis ausdrücken, und/oder als ein oder mehrere Ereignisse kodierende Datensätze auf dem Anlagenbus 51 übertragen.

Daneben gibt es einen zweiten Bus 51$^I$, der als Leuchtenbus bezeichnet werden kann. An dem Leuchtenbus 51$^I$ (bzw. Leuchten-Bus 51$^I$) sind die Module LM, LM2 angeschlossen. Auch weitere Module CCM2 können an dem Leuchten-Bus 51$^I$ angeschlossen werden.

Der Anlagenbus 51, der Leuchtenbus 51$^I$ und die Module CCM, CCM$^I$, CCM$^{II}$, CIO, CMM, CES, CEV, CBH, CCM2, LM, LM2 ergeben zusammen eine einfache Konfiguration einer verteilten Beleuchtungsanlage 100, die als Notlichtbeleuchtungsanlage nutzbar bzw. einsetzbar ist.

Ein erstes Core-Circuit-Modul CCM ist über den Leuchten-Bus 51$^I$ mit einem Leuchtmittel-Modul LM zur Versorgung eines Leuchtmittels 31 sowie mit einem Leuchtmittel-Duo-Netzmodul LM2 zur Versorgung von zwei Leuchtmitteln 31$^I$, 31$^{II}$ verbunden. Der Leuchten-Bus 51$^I$ ist ein von dem Anlagenbus 51 separierter Bus, auf dem ein eigenes Protokoll übertragen wird. Das Core-Circuit-Modul CCM arbeitet u. a. als Protokollumsetzer. Daten auf dem Anlagenbus 51 werden, sofern diese Daten an die Leuchten weiterzugeben ist, auf den Leuchtenbus 51$^I$ umgesetzt. Die Leuchtmittel-Module LM, LM2 sind so flexibel, dass sie an ein anderes Core-Circuit-Modul CCM$^I$ (bzw. CCM") angeschlossen sein können, das auch als Stromkreis-Modul bezeichnet werden kann. Der Anlagenbus 51 ist eine Datenübertragungsverbindung u. a. zwischen dem Core-Circuit-Modul CCM und den weiteren Core-Circuit-Modulen CCM$^I$, CCM". Die Core-Circuit-Module CCM, CCM$^I$, CCM" sind auf einem Prozessorboard BBC angeordnet. Durch den auf dem Prozessorboard BBC ausgebildeten Bus 51 ist auch ein Leuchten-Management-Modul CMM mit den Core-Circuit-Modulen CCM, CCM$^I$, CCM$^{II}$ verbunden. Vorteilhafterweise ist das Prozessorboard BBC mit einem Core-Input-Output-Modul CIO ausgestattet, über das verschiedene Schaltvorgänge realisierbar sind. Der Bus 51 ist durch mehrere Module CCM, CES, CEV auf dem Prozessorboard BBC durchgeschleift. Die Durchschleifung durch das Core Emergency Supply Modul CES, also durch das Modul mit einer Notstromquelle sowie die Durchschleifung durch das Netzteilmodul CEV sowie durch das Bus-Splitter-Modul CBH erlauben eine besonders gute Abstimmung während des Betriebs der Module bzw. Leuchtmittel 31, 31$^I$, 31$^{II}$, relevante Informationen können allen Modulen angeboten werden. Zu dem Prozessorboard BBC gehört ein Linux-Board 57. Auf dem Linux-Board 57 befindet sich ein an den Anlagenbus 51 angebundener Prozessor 59 des Typs Tx26. Auf dem Prozessor 59 läuft auch ein HTTP-Internet-Server 71. Mit Hilfe des Prozessors 59 können Daten, die über den Anlagenbus 51 zu dem Prozessor 59 gelangen, in einer Cloud 73 abgespeichert werden. Nutzereingaben, die der Prozessor 59 berücksichtigen und verarbeiten soll, sind über einen angeschlossenen Touch-Screen 75 möglich. Der Anlagenbus 51 ist ein offener Bus, der außerhalb der Anordnung der Module CCM, CCM$^I$, CCM$^{II}$, CIO, CMM, CES, CEV, CBH, CCM2, LM, LM2 nach Bedarf erweitert bzw. weitergeführt werden kann. Die in Figur 1 gezeigte Anschlussmöglichkeit 63 verdeutlicht, dass der Anlagenbus 51 auch durch geeignete externe Module (nicht dargestellt) durchgeschliffen oder mit vorteilhaften externen Modulen (nicht dargestellt) verbunden werden kann, deren Funktionen z. B. auf Wünsche von Betreibern einer Notlichtbeleuchtungsanlage abgestimmt sind. Die internen Module CCM, CCM$^I$, CCM$^{II}$,

CIO, CMM, CES, CEV, CBH, CCM2, LM, LM2 auf dem Anlagenbus 51 werden von an dem Bus 51 angeschlossenen bzw. anschließbaren externen Modulen nicht beeinträchtigt. Die internen Module CCM, CCM$^I$, CCM$^{II}$, CIO, CMM, CES, CEV, CBH, CCM2, LM, LM2 sind anhand ihrer elektronischen Bauteile sowie anhand der in ihnen abgespeicherten Prozessorprogrammierung dazu ausgestattet jeweils ihre eigene Funktion als auch die Funktion der mit ihnen über den Bus 51 kommunizierenden Module sowie die Funktionsfähigkeit des Busses 51 zu überwachen. Insbesondere durch die jeweils mit einer eigenen Programmierung ausgestatteten, eine eigene Kernfunktion umsetzende, autonom bzw. autark arbeitende Module CCM, CCM$^I$, CCM$^{II}$, CIO, CMM, CES, CEV, CBH, CCM2, LM, LM2 ergibt sich eine große Betriebssicherheit der Beleuchtungsanlage 100 gegenüber möglichen Störungen und eventuell auftretenden (vereinzelten) Fehlfunktionen.

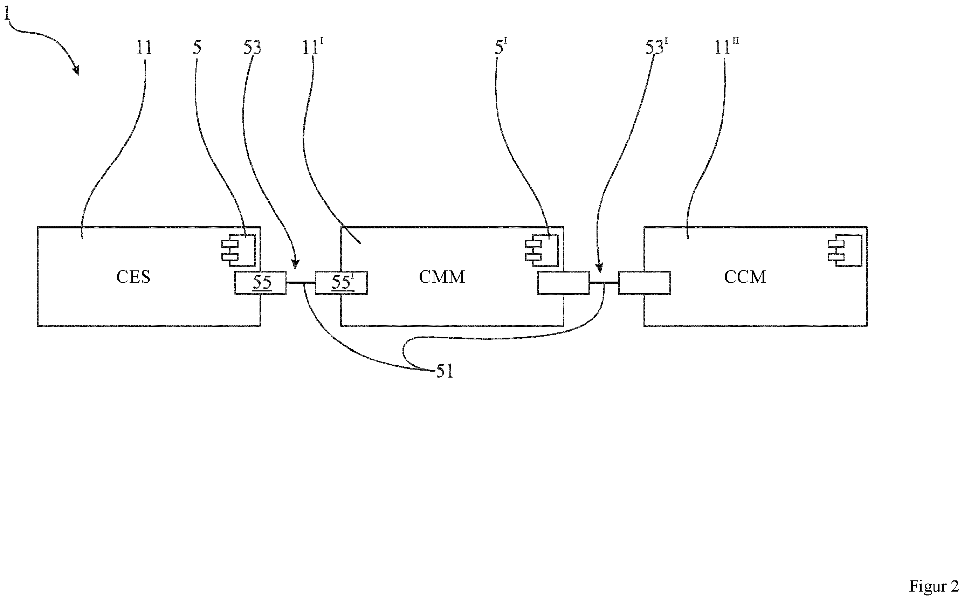

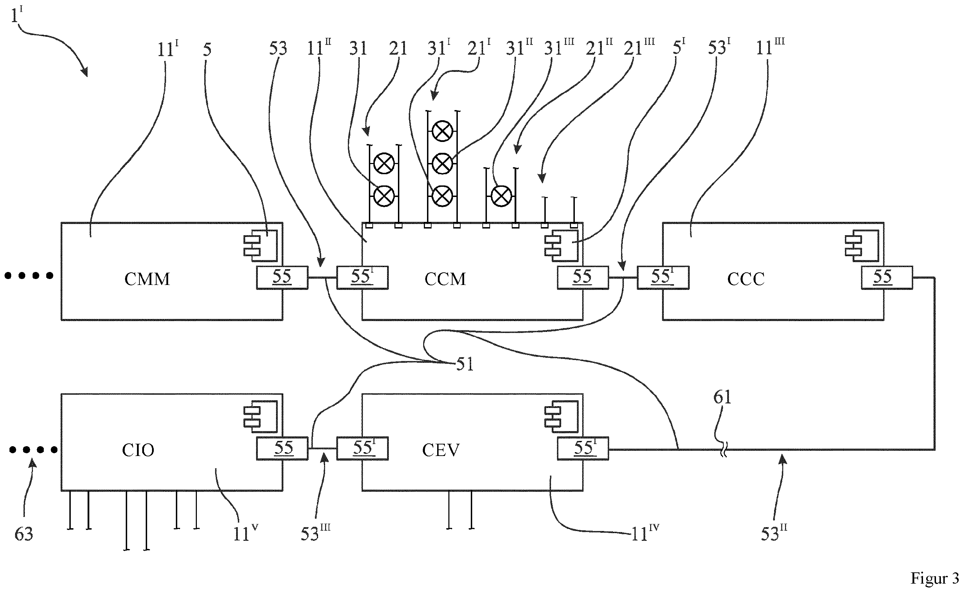

Figur 2 zeigt durch drei Module 11, 11$^I$, 11$^{II}$ realisierte Notlichtbeleuchtungsanlage 1. Die Module 11, 11$^I$, 11$^{II}$ weisen derart nach gleichartig entworfene Bauteilgruppen 5, 5$^I$ auf. Die Module 11, 11$^I$, 11$^{II}$ sind exemplarisch ausgewählt, weil sie eine vorteilhaft kompakte Notlichtbeleuchtungsanlage 1 bilden können. Die Bauteilgruppen 5, 5$^I$ dienen der Standardisierung des Aufbaus verschiedener Module 11, 11$^I$, 11$^{II}$ und erleichtern u. a. deren Herstellung. Ein erstes Modul 11, ein zweites Modul 11$^I$ und ein drittes Modul 11$^{II}$ stehen über einen Bus 51 miteinander in einer Datenübertragungsverbindung. Die Datenübertragung kann von dem ersten Modul 11 zum zweiten Modul 11$^I$ oder von dem zweiten Modul 11$^I$ zu dem ersten Modul 11 sowie dementsprechend zwischen dem zweiten Modul 11$^I$ und dem dritten Modul 11$^{II}$ erfolgen. Es kann auch gesagt werden, dass sich von einem ersten Anschluss 55 des ersten Moduls 11 zu einem zweiten Anschluss 55$^I$ des zweiten Moduls 11$^I$ ein Teil-Bus 53 erstreckt. Entsprechend ist zwischen dem zweiten Modul 11$^I$ und dem dritten Modul 11$^{II}$ ein zweiter Teil-Bus 53$^I$ vorhanden. Das erste Modul 11 ist ein Modul mit einer Notstromquelle, es kann auch als Modul CES bezeichnet werden. Das zweite Modul 11$^I$ ist ein Leuchtenmanagement-Modul CMM. Das dritte Modul 11$^{II}$ ist ein Stromkreis-Modul CCM. An dem Stromkreis-Modul CCM sind die Leuchten anschließen (nicht dargestellt). Diese drei Module können als Hutschienenbauteile zusammen mit zwei LAN-Kabeln einem Elektro-Installationsbetrieb ausgehändigt werden, der diese drei Module in einem Schaltschrank verbauen kann. Ausgehend von einer solchen Grundanordnung aus drei Modulen in Figur 2 lassen sich komplexere Anordnungen für Notlichtbeleuchtungsanlagen ausbilden, wie die in Figur 3 gezeigte Notlichtbeleuchtungsanlage 1$^I$.

Die erweiterbare Notlichtbeleuchtungsanlage 1$^I$, die in Figur 3 gezeigt ist, umfasst fünf Module 11$^I$, 11$^{II}$, 11$^{III}$ 11$^{IV}$, 11$^V$, die seriell mit Hilfe von Teil-Bussen 53, 53$^I$, 53", 53$^{III}$, die zu dem Anlagenbus 51 gehören, miteinander verbunden sind. Ein zu übertragendes Signal kann von Module 11$^I$, 11$^{II}$, 11$^{III}$, 11$^{IV}$, 11$^V$ zu Module 11$^I$, 11$^{II}$, 11$^{III}$, 11$^{IV}$, 11$^V$ gelange. Der Anlagenbus 51 ist durch alle Module 11$^I$, 11$^{II}$, 11$^{III}$, 11$^{IV}$, 11$^V$ durchgeschliffen. An dem ersten Modul 11$^I$ sowie an dem fünften Modul 11$^V$ sind jeweils Anschlussmöglichkeiten 63 für weitere Module (nicht eingezeichnet) dadurch ausgebildet, dass nicht alle Steckanschlüsse 55, 55$^I$ genutzt sind (es sind nur die bestehenden Anschlüsse markiert). Beispielsweise kann an das erste Modul 11$^I$ ein weiteres Modul, wie das Modul 11, das aus Figur 2 bekannt ist, angeschlossen sein bzw. werden, wodurch die Notlichtbeleuchtungsanlage 1$^I$ nach Figur 3 zu einer Erweiterung der Notlichtbeleuchtungsanlage 1 nach Figur 2 wird. Steckanschlüsse 55, 55$^I$ zwischen den Modulen 11$^I$, 11$^{II}$, 11$^{III}$, 11$^{IV}$, 11$^V$ in Figur 3 dienen paarweise zum Anschluss von Kablen, sodass sich die Teil-Busse 53, 53$^I$, 53", 53$^{III}$ zwischen den aufeinanderfolgenden Modulen 11$^I$, 11$^{II}$, 11$^{III}$, 11$^{IV}$, 11$^V$ ausbilden. Jedes Modul 11$^I$, 11$^{II}$, 11$^{III}$, 11$^{IV}$, 11$^V$ weist folglich zwei standardisierte Steckanschlüsse 55, 55$^I$ auf, über die das jeweilige Modul 11$^I$, 11$^{II}$, 11$^{III}$, 11$^{IV}$, 11$^V$ in den Anlagenbus 51 eingegliedert werden kann. Die Module, wie das erste Modul 11$^I$ und das zweite Modul 11$^{II}$, sind jeweils durch standardisierte Bauteilgruppen 5, 5$^I$ gefertigt, von denen in der Darstellung nur einige exemplarisch eingezeichnet sind. Von dem zweiten Modul 11$^{II}$ gehen Endstromkreise 21, 21$^I$, 21$^{II}$ ab, der der Stromversorgung von Notlichtleuchten 31, 31$^I$, 31$^{II}$, 31$^{III}$ dienen. Die Notlichtleuchten 31, 31$^I$, 31$^{II}$, 31$^{III}$ sind jeweils mit einem Mikrokontroller des Typs RX65N (Hersteller: Renesas Electronics Corp.) ausgestattet. In einem ersten Endstromkreis 21 werden zwei Notlichtleuchten, wie die Notlichtleuchte 31, betrieben. In einem zweiten Endstromkreis 21$^I$ werden drei Notlichtleuchten, wie die Notlichtleuchte 31$^I$ und die Notlichtleuchte 31$^{II}$, betrieben. Über einen dritten Endstromkreis wird eine einzelne Notlichtleuchte 31$^{III}$ mit Betriebsstrom versorgt. Das zweite Modul 11$^{III}$ weist zwei weitere Endstromkreise, wie den Endstromkreis 21$^{III}$, der auch als vierter Endstromkreis bezeichnet werden kann, auf. Der vierte Endstromkreis 21$^{III}$ dient der Versorgung eines Wächtermoduls zur sensorischen Überwachung der Umgebungsbedingungen. Es besteht die Möglichkeit, dass z. B. infolge von Baumaßnahmen in dem Anlagenbus 51, insbesondere in einem Teil-Bus wie dem Teil-Bus 53" eine Bus-Unterbrechung 61 entsteht. An der Busunterbrechungsstelle 61 wird eine Weiterleitung von Daten, die das dritte Modul 11$^{III}$ und das vierte Modul 11$^{IV}$ miteinander austauschen sollen, verhindert. Auf dem Teil-Bus 53" ist keine gültige Kommunikation möglich. Mit anderen Worten ist in der Notlichtbeleuchtungsanlage 1$^I$ ein Fehlerfall eingetreten, durch den eine Trennung zwischen zwei Modulen 11$^{III}$ 11$^{IV}$ eingetreten ist, von der auch die jeweils an diese zwei Module 1$^I$ 11$^{IV}$ angeschlossenen Module, wie die Module 11", 11$^V$, betroffen sind. Die Auswirkungen dieses Bus-Fehlers werden jedoch begrenzt, denn jedes der Module 11$^I$, 11$^{II}$, 1$^I$ 11$^{IV}$, 11$^V$ arbeitet autonom, auch ohne vorhandenen Bus.

Das erste Modul 11$^I$ in Figur 3 ist ein Leuchtenmanagement-Modul CMM. Das zweite Modul 11" ist ein Stromkreis-Modul CCM. Das dritte Modul 11$^{III}$ ist ein Modul zur Überwachung eines kritischen Kreises CCC. Das vierte Modul 11$^{IV}$ ist ein Netzteilmodul CEV. Das fünfte Modul 11$^V$ ist ein Core-Input-Output-Modul CIO. Wie bereits zu Figur 1 beschrieben wurde, sind diese Module CMM, CCM, CCC, CEV CIO mit elektronischen Bauteilen sowie mit einem Programm-Code für den jeweils vorhandenen Prozessor und mit Ereignis-Szenarien ausgestattet, die dem jeweiligen Modul vorgeben, wie es bei von dem Modul detektierten Ereignissen, im Fall von Figur 3 bei einer Unterbrechung von Bus 51 bzw. des Teil-Bus $53^{II}$, jeweils zu funktionieren hat. Die Module CMM, CCM, CCC, CEV CIO sind aufgrund ihrer Hardware- und Software-Ausstattung dazu ausgestattet, sowohl ihre eigene Funktion als auch die Funktion der mit ihnen über den Bus 51 kommunizierenden Module CMM, CCM, CCC, CEV CIO sowie die Funktionsfähigkeit des Busses 51 selbst zu überwachen. Eine jeweilige Prozessorprogrammierung der Module CMM, CCM, CCC, CEV CIO sieht vor, dass abhängig von einem erkannten Ereignis bzw. Event, das insbesondere über den Bus 51 signalisiert wird, eine Zuordnung des Ereignisses zu einem in einem Datenspeicher des jeweiligen Moduls CMM, CCM, CCC, CEV CIO abgespeicherten Szenario erfolgt und die Befehlsvorgaben des Szenarios abgearbeitet werden. Durch die Befehlsvorgaben werden die von dem Modul $11^1$, $11^{II}$, $11^{III}$ $11^{IV}$, $11^V$ abzuarbeitenden einzelnen oder mehreren Funktionen bestimmt, wie z. B. die Ausführung einer oder mehrerer Datenübertragungen auf dem Bus 51 oder wie z. B. die Einnahme eines Schaltzustands für den weiteren Betrieb des Moduls CMM, CCM, CCC, CEV CIO. Das Leuchtenmanagement-Modul CMM ist für übergeordnete Überwachungsaufgaben zwischen den vorhandenen, weiteren Modulen CCM, CCC, CEV CIO ausgestattet. Das Leuchtenmanagement-Modul CMM ist dazu ausgestattet, Testsignale über den Bus 51 zu schicken sowie die Funktion bzw. den Betriebszustand jedes einzelnen, in der Notlichtbeleuchtungsanlage vorhandenen Moduls, wie den Modulen CCM, CCC, CEV CIO, autonom selbsttätig oder nach Bedarf eines Nutzers abzufragen. Die auf die Abfrage hin empfangene Information bzw. Prozessdaten werden im Datenspeicher des Leuchtenmanagement-Moduls CMM gesammelt und in dessen Modulprozessor ausgewertet. Je nach Zuordnung zu einem der in dem Modul CMM vorgehaltenen Szenarien, wie ein Ausfall eines benachbarten Moduls CCM oder bei einem Ausfall einer Leuchte 31 an einem Modul CCM, kann beispielsweise von dem Modul CMM über eine Ausgabeeinheit, wie eine Schnittstelle, eine Ausgabe eines Ereignisberichts oder einer Fehlermeldung veranlasst werden.

In Figur 3 ist, wie bereits beschrieben wurde, ein eingetretenes Ereignis, nämlich eine Bus-Unterbrechung 61 in einem Teil-Bus $53^{II}$ dargestellt. Das Netzteilmodul CEV erkennt, dass Daten nicht über den angeschlossenen Teil-Bus $53^{II}$, wie üblich, zu dem benachbarten Modul zur Überwachung eines kritischen Kreises CCC gelangen können. Das hierfür in das Netzteilmodul CEV programmierte Szenario veranlasst das Netzteilmodul CEV, die Fehlerinformation über den noch bestehenden Teil-Bus $53^{III}$ an das mit dem Netzteilmodul CEV benachbart verbundene Core-Input-Output-Modul CIO zu schicken. Unabhängig von dem Netzteilmodul CEV erkennt auch das an den unterbrochenen Teil-Bus $53^{II}$ angeschlossene Modul zur Überwachung eines kritischen Kreises CCC, dass die Datenübertragung über diesen Teil-Bus $53^{II}$ nicht funktioniert. Das Szenario des Moduls zur Überwachung eines kritischen Kreises CCC veranlasst dieses Modul CCC die Stromfreischaltung des kritischen Kreises zu bewirken. Als eine zweite Szenario-Funktion sendet das Modul zur Überwachung eines kritischen Kreises CCC eine Fehlermeldung über den angeschlossenen, funktionierenden Teil-Bus $53^I$ aus. Diese Fehlermeldung betrifft nicht das Stromkreis-Modul CCM, weshalb das Szenario in dem Stromkreismodul CCM nur die Veranlassung einer Weiterleitung der Fehlermeldung auf dem funktionsfähigen Teil-Bus 53 zu dem Leuchtenmanagement-Modul CMM vorsieht. In dem Leuchtenmanagement-Modul CMM wird die Fehlermeldung wiederum über den Vergleich mit eigenen, vorgegebenen Szenarien ausgewertet.

Die Notlichtbeleuchtungsanlage $1^I$ gemäß Figur 3 kann sich über mehrere Zimmer, Flure, Etagen und/oder Gebäude erstrecken (nicht dargestellt), wobei die vorhandenen Module, wie die Module CMM, CCM, CCC, CEV CIO, in verschiedenen Gebäudebereichen angeordnet sein können. Module können aber auch kompakt in einer Notlichtbeleuchtungsanlage miteinander verbunden sein.

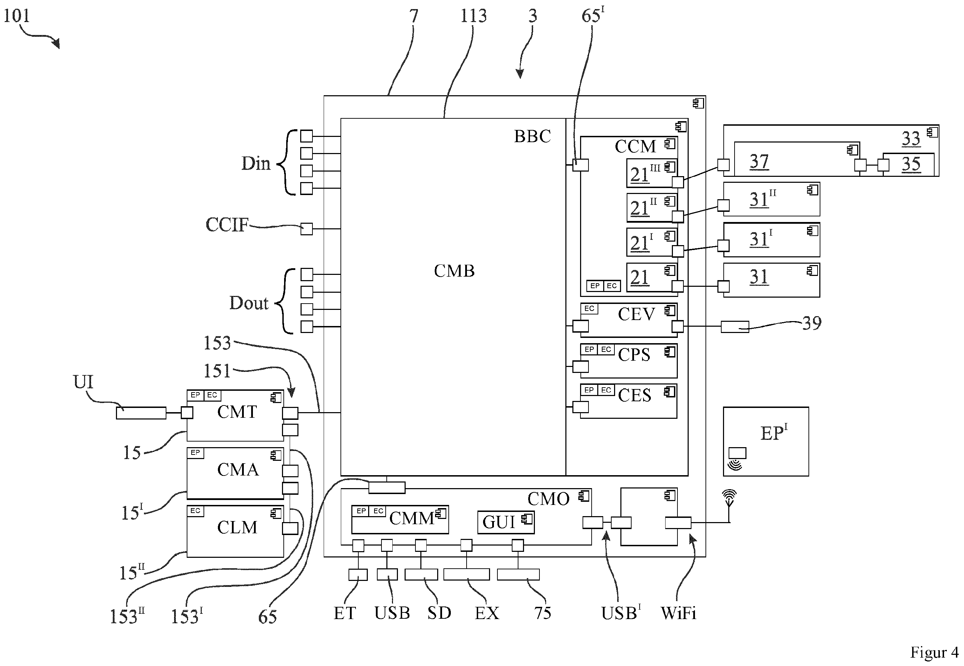

Figur 4 zeigt eine besonders leicht installierbare Notlichtbeleuchtungsanlage 101, die eine Kompakt-Anlage 3 umfasst. Die Kompakt-Anlage 3 bildet das Kernstück der Notlichtbeleuchtungsanlage 101. In einem Gehäuse 7 ist ein Prozessor-Board BBC und eine Computer-Modul-Platine CMO untergebracht. Das Prozessor-Board BBC und die Computer-Modul-Platine CMO sind über eine UART-Schnittstelle 65 miteinander verbunden. Über die Schnittstelle 65 kommuniziert das Mainboard-Modul CMB, bei dem es sich um ein Sammelmodul 113 des Base-Board-Controllers BBC handelt, mit der Computer-Modul-Platine CMO. Über weitere Schnittstellen, wie die Schnittstelle $65^I$ sind an das Mainboard-Modul CMB bzw. das Sammelmodul 113 weitere Module und zwar ein Core-Circuit-Modul CCM, ein Netzteilmodul CEV, ein Core-Power-Supply-Modul CPS und ein Core-Emergency-Supply-Modul CES angeschlossen. Das Sammelmodul 113 umfasst eine Mehrzahl von Einzelmodulen (nicht dargestellt) durch deren Zusammenarbeit die Funktionen des Prozessor-Board BCC realisiert sind. Das Sammelmodul 113 führt u.a. Anlagendaten zusammen und verarbeitet diese Anlagendaten weiter, u. a. zur Ausgabe von Zustands- und Steuerdaten der Anlage 101. Das Core-Circuit-Modul CCM ist für die Versorgung von bis zu 80 Leuchten, wie den Leuchten 31, $31^I$, $31^{II}$, 35 ausgelegt. In dem Beispiel von Figur 4 sind für die Stromversorgung der Leuchten 31, $31^I$, $31^{II}$, 35 vier Endstromkreise 21, $21^I$, $21^{II}$, $21^{III}$ des Core-Circuit-Moduls CCM vorhanden. Der vierte Stromkreis $21^{III}$ versorgt eine Leuchte 33, die ein Vorschaltgerät 37 und eine Notlichtleuchte, die mit mehreren LEDs 35 ausgestattet ist, umfasst. Das Netzteilmodul CEV weist einen 24-Volt-Kotrollausgang 39 auf. Auf der Computer-Modul-Platine CMO ist ein Leuchtenmanagement-Modul CMM und ein General User Interface GUI angeordnet. Zur externen Kommunikation ist die Computer-Modul-Platine CMO mit einem über das General User Interface GUI betreibbaren Ethernet-Modul ET, einem universeller-serieller-Bus-Modul USB, einem Speicherkartenmodul SD und einem Eingabebildschirm 75 sowie mit einem optionalen Erweiterungsanschluss EX ausgestattet. Außerdem ist die Computer-Modul-Platine CMO in dem Gehäuse 7 über ein universelles, serielles-Bus-Modul USB$^I$ mit einem drahtlosen Netzwerk-Modul WiFi verbunden. Das Netzwerk-Modul WiFi dient dazu, Funkdaten von außerhalb des Gehäuses 7 zu empfangen. Solche Funkdaten können beispielsweise von einer externen Ereignisquelle EP$^I$ per Funk übermittelt werden. Als eine mögliche Ereignisquelle könnte z. B. ein Wasserschadenmelder oder ein Blitzschlagmelder in Betracht kommen (beides nicht dargestellt). Das Mainboard-Modul CMB ist mit vier digitalen Eingängen D$_{in}$ und vier digitalen Ausgängen D$_{out}$ sowie mit einem Critical Circuit Interface Modul CCIF ausgestattet, deren Anschlüsse aus dem Gehäuse 7 herausführen. Außerdem ist der Base-Board-Controller BBC über einen ersten Teil-Bus 153 mit einem außerhalb des Gehäuses 7 befindlichen Meldetableau-Modul CMT verbunden, das ein User Interface UI aufweist. Der erste Teil-Bus 153 gehört zu einem Anlagenbus 151, der durch das Meldetableau-Modul CMT hindurch über einen zweiten Teil-Bus 153$^I$ zu einem Fernmeldeanzeige-Modul CMA und über einen dritten Teil-Bus 153$^{II}$ zu einem Core-Line-Monitor CLM durchgeschleift ist diese drei Module CMT, CMA, CLM sind externe Module 15, 15$^I$, 15$^{II}$. Eine erste Gruppe von Modulen, nämlich die Module CCM, CPS, CES, CMM, CMT, CMA, können jeweils als Quelle für Ereignissignale, wie systeminterne Zustands- und Fehlermeldungen. Dienen. Die Ereignissignale werden über einen oder mehrere Busse, wie den Bus 151, und/oder Schnittstellen, wie die Schnittstellen 65, 65$^I$, in der Notlichtbeleuchtungsanlage 101 mitgeteilt. Die Module CCM, CPS, CES, CMM, CMT, CMA der ersten Gruppe können auch Ereignis-Erzeuger EP (bzw. Ereignis-Erzeuger-Modulgruppe EP) bezeichnet werden. Eine zweite Gruppe von Modulen, nämlich die Module CCM, CEV, CPS, CES, CMM, CMT, CLM, die teilweise mit der ersten Gruppe von Modulen übereinstimmt, ist zur Verwertung von empfangenen Ereignissignalen und ggf. deren Weiterleitung ausgestattet. Die zweite Gruppe von Modulen CCM, CEV, CPS, CES, CMM, CMT, CLM kann auch kurz als Ereignis-Umsetzer EC (bzw. Ereignis-Umsetzer-Modulgruppe EC) bezeichnet werden. Über den Bus 151 extern oder über Schnittstellen 65, 65$^I$ intern übertragene Ereignisdaten können somit jeweils in den unterschiedlichen Modulen nach jeweils in den Modulen vorgehaltenen Szenarien modulspezifisch ausgewertet werden. Entsprechend zu den Modulen der Notlichtbeleuchtungsanlage 1$^I$ sind auch die Module der Notlichtbeleuchtungsanlage 101, wie die Module CCM, CPS, CES, CMM, CMT, CMA, CEV, CLM, dazu ausgestattet, autonom auf Ereignisse, wie Betriebsstörungen, Busunterbrechungen oder betriebsrelevante Änderungen von Umgebungsbedingungen, zu reagieren und ein jeweils geeignetes Szenario für den weiteren Modulbetrieb modulintern aufzurufen und abzuarbeiten.

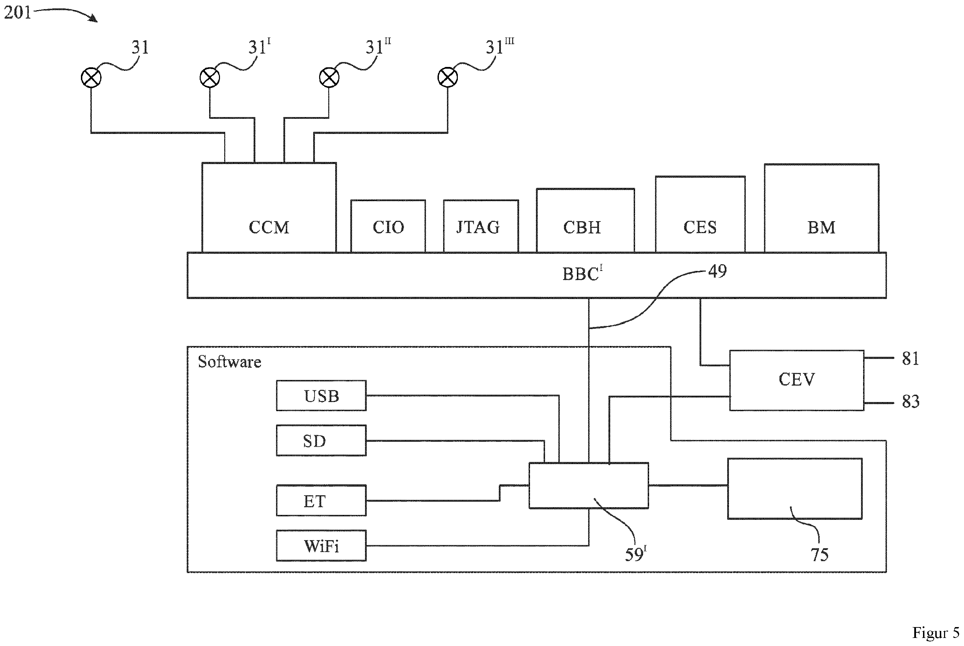

Ein weiteres Beispiel für eine vorteilhafte Notlichtbeleuchtungsanlage 201 zeigt Figur 5. Auf einem Base-Board-Controller BBC$^I$ befinden sich ein Boot-Management-Modul BM, ein Modul mit einer Notversorgungsmöglichkeit aus einer Notstromquelle CES, ein Bus-Splitter-Modul CBH, eine Schnittstelle JTAG, ein Core-Input-Output-Modul CIO und ein Core-Circuit-Modul CCM. Das Core-Circuit-Modul CCM dient der Versorgung von vier Notlichtleuchten 31, 31$^I$, 31$^{II}$, 31$^{III}$ mit elektrischem Strom. Der elektrische Strom wird von dem Base-Board-Controller BBC über ein Netzteilmodul CEV aus dem Stromnetz 81 bzw. aus einer Batterie 83 bezogen. Das Netzteilmodul CEV versorgt außerdem einen Prozessor 59$^I$ mit Betriebsstrom. Der Prozessor 59$^I$ dient zum Betrieb eines universellen seriellen Bus-Moduls USB, eines Speicherkarten-Moduls SD, eines Ethernet-Moduls ET und eines drahtlosen Netzwerk-Moduls WiFi sowie eines Eingabebildschirms 75. Der Prozessor 59$^I$ arbeitet mit einer für die Ansteuerung dieser Module USB, SD, ET, WiFi, 75 geeigneten Software. Übertragung von Daten zwischen dem Prozessor 59$^I$ und dem Base-Board-Controller BBC erfolgt über den Daten-Bus 49.

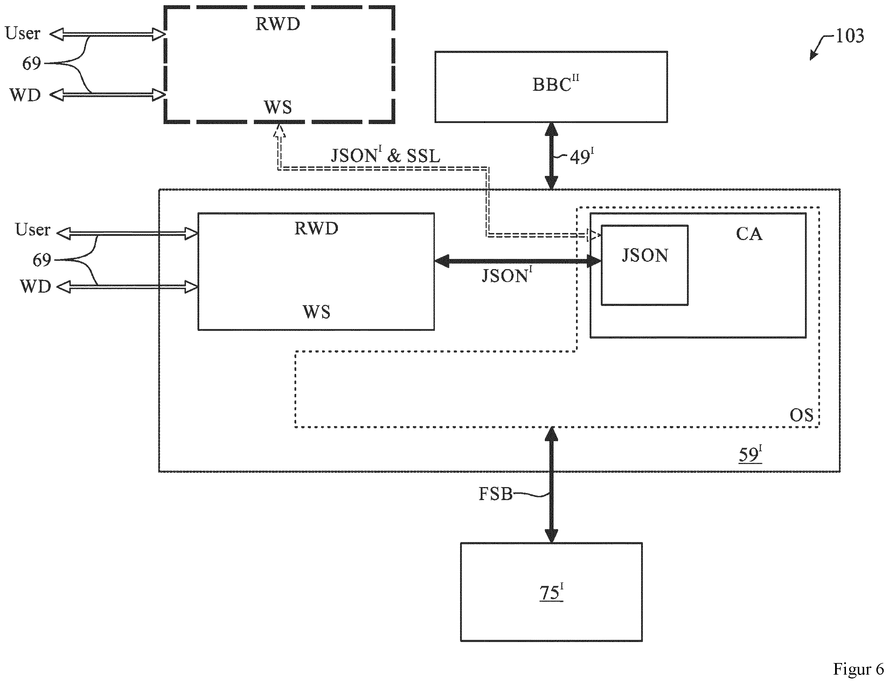

Eine für die externe Kommunikation des Base-Board-Controllers BBC" einer Kompaktanlage 103 geeignete, betriebssichere Software-Konfiguration ist in Figur 6 schematisch dargestellt. Ein Datenbus 49$^I$ dient der Datenübertragung zwischen dem Base-Board-Controller BBC$^{II}$ und einem Prozessor 59$^I$. Der Prozessor 59$^I$ arbeitet mit einem Linux-Betriebssystem OS. Auf das Linux-Betriebssystem OS ist eine Core-App CA aufgesetzt, die ein Java-Skript-Object-Notation-Interface JSON realisiert. Von der Core-App CA werden Daten in dem Java-Skript-Object-Notation-Datenformat JSON$^I$ auf einen lighttpd-Webserver WS übertragen, der zum Betrieb mit einer Responsiven Webdesign-Software RWD ausgestattet ist.

Über den lighttpd-Webserver WS werden die Daten in das HTTP-Datenformat 69 transponiert. Neben einer Option, bei der sich der Webserver WS innerhalb der Kompaktanlage 103 befindet, kann sich der Webserver WS auch in einem Gerät außerhalb der Kompaktanlage 103 bzw. auf einem anderen Rechner befinden. Hierbei werden vorzugsweise Daten in dem Datenformat JSON$^I$ mithilfe eines Sicherheitsprotokolls Security-Socket-Layer SSL übertragen. Die über das Responsive-Webdesign RWD in das HTTP-Datenformat 69 gewandelten Daten können einem Nutzer bzw. User oder einem für drahtlose Kommunikation ausgestatteten weiteren Verarbeitungsgerät WD zugeführt werden bzw. von diesem unter Verwendung des http-Datenformat 69 zur Eingabe in umgekehrter Übertragungsrichtung in die Kompaktanlage 103 eingespeist werden. Außerdem ist vorgesehen, dass die Kompaktanlage 103 über eine direkte Front-Side-Bus-Schnittstelle FSB mittels Touch-Screen 75$^I$ bedienbar ist.

Das modulare System einer Notlichtbeleuchtungsanlage soll an verschiedene Größenanforderungen anpassbar sein. Eine Ausführungsform für Kompaktanlagen ist vorgesehen, die im Folgenden auch als Core-Compact-24 bezeichnet, abgekürzt CC24, ein Notbeleuchtungssystem für kleine bis mittlere Unternehmen zur Verfügung stellt. Es wird durch eine 24-Volt-Batterie versorgt und kann bis zu 80 Lichter für 1, 3 und 8 Stunden in einer Notsituation unterstützen. Es ist eine Touchscreen-Benutzeroberfläche vorgesehen und stellt den Benutzern notwendige Betriebsinformationen zur Verfügung, z. B. Konfigurationseinstellung, Lichterstatus usw. und Testergebnisse.

Mit Hilfe einer Selbsttestfunktion werden die Batterieleistung und die einzelnen Lichter in regelmäßigen Zeitabständen geprüft und Berichte erstellt. Im Falle eines Testfehlers wird das System dem Benutzer in angemessener Zeit (entsprechend IEC-Standardisierung) mit einem Fehlerbericht benachrichtigen. Es umfasst eine Wireless-Karte und kann mit einer auf dem Benutzergeräte laufenden Anwendung kommunizieren, so können Testergebnisse, Software Updates und Konfigurationen gemeldet werden.

Das System ist in Figur 5 schematisch dargestellt.

Als Base-Board-Controller (BBC) wird bevorzugt ein NXP-Mikrocontroller (Cortex LPC54100 MCU) vorgesehen. Dieser steuert und kommuniziert mit den Peripheriegeräten und Komponenten des Systems auf der Hardware-Ebene. Es kommuniziert auch über UART RS232 mit dem Mikrocontroller-Board (z. B. mit einem Rasberry Pi Zero mit einem Adapter UART RS232) TX6 Ultra Lite.TX6 Ultra Lite ist ein i.MX28 Applikationsprozessor, der Linux Long Term Support (LTS) 4.4 Betriebssystem hostet.

Der Touchscreen-LCD ist das primäre mittel der Benutzeroberfläche für CC24 Produkte, welche dem Benutzer den Test zu initiieren und eine grundlegende Steuerung ermöglicht. (Benutzer Level: Master, Service, Kunde, Wartung, Facility Manager)

Ethernet und W-Lan (auch "WLAN" landläufig geschrieben) sind CC24-Netzwerkanschluss-Peripheriegeräte. Die Benutzeranwendung kann über eine drahtlose Verbindung oder eine Ethernet-Buchse RJ45 mit dem lighttpd kommunizieren, wenn diese sich auf dem CC24 befindet. Wenn sich das lighttpd jedoch außerhalb des CC24 befindet, wird die Ethernet-Verbindung verwendet, um dieses Modul mit der JSON-Schnittstelle auf der CORE App zu verbinden.

USB- und SD-Karten-Schnittstellen bereichern das Gerät mit zusätzlichen Kommunikationsschnittstellen. Sie können verwendet werden, um den Gerätespeicher zu erhöhen, das Betriebssystem zu aktualisieren, die Möglichkeit zu schaffen, neue Funktionalität hinzuzufügen und zusätzliche externe HWs-Peripheriegeräte zu verbinden (z. B. Maus, Tastatur, ...)

CC24 bietet Notfallbeleuchtung bei Stromausfall. Die angeschlossenen Lampen können als Standardleuchten in einer normalen Situation verwendet werden. Im normalen Betriebsmodus werden die Lampen über Standardschalter über die CC24 Digital Input Konnektors gesteuert. CC24 prüft die Notbeleuchtung (Lampen und Batterien) in regelmäßigen Abständen und bietet den Nutzern Ergebnisse. Das Bedienfeld enthält Indikatoren, die den Status des Systems klar und eindeutig widerspiegeln. Im Falle eines katastrophalen Softwarefehlers wird CC24 bei Notstromausfall eine Notfallbeleuchtung zur Verfügung stellen. CC24 ist in der Lage, eine Verbindung zu anderen CC24-Systemen herzustellen und ein Netzwerk zu erstellen. Die Benutzeranwendung kann verwendet werden, um das CC24-System zu installieren, zu initiieren, zu konfigurieren, zu testen und zu steuern.

Das "TX6 Ultra Light" verfügt über eine Reihe von klaren Schnittstellen für die Kommunikation mit der BBC. Sie kommunizieren über UART- oder einem RS232-Protokoll. Die Hauptanwendung ("CORE-App") startet automatisch nach dem Start des Betriebssystems. Es überwacht alle Kommunikationsschnittstellen und Steckdosen. Es reagiert und kommuniziert mit dem Web-Server "lighttpd" über seine JSON-Schnittstelle mit dem Java-Script-Object Notation-Datenformat (JSON-Dateiformat).

Wie in Figur 6 dargestellt, kann sich der lighttpd Webserver innerhalb von CC24 befinden und neben der CORE App Applikation laufen oder auf einem anderen Rechner befinden. Im letzteren Falle ist das Security Socket Layer (SSL) Sicherheitsprotokoll für seine JSON-Schnittstelle mit der CORE App erforderlich. Als Benutzeroberfläche ist eine Web-Anwendung, von Bootstrap erstellt, vorgesehen. Sie ermöglicht dem Benutzer das System zu installieren, konfigurieren, testen und neue Leuchten hinzufügen. Während eines Notfallauftritts muss der TX6UL in Betrieb bleiben, um seine Aufgaben zu erfüllen, d. h. Test-Prozesse, falls vorhanden abstellen, die Notleuchten einschalten, Warnmeldungen an den Benutzer senden usw.. Um den Leistungsverbrauch zu reduzieren, kann er auch in seinen energiesparenden Modus wechseln, welche die CPU-Geschwindigkeit reduziert und die Touchscreen-Hintergrundbeleuchtung dimmt.

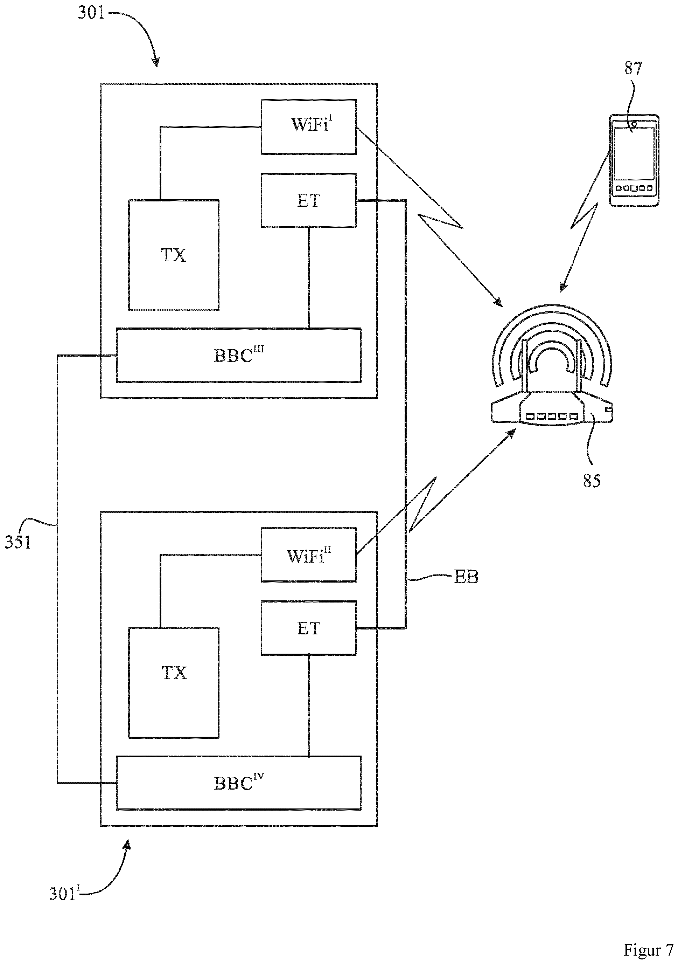

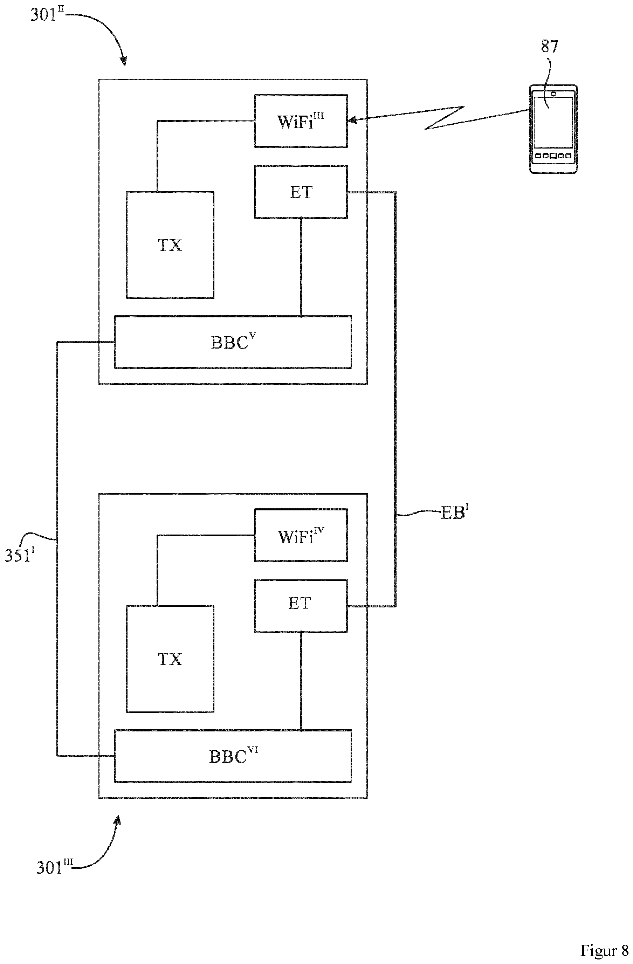

Figur 7 sowie Figur 8: Es sind in einer bevorzugten Ausführung WLAN-Schnittstellen WiFi[I], WiFi[II] vorgesehen. Das Ublox-Wi-Fi-Modul kann als ein Access Point oder ein CLIENT konfiguriert werden, um mit einer CC24-Anwendung zu kommunizieren, die auf einem externen Gerät läuft, z. B. Smartphone oder Tablet 87. Bei einer externen Wi-Fi-Netzwerkverfügbarkeit können die auf dem Smart-Gerät ausgeführten CC24-Apps über das verfügbare WLAN mit allen CC24-Geräten in der Notlichtbeleuchtungsanlage kommunizieren. In diesem Fall ist CC24 als CLIENT konfiguriert. Wenn kein externes WLAN-Netzwerk verfügbar ist, ist das CC24 hingegen als ACCESS POINT konfiguriert und stellt ein WLAN-Netzwerk für das Mobilgerät 87 oder den NOTEBOOKS bereit. CC24-Einheiten können auch über ein Ethernet-Kabel miteinander verbunden werden. Wi-Fi und Ethernet ET werden hauptsächlich für die Kommunikation mit der Anwendungsschicht verwendet. BBC-Module BBC[III], BBC[IV] sind über den CORE-Bus 351 miteinander verbunden. In Fällen, in denen CORE-Bus 351 nicht verfügbar ist, können sie über die Ethernet-Kabelverbindung (Core Over IP) miteinander kommunizieren.

Wie gesagt, die Figuren 7 und 8 können gemeinsam betrachtet werden. Beide Figuren 7, 8 stellen zwei Notlichtbeleuchtungsanlagen 301, 301[I], 301[II], 301[III], die untereinander gekoppelt sind, dar. Aufgrund der verwendeten Base-Board-Controller BBC[III], BBC[IV], BBC[V], BBC[VI] handelt es sich bei allen Notlichtbeleuchtungsanlagen 301, 301[I],

$301^{II}$, $301^{III}$, um kompakte Modulanlangen, die untereinander über einen extern geführten, mit dem internen geführten Anlagenbus identischen Anlagenbus 351, $351^{I}$ verbunden sind. Neben dem Anlagenbus 351, $351^{I}$ gibt es noch einen Ethernet-Bus EB, $EB^{I}$, durch den ebenfalls die Notlichtbeleuchtungsanlagen 301, $301^{I}$, $301^{II}$, $301^{III}$, miteinander verbunden sind. Außerdem hat jede Notlichtbeleuchtungsanlage als Teil ihres Prozessorboards $BBC^{III}$, $BBC^{IV}$, $BBC^{V}$, $BBC^{VI}$ ein WiFi-Modul $WiFi^{I}$, $WiFi^{II}$, $WiFi^{III}$, $WiFi^{IV}$. Somit gibt es für jede Notlichtbeleuchtungsanlage 301, $301^{I}$, $301^{II}$, $301^{III}$ drei verschiedene Kommunikationswege, über die Befehle und Ereignisse (Events) von einer Notlichtbeleuchtungsanlage 301, $301^{I}$, $301^{II}$, $301^{III}$ auf eine andere Anlage bzw. Notlichtbeleuchtungsanlage 301, $301^{I}$, $301^{II}$, $301^{III}$, übertragen werden kann. Für die Kommunikation kann ein WLAN-Router 85 vorgesehen sein. Kommunikation funktioniert aber auch, wenn kein WLAN-Router 85 vorhanden ist. In einem solchen Fall kommuniziert das Smart-Gerät 87 nicht über den WLAN-Router 85 mit den Notlichtbeleuchtungsablagen 301, $301^{I}$, $301^{II}$, $301^{III}$, sondern unmittelbar mit einer der Notlichtanlagen, nämlich mit der Notlichtanlage $301^{II}$. Über die anderen Kommunikationskanäle bzw. Kommunikationsverbindungen Anlagenbus $351^{I}$ bzw. Ethernet-Bus $EB^{I}$ können die Informationen weitergegeben werden. So kann ein Prozessor-Modul TX einer ersten Notlichtbeleuchtungsanlage 301 auch die Daten einer zweiten Notlichtbeleuchtungsanlage $301^{I}$ verarbeiten bzw. internen Geräten wie einem Smart-Gerät 87 zur Verfügung stellen. Sobald ein Smart-Gerät 87 mit einer der Notlichtbeleuchtungsanlagen 301, $301^{I}$, $301^{II}$, $301^{III}$, eine stehende Verbindung hat, z. B. über das WiFi-Modul $WiFi^{III}$, kann das Smart-Gerät 87 auch die Daten, Informationen, Zustände, Ereignisse und Informationen von den übrigen Notlichtbeleuchtungsanlagen 301, $301^{I}$, $301^{II}$, $301^{III}$, neben der ersten Notlichtbeleuchtungsanlage 301 (bzw. 301") abrufen.

Auf diese Weise kann, weil der interne Bus als externer Anlagenbus 351, $351^{I}$ weitergeführt ist, eine beliebige Vernetzung durchgeführt werden.

USB-Ports, SD-Karten-Anschluss, Ethernet und W-Lan sind die Kommunikationsmittel mit diesem Gerät sowie dem Touchscreen.

Nachfolgend wird ein Beispiel für einen Funktionstest der Notlichtbeleuchtungsanlage erläutert. Er wird immer auf Kreisebene durchgeführt (nicht auf der Leuchtengruppe-Ebene). Es müssen die gleichen Bedingungen wie im Notbetrieb herrschen. Ein Funktionstest von einzelnen Leuchtengruppen stellt eine Komfort-Funktion dar. Der Funktionstest soll alle Komponenten auf korrekte Funktion prüfen. Korrekte Funktion bedeutet, dass der Notbetrieb durchgeführt werden kann und ordnungsgemäß funktioniert.

**Ablauf: Funktionstest der Notlichtbeleuchtungsanlage**

- Anstehende Fehlermeldungen prüfen Register 102 (BBC Fehler) und CMM-Modul Fehlerspeicher.
- Netzspannung prüfen innerhalb von 230 V ($\pm$ 15 V) $\rightarrow$ Wertebereich OEM Tabelle Register 401.
- Batteriespannung prüfen innerhalb von TBD und TBD V $\rightarrow$ Wertebereich OEM Tabelle Register 301.
- Zustand der Eingänge prüfen Critical Circuit (500, 501), usw. Digitale Eingänge (600, 601, 603).
- Auswertung der Prüfergebnisse Test möglich ? nein, mit entsprechenden Hinweisen (z. B. warum), Meldungen abbrechen ja, weiter.
- Beleuchtungsszene speichern Zustand der Leuchten vor dem Test (nicht mehr notwendig $\rightarrow$ Szenenauswertungsalgorithmus löst die aktiven Szenen immer korrekt auf).
- Fehler, die beim Funktionstest gefunden werden, zurücksetzen.
- Zustand der Kreise abfragen, Zustand der Sicherungen, Anzahl der Leuchten, Ausgangsspannung, -strom aufzeichnen Register 206, 207, 208.
- Zustand der Leuchten abfragen, Temperatur, Eingangsspannung, -strom Leuchtmittelspannung, -strom Leuchtmittelzustand.
- Vorwärmung aktivieren Alle Leuchten mit Helligkeit 15 einschalten (Notlicht hat höchste Priorität) Szene MAX (65536) Notlichtszene in allen Stromkreisen aktivieren.
- Adaptive Vorwärmung -> Leuchten auf eine bestimmte Temperatur bringen. Vorwärmen, bis alle Leuchten die Mindesttemperatur erreicht haben
- Vorwärmung abbrechen / überspringen Notlichtszene deaktivieren Dokumentieren.
- Zustand der Leuchten abfragen: Temperatur, Eingangsspannung, -strom Leuchtmittelspannung, -strom Leuchtmittelzustand, Helligkeit usw.
- Netzversorgung unterbrechen, auf Batteriebetrieb umschalten.
- Zustand der Leuchten abfragen: Temperatur, Eingangsspannung, -strom Leuchtmittelspannung, -strom Leuchtmittelzustand.
- Die Testdauer im Batteriebetrieb darf 36 Sekunden nicht überschreiten ($\rightarrow$ keine Testwiederholung in 24h, bei Abbruch).
- Ergebnisse auswerten und protokollieren.

- Gefundene Fehler im Fehlerspeicher vermerken.
- Gespeicherte Beleuchtungsszene wiederherstellen (Notlichtszene deaktivieren).

Was passiert beim Netzausfall während des Tests?
Netzausfall wird im Testergebnis vermerkt; Notlichtszene wird fortgeführt und Test wird abgebrochen; Rahmenbedingung zur Testwiederholung beachten!

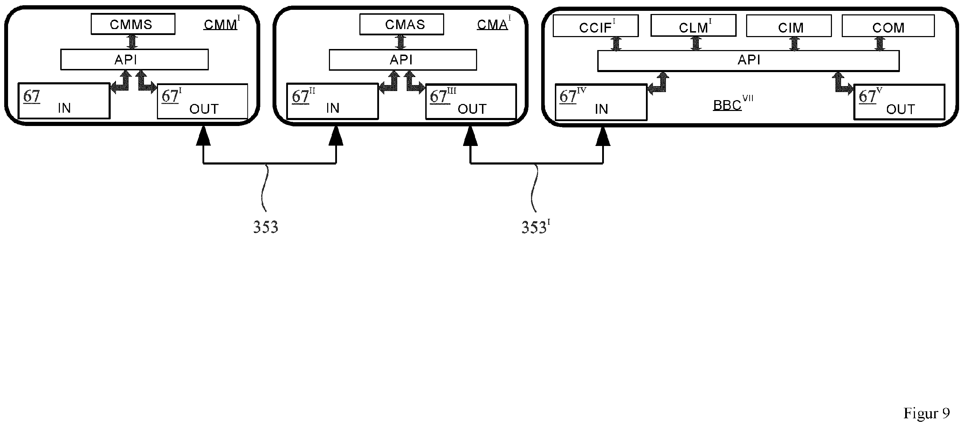

Figur 9 zeigt einen strukturellen Aufbau für die Kommunikation zwischen einem Base-Board-Controller BBC$^{VII}$, einem Fernmeldeanzeige-Modul CMA$^I$ und einem Leuchtenmanagement-Modul CMM$^I$. Die drei Module BBC$^{VII}$, CMA$^I$, CMM$^I$ sind softwaremäßig in ein Core Bus Application Programming Interface API eingebunden. Das Core Bus Application Programming Interface API besorgt den Austausch von Daten über Schnittstellen 67, 67$^I$, 67$^{II}$, 67$^{III}$, 67$^{IV}$, 67$^V$, die paarweise zu den jeweiligen Modulen BBC$^{VII}$, CMA$^I$, CMM$^I$ gehören und je nach Übertragungsrichtung als Eingang IN oder als Ausgang OUT operieren können. Eine zweite Schnittstelle 67$^I$ des Leuchtenmanagement-Moduls CMM$^I$ ist über einen ersten Teil-Bus 353 mit einer ersten Schnittstelle 67$^{II}$ des Fernmeldeanzeige-Moduls CMA$^I$ verbunden. Eine zweite Schnittstelle 67$^{III}$ des Fernmeldeanzeige-Moduls CMA$^I$ ist über einen zweiten Teil-Bus 353$^I$ mit einer ersten Schnittstelle 67$^{IV}$ des Base-Board-Controllers BBC$^{VII}$ verbunden. Die Teil-Busse 353, 353$^I$ sind vom Typ RS-422. Das Core Bus Application Programming Interface API läuft auf dem Leuchtenmanagement-Modul CMM$^I$ unter der darauf installierten Leuchtenmanagement-Modul- Steuersoftware CMMS. Das Core Bus Application Programming Interface API läuft auf dem Fernmeldeanzeige-Modul CMA$^I$ unter der darauf installierten Fernmeldeanzeige-Modul Steuersoftware CMAS. Der Base-Board-Controller BBC$^{VII}$ umfasst ein Critical Circuit Interface Modul CCIF$^I$, ein Core Line-Monitor Modul CLM$^I$, ein Eingangs-Modul CIM und ein Ausgangs-Modul COM, die mittels Core Bus Application Programming Interface API auf dem Base-Board-Controller BBC$^{VII}$ zusammenarbeiten.

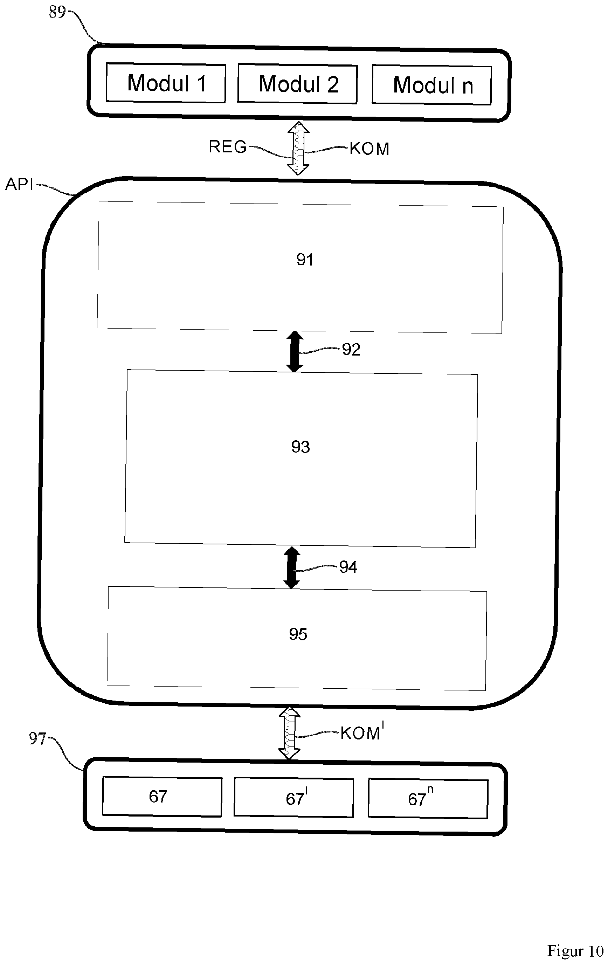

Figur 10 zeigt schematisch die Zusammenarbeit einer Anwendungssoftware 89, die mehrere Module wie Modul 1, Modul 2 und je nach vorhandener Anzahl n von Modulen zusätzlich weitere Module bis Modul n, adressieren kann, mit dem Core Bus Application Programming Interface API und der Hardware 97. Die Anwendungssoftware 89 und das Core Bus Application Programming Interface API stehen mit einander in Kommunikation KOM, wobei insbesondere die Registrierung REG der vorhandenen Module erfolgt. Das Core Bus Application Programming Interface API übernimmt

- die Modulverwaltung 91 mit den Softwaremodulen:

    - Registrierungseinheit
    - Adressverwaltung
    - Verteilung der Core Bus Pakete
    - Zwischenspeicher (Ringpuffer für jedes Modul)

- die Paketverwaltung 93 mit den Softwaremodulen:

    - CRC Generator
    - Paketkontrolle (CRC, Plausibilität)
    - Sende-Zwischenspeicher
    - Serializer und Deserializer
    - Fehlerbehandlung
    - Core Bus Paket Generator für Fehlermeldungen
    - Stream Synchronisierung
      sowie

- die Schnittstellenverwaltung 95 mit den Softwaremodulen:

    - Stream Kontrolle (Timeout Detektion)
    - Sendepuffer (Ringbuffer für jede Schnittstelle)
    - Empfangspuffer (Ringpuffer für jede Schnittstelle).

Zwischen der Modulverwaltung 93 und der Paketverwaltung 95 erfolgt ein Austausch von Nachrichten 92. Zwischen der Paketverwaltung 95 und der Schnittstellenverwaltung 95 erfolgt ein Austausch von Byte Stream und Status 94. Das Core Bus Application Programming Interface API besorgt somit die Kommunikation KOM$^I$ mit den vorhandenen Schnittstellen 67, 67$^I$, 67$^n$ der Hardware 97.

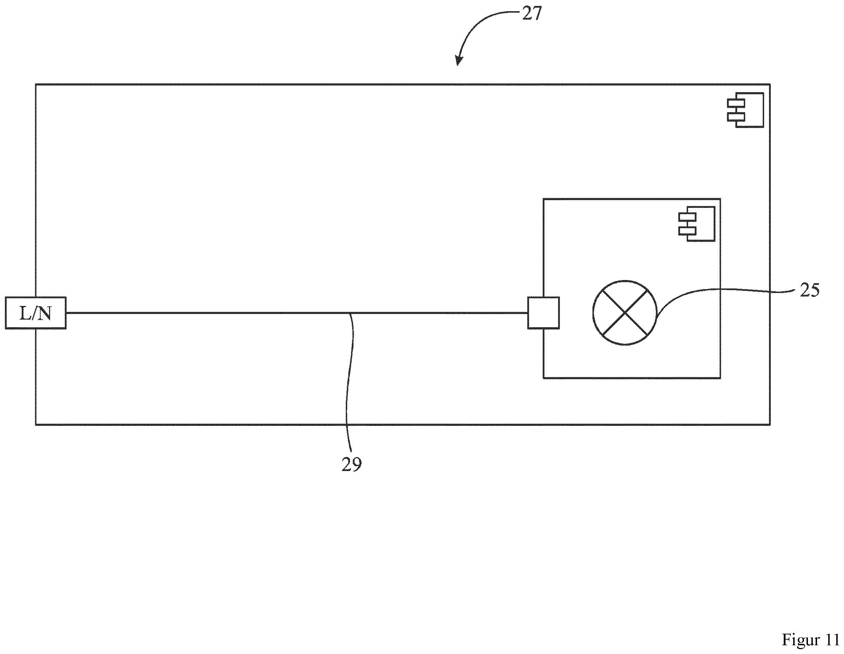

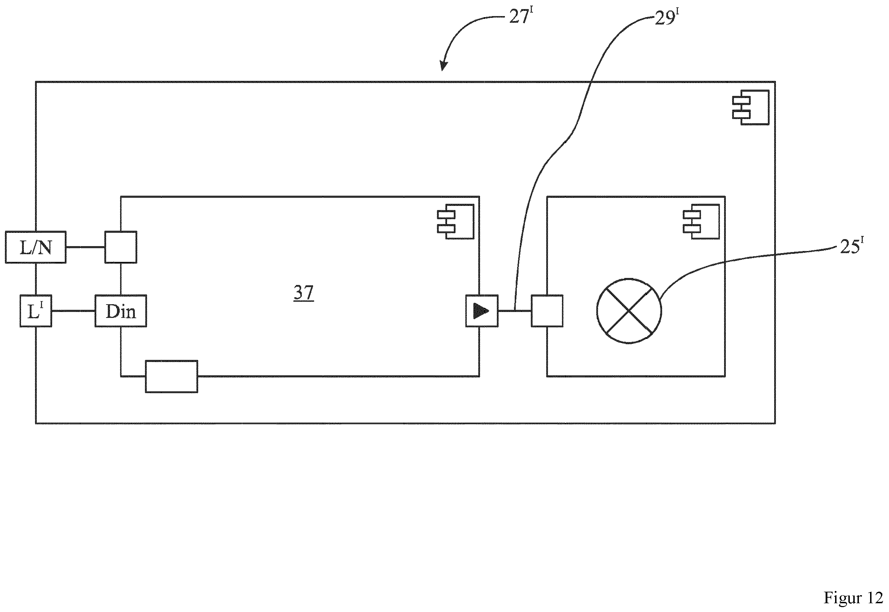

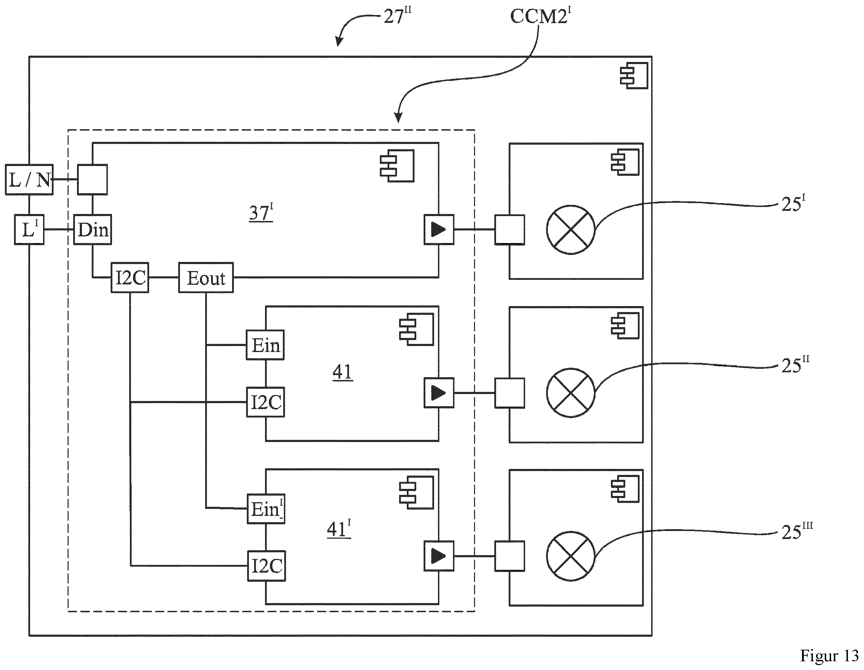

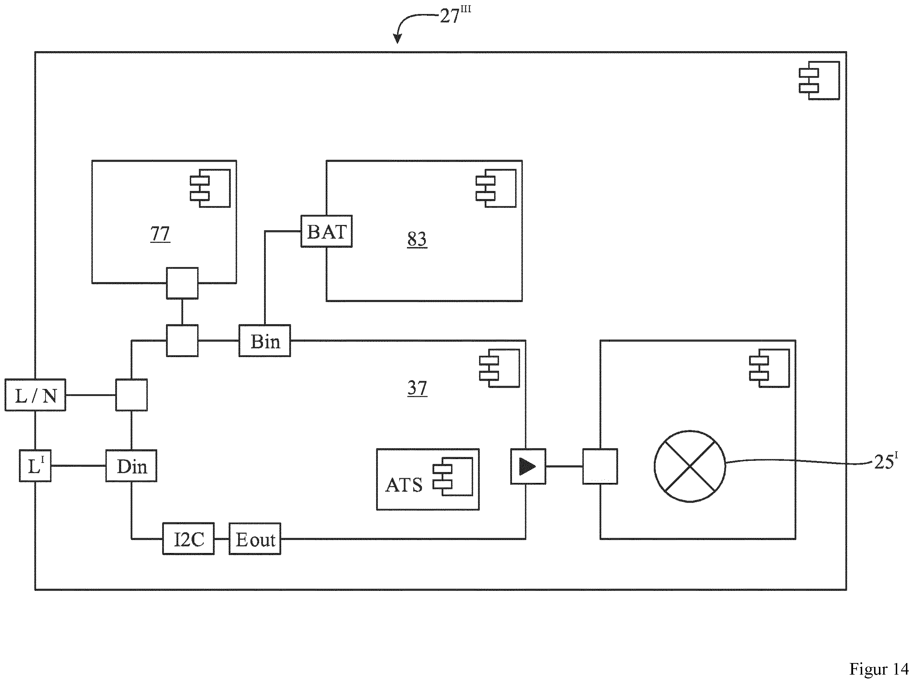

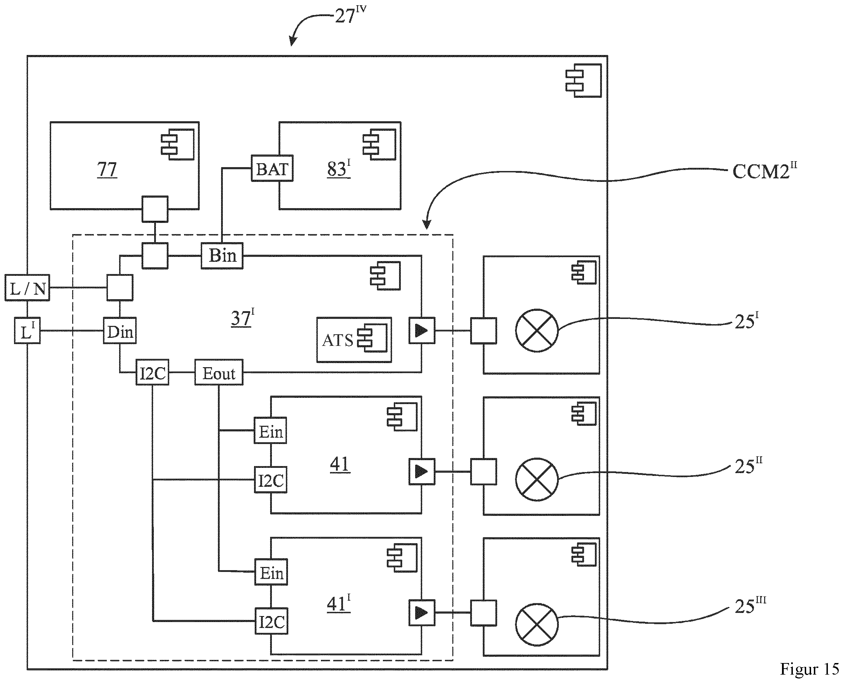

Nachfolgend Beispiele für Leuchten, Leuchte 27 in Figur 11, Leuchte 27' in Figur 12, Leuchte 27$^{II}$ in Figur 13, Leuchte 27$^{III}$ in Figur 14 und Leuchte 27$^{IV}$ in Figur 15:

### 1. Zentralbatterie-versorgte Notlichtleuchten

Figur 11: Im ersten Beispiel wird ein geeignetes Leuchtmittel 25 direkt am Stromkreis L/N über eine Leitung 29 angeschlossen. Eine Einzelüberwachung ist nicht möglich. Nur eine Stromüberwachung (SÜ) im Stromkreis ist vorsehbar. Die Zuverlässigkeit der SÜ hängt von der Stromaufnahme und der Genauigkeit der Messung ab - eine ausgefallene Leuchte, wie ggf. die Leuchte 27, muss z. B. bei 20 Leuchten im Stromkreis erkannt werden.

Figur 12: Im zweiten Beispiel wird ein Leuchtmittel $25^I$ über ein Vorschaltgerät 37 am Stromkreis L/N betrieben. Das Vorschaltgerät 37 enthält einen digitalen Eingang Din, der vom Stromkreis-Modul ausgewertet wird. Eine Einzelüberwachung ist möglich. Eine Stromüberwachung wäre theoretisch möglich, ist aber nicht sinnvoll, da die Einzelüberwachung genauer und zuverlässiger arbeitet. Das Vorschaltgerät 37 liefert über eine Leitung $29^I$ Strom zum Leuchtmittel $25^I$. Die Leuchte 27' weist einen Schalteingang $L^I$ auf.

Figur 13: Im dritten Beispiel werden in einer Leuchte $27^{II}$ mehrere Leuchtmittel 25, $25^I$, $25^{II}$ über Vorschaltgeräte $37^I$, 41, $41^I$ am Stromkreis L/N betrieben. In der Leuchte $27^{II}$ gibt es ein Master-Vorschaltgerät 37' und mehrere Slaves 41, $41^I$. Die Kommunikation im Stromkreis über den Datenbus I2C und die Energieversorgung aus dem Energieversorgungsausgang Eout zu Energieversorgungseingängen Ein, $Ein^I$ der Slaves 41, $41^I$ erfolgt nur über den Master $37^I$. Nur der Master 37' verfügt über einen digitalen Eingang Din, der als Schalteingang $L^I$ ausgebildet ist. Die Überwachungsmöglichkeiten über das Stromkreis-Modul $CCM2^I$ sind identisch zum zweiten Beispiel.

### 2. Einzelbatterie-versorgte Notlichtleuchten

Figur 14 sowie Figur 15:
Unterschiede zur Zentralbatterie:

- Lokale Energieversorgung in der Leuchte $27^{III}$ bzw. $27^{IV}$ mit einer Batterie 83 bzw. $83^I$ über ein Batterielade- und -steuergerät zur Zustandsüberwachung BAT für die Stromzuleitung zum Batterieversorgungseingang Bin des Vorschaltgeräts 37 bzw. $37^I$.
- integriertes automatischen Prüfsystem ATS in Verbindung mit dem Master- Vorschaltgerät 37 bzw. $37^I$.
- Prüftaster mit Anzeige 77.

Die Vorschaltgerät 37', 41, $41^I$ sind Komponenten eines Core-Circuit-Moduls CCM2".

Vorzugsweise verfügt jedes Vorschaltgerät 37, $37^I$, 41, $41^I$ über einen Leuchtmitteltreiber (nicht dargestellt) zur Ansteuerung eines Leuchtmittels 25, $25^I$, $25^{II}$, $25^{III}$. Für weitere Leuchtmittel ist ein I2C-Anschluss und ein Energieversorgungsausgang Eout vorhanden. Die Versorgung des I2C und des Energieversorgungsausgangs Eout sind voneinander unabhängig. Aus dem I2C kann die Logik im Leuchtmitteltreiber gespeist werden und der Leistungsteil vom Ein-Eingang.

Das Mastergerät 37, 37' hat die Möglichkeit, den Leistungsteil aller Leuchtmittel 25, $25^I$, $25^{II}$, $25^{III}$ auszuschalten, und kann anschließend noch mit der Logik zur Diagnose kommunizieren.

Für ein Update oder eine Neukonfiguration oder Konfigurationsänderung ist eine wichtige Information die Seriennummer der Leuchte 27, $27^I$, $27^{II}$, $27^{III}$, $27^{IV}$, die bevorzugt nur in der Leuchte selbst gespeichert wird. Als Speicherort kann das Vorschaltgerät 37, $37^I$, 41, $41^I$ oder ein eigenes ID-Modul (I2C EEPROM) verwendet werden. Ein ID-Modul bleibt auch bei einem Tausch des Vorschaltgeräts 37, $37^I$, 41, $41^I$ in der Leuchte $27^I$, $27^{II}$, $27^{III}$, $27^{IV}$. Weitergehende Informationen können sowohl in übrigen Komponenten der Notlichtbeleuchtungsanlage als auch in der Leuchte 27, $27^I$, $27^{II}$, $27^{III}$, $27^{IV}$ gespeichert werden. Wenn alle Daten in der Leuchte 27, $27^I$, $27^{II}$, $27^{III}$, $27^{IV}$ gespeichert sind, so enthält die Leuchte 27, $27^I$, $27^{II}$, $27^{III}$, $27^{IV}$ alle notwendigen Daten, um sie zu betreiben und zu prüfen. Dies bringt den Vorteil mit sich, dass die Leuchte 27, $27^I$, $27^{II}$, $27^{III}$, $27^{IV}$ in sich geschlossen ist und alle Daten ausgelesen werden können. Nachteilig ist, dass die Produktion aufwendiger wird, nachträgliche Änderungen beim Umfang der Informationen sind schwierig und beim Tausch des Vorschaltgeräts 37, $37^I$, 41, $41^I$ "wandern" die Daten mit. Wenn alle Daten in der Notlichtbeleuchtungsanlage gespeichert sind, mit Ausnahme der Seriennummer, die in der Leuchte 27, $27^I$, $27^{II}$, $27^{III}$, $27^{IV}$ selbstgespeichert ist, so lässt sich über die Seriennummer jede Leuchte 27, $27^I$, $27^{II}$, $27^{III}$, $27^{IV}$ eindeutig identifizieren. Anhand der Produktionsdaten kann genau ermittelt werden, welche Komponenten in der Leuchte 27, $27^I$, $27^{II}$, $27^{III}$, $27^{IV}$ verbaut wurden. Die Information müssen vom ERP, einer Produktdatenmanagement-System-Software aufbereitet und in Form einer anlagenspezifischen (lokalen) Produktdatenbank bereitgestellt werden. Diese Datenbank liegt auf der Notlichtbeleuchtungsanlage. Vorteil dieser Variante ist, dass nur wenige Informationen in der Leuchte 27, $27^I$, $27^{II}$, $27^{III}$, $27^{IV}$ gespeichert werden und in einer Produktdatenbank alle Informationen gebündelt vorliegen. Von Nachteil ist, dass im ERP alle Daten der Leuchte 27, $27^I$, $27^{II}$, $27^{III}$, $27^{IV}$ erfasst und die Daten aus dem ERP aufbereitet werden müssen.

Die zuvor angesprochene Produktdatenbank für Leuchten enthält alle Informationen, die zum Betrieb der Leuchten in einer Notlichtbeleuchtungsanlage notwendig sind. Primärschlüssel ist eine Typenkennung, die in der Leuchtenelektronik hinterlegt wird. Die Informationen in der Datenbank können veralten. Sobald neue Module an der Notlichtbeleuchtungsanlage angeschlossen werden, muss die Datenbank aktualisiert werden. Hierzu gibt es mehrere Möglichkeiten:

- Update der Datenbank über einen USB-Stick.
- Update der Datenbank über ein Firmware-Update der Station.
- Update der Datenbank über eine Cloud.

In der erfindungsgemäßen Notlichtbeleuchtungsanlage verwendbare Leuchten, auch als CORE-Leuchten bezeichnet, sind Standardprodukte mit standarisierten Eigenschaften, die vorzugsweise und zumindest eine eindeutige Seriennummer und eine eindeutige Typenkennung enthalten. Im Falle einer Speicherung weitergehender Daten in der Notlichtbeleuchtungsanlage, werden weitere Daten aus der Produktdatenbank ermittelt. Die Datensparsamkeit erleichtert die Produktion, die nur Seriennummer und Typenkennung hinterlegen muss. Für eine Prüfung der Leuchten gibt es zwei Ansätze: 1. Ein ATS im Leuchtenvorschaltgerät prüft die Funktion der Leuchte und 2. Ein ATS im zentralen Versorgungsgerät liest Messwerte der Leuchtenvorschaltgeräte aus und prüft diese.

Fehlermodelle beschreiben Fehler in den Komponenten und deren Auswirkungen. Die Modelle sind notwendig, um Prüfverfahren festzulegen.

Mögliche Fehlermodelle in der Leuchtenelektronik:

Die Leuchtenelektronik meldet sich nicht auf Anfragen vom CCM.
Wie werden Fehler in der Leuchtenelektronik erkannt? - über:

- Kommunikation zwischen Leuchte und Stromkreis-Modul.
- Betriebsparameter der Leuchtenelektronik.
- Eingangsspannung.
- Eingangsstrom.
- Sicherungen.
- Sicherungswiderstände.
- usw.

Mögliche Fehlermodelle in den Leuchtmitteln:

Eine defekte LED ist entweder hochohmig (Unterbrechung) oder niederohmig (Kurzschluss). Für die Fehlerbetrachtung ist die Beschaltung der LED entscheidend:

- Reihenschaltung der LED.
- Parallelschaltung der LED.
- Kombination aus Reihen- und Parallelschaltung der LED.

Wenn die Verbindung zwischen Leuchtmitteltreiber und Leuchtmittel unterbrochen ist, so fließt kein Strom in das Leuchtmittel. Wenn die Verbindung zwischen Leuchtmitteltreiber und Leuchtmittel kurzgeschlossen ist, so fließt der maximale Strom aus dem Leuchtmitteltreiber Die Spannung am Leuchtmitteltreiber liegt bei 0 V; die Kurzschlussabschaltung hat angesprochen.

Wenn zu viel Strom fließt, erwärmt sich der Treiber stark; eine thermische Überlastung des Leuchtmitteltreibers liegt vor. Bei Überschreiten eines Grenzwerts schaltet der Treiber ab. Nach Abkühlung schaltet der Treiber wieder ein.

Die LEDs im Leuchtmittel sind in Reihe geschaltet. Bei einem hochohmigen Defekt einer LED erfolgt eine Unterbrechung. Es fließt ein zu geringer Strom in das Leuchtmittel. Bei einem niederohmigen Defekt eines Leuchtmittels wie einer LED kommt es zu einem Kurzschluss. Es fließt ein zu hoher Strom in das Leuchtmittel.

Es sind in einer weiteren Ausführung Leuchten vorgesehen, welche über ein integriertes Automatisches Testsystem, abgekürzt ATS, verfügen. Im ATS sind ein Prüfalgorithmus und Testgrenzen hinterlegt. Die Leuchtenelektronik kann nach Aufforderung selbsttätig die Leuchtmittel prüfen. Die Leuchte prüft und entscheidet über Fehler.

Testparameter für das ATS:

- minimale und maximale Eingangsspannung und -strom.

- minimale und maximale Ausgangsspannung und -strom (Leuchtmittel).

Leuchten, die über kein ATS verfügen, werden vom CMM-Modul/CCM-Modul gesteuert und es werden nur Messwerte der Leuchtmitteltreiber ermittelt. Diese Messwerte können vom CMM-Modul über das CCM-Modul (Stromkreis-Modul) abgefragt werden. Die Prüfung der Messergebnisse erfolgt im CMM-Modul oder CCM-Modul (nach Vorgabe des CMM-Moduls). Das CMM-Modul prüft und entscheidet über Fehler.

Nachfolgend sei ein Ausführungsbeispiel für eine in einer erfindungsgemäßen Notlichtbeleuchtungsanlage einsetzbare Batterie erläutert. Es ist ein Lithium-Akku mit folgender Spezifikation vorgesehen:

| Parameter | Wert | Bemerkungen |
|---|---|---|
| Batterietechnologie | LiFeP04 | |
| Kapazität | 10 Ah | C |
| Nennspannung | 19,2 V | 6 Zellen mit je 3,2V |
| Max. Ladespannung | 21,9 V | |
| Ladeverfahren | CC, CV | Constant current / constant voltage |
| Max. Ladestrom | 0,5 C | max. 5A |
| Max. Entladestrom | 1 C | max. 10A |
| Maße (A x B x C) | 85 x 165 x 85 mm | |
| Gewicht | ca. 1,6 kg | |
| Betriebstemperaturbereich | Laden: 0 bis 45°C Entladen: -10 bis 60°C | |
| Lagertemperaturbereich | -20°C bis 45 °C | |
| Kabellänge | 300mm | |
| Stecker | Molex 46992-0410 | PIN 1, 2: Plus (rot) PIN 3, 4: Minus (schwarz) |

Nachfolgend sein ein weiteres Ausführungsbeispiel für eine Batterie für eine größere Anzahl an Leuchten bzw. für eine verlängerte Versorgungsdauer im Notbetrieb vorgestellt:

| Parameter | Wert | Bemerkungen |
|---|---|---|
| Balterietechnologie | LiFePO4 | |
| Kapazität | 20 Ah | C |
| Nennspannung | 19,2 V | 6 Zellen mit je 3,2V |
| Max. Ladespannung | 21,9 V | |
| Ladeverfahren | CC, CV | Constant current / constant voltage |
| Max. Ladestrom | 0,5 C | max. 5A |
| Max. Entladestrom | 1 C | max. 10A |
| Maße (A x B x C) | 170 x 165 x 85 mm | |
| Gewicht | | nicht relevant |
| Betriebstemperaturbereich | Laden: 0 bis 45"( Entladen: -10 bis 60"C | |
| Lagertemperaturbereich | -20°C bis 45 °C | |
| Kabellänge | 300mm | |
| Stecker | Molex 46992-0410 | PIN 1, 2: Plus (rot) PIN 3, 4: Minus (schwarz) |

Im Folgenden seien Ausführungsbeispiel für in der erfindungsgemäßen Notlichtbeleuchtungsanlage einsetzbare Bus-Systeme, auch CORE-Bus genannt. Das CORE-Bus-Interface soll in verschiedene Module der Notlichtbeleuchtungsanlage implementiert werden. Das Interface dient zur Datenübertragung zwischen zwei weit voneinander entfernten Knoten einer Notlichtbeleuchtungsanlage, eines Anlagenverbunds oder einzelner Komponenten innerhalb eines Schaltschranks.

Tabelle 1. Core Bus Steckerbelegung

| Kontakt | Paarnummer | Signal |
|---------|-----------|--------|
| 1 | 3 | TX+ |
| 2 | 3 | TX- |
| 3 | 2 | RX+ |
| 4 | 1 | GND |
| 5 | 1 | GND |
| 6 | 2 | RX- |
| 7 | 4 | +24V (optional nur ISO OUT) |
| 8 | 4 | +24V (optional nur ISO OUT) |

Tabelle 2. Elektrische Anforderungen

| Parameter | Wert |
|-----------|------|
| Schnittstelle <br> Receiver Schnittstellenstandard | RS422 <br> RS422 und RS485 |
| Transmitter Schnittstellenstandard <br> Spannungspegel | RS422 und RS485 <br> 5V |
| $\mu$C Schnittstellenstandard | UART |
| pC Spannungspegel | 3,3V |
| Isolation BUS zu $\mu$C (nur extern) | Doppelte Isolierung (Luft 3mm, Kriech 6mm) |
| Datenrate | 200kbaud - 1Mbaud (prüfen), 500kbaud gewünscht |
| Abschlussimpedanz | 100 Ohm (prüfen) |

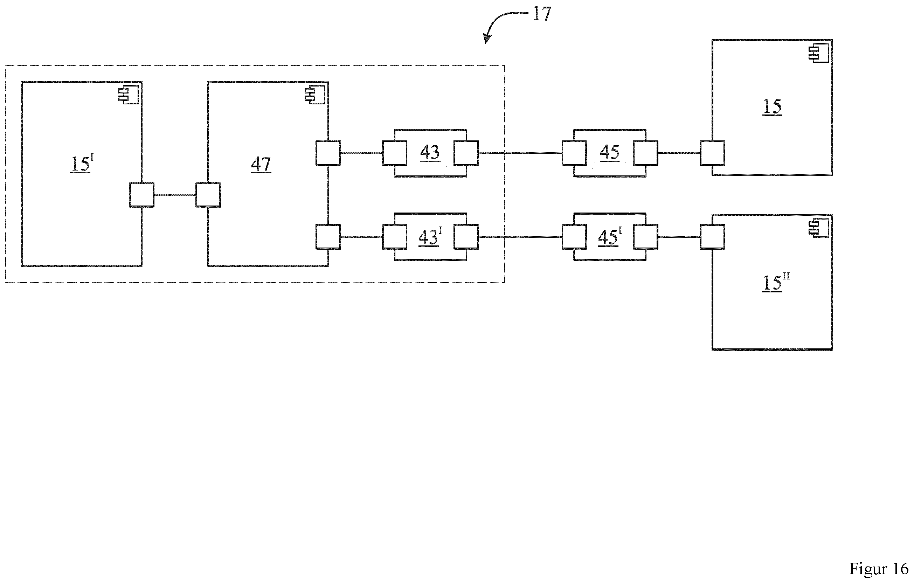

Figur 16 enthält ein Beispiel für externe Komponenten.

Die Module 15, 15^I, 15^II der Notlichtbeleuchtungsanlage werden bevorzugt in Reihe miteinander vernetzt (Vernetzung 17). Die Verbindung ist dabei immer Ende-zu-Ende. Für Stichleitungen oder externe Verdrahtung kann ein Bus Hub 47 verwendet werden. Dieser besitzt zwei isolierte Ports 43, 43^I zur Vernetzung von externen verteilten Komponenten oder Notlichtbeleuchtungsanlagen. Die isolierten Ports werden als Ausgänge bezeichnet und mit Bus IN Kopplern 45, 45^I verbunden. Ist eine galvanische Trennung nicht erforderlich, z. B. innerhalb eines Schaltschanks, werden Buskoppler verwendet. Durch die Typen IN und OUT der Koppelmodule, wird eine Kreuzung der Datenleitungen realisiert.

Nachfolgend drei Ausführungsbeispiele von Verdrahtungen:

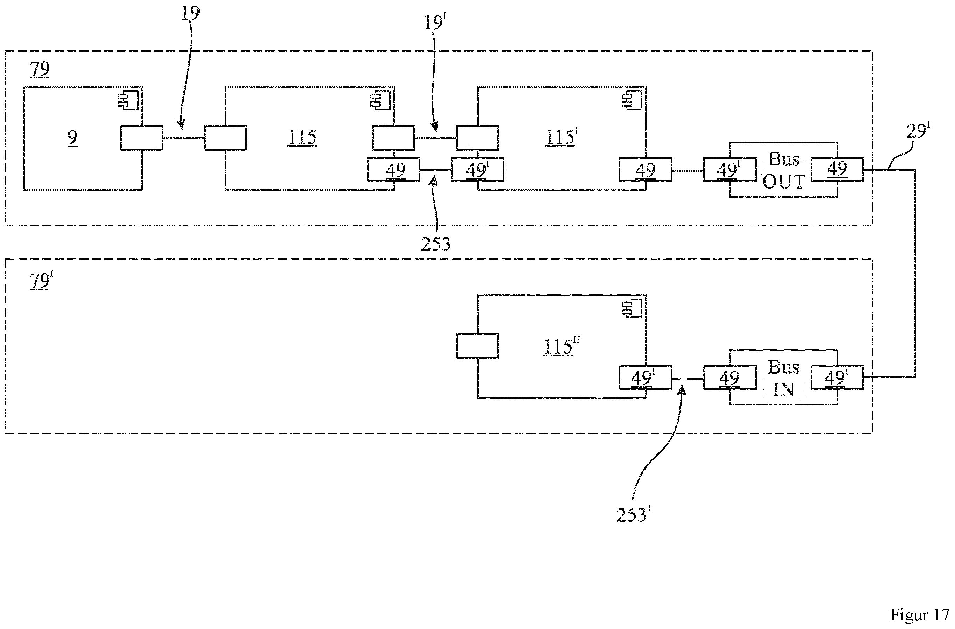

Figur 17 enthält ein Beispiel für eine Schienenverbindung in einer Anlage. Zwei externe Module 115, 115^I befinden sich zusammen mit einer 24-Volt-Spannungsversorgung 9 an einer ersten Schiene 79. Ein drittes externes Modul 115^II befindet sich an einer zweiten Schiene 79^I. Die Datenübertragung erfolgt über einen CAN-Bus 49, 49^I. Ein erstes Modul 115 und ein zweites Modul 115^I sind mit einem ersten Teil-Bus 253 verbunden. Ein zweites Modul 115^I und ein drittes Modul 253^II sind mit inem zweiten Teil-Bus 253^I verbunden. Für die Spannungsversorgung sind Spannungsversorgungs-Teil-Busse 19, 19^I vorhanden. Eine Verbind zwischen BusIn und BusOut auf den jeweiligen Schienen 79, 79^I erfolgt im Bereich des zweiten Teil-Bus 253^I über eine Leitung 29^I.

Im Folgenden Ausführungsbeispiele für ein Bus-Protokoll, das aus 3 Layern besteht:

- Network Layer.
   Der Network Layer definiert den Rahmen eines Telegramms, die Priorität, sichert die Datenintegrität und dient der Vermittlung.
- Transport Layer.
  Der Transport Layer stellt die fehlerfreie Kommunikation zwischen den Teilnehmern sicher und behandelt fehlerhafte Übertragungen.
- Application Layer.
  Der Application Layer beinhaltet anwendungsspezifische Daten.

Jeder Bus-Teilnehmer muss den Network Layer und den Transport Layer implementieren. Bei einem Netzwerkhub kann auf den Transport Layer verzichtet werden.

Der Network Layer stellt einen Frame zur sicheren und priorisierten Datenübertragung und Vermittlung bereit. Die Daten werden Byteweise übertragen. Die Übertragung entspricht den gängigen UART-Schnittstellen. Jeder Teilnehmer hat wenigstens zwei Schnittstellen. Ein Telegramm, das an einer Schnittstelle empfangen wurde, wird an allen anderen Schnittstellen wieder abgesendet. Die empfangenen Telegramme und im Teilnehmer generierten Telegramme werden der Priorität nach geordnet. Das höchst priorisierte Telegramm wird zuerst gesendet. Eine CRC-Prüfung wird bei allen Telegrammen vor dem Weiterleiten durchgeführt. Ein Telegramm wird nicht weitergeleitet, wenn es fehlerhaft ist.

Die Telegramme unterscheiden sich in ihrem Aufbau, je nach Cast Type.

*Tabelle 3. Protokoll Header*

|  | Header |  |  |  |
| --- | --- | --- | --- | --- |
|  | Start Sequence | Priority | Cast Type | Data Size (Bytes) |
| **Bits** | 4 | 4 | 2 | 6 |
| **Beispiel** | 0xA | X | X | X |
|  | Byte 0 |  | Byte 1 |  |
| Start Sequence: Sequenz, die den Start eines Telegramms kennzeichnet. Priority: Priorität des Telegramms. 0 ist die höchste Priorität, 15 die niedrigste. Cast Type: unterscheidet die Übertragungsmethode und damit den Telegrammaufbau. Telegramme mit Cast Types, die zum Zeitpunkt der Implementierung noch nicht belegt sind, werden nicht ausgewertet, müssen jedoch weitergeleitet werden. Legende Cast Types: 0 Unicast 1 Broadcast 2 Multicast Data Size: Anzahl der folgenden Bytes ohne CRC. | | | | |

*Tabelle 5. Datenpaket mit Header, Data und CRC*

|  | Header | Data | CRC |
| --- | --- | --- | --- |
| **Bits** | 16 | X | 16 |
| **Beispiel** | siehe Protokoll Header | X | X |

**Header**

Protokoll-Header mit Priorität und Cast-Typ

**Data**

Nutzdaten

**CRC**

16 Bit CRC Checksumme. Die Checksumme wird über das gesamte Telegramm inklusive Startkennung berechnet.

Generatorpolynom: $x^{16} + x^{12} + x^5 + x^0$

1 0001 0000 0010 0001
0x1021

Startwert: 0x000

Ein Unicast überträgt Daten zu einem bestimmten Empfänger.

*Tabelle 6. Unicast Paket*

| | Header (mit Unicast) | Sender CMA | Receiver CMA | Data | CRC |
|---|---|---|---|---|---|
| **Bits Beispiel** | 16 siehe Protokoll Header | 32 + 8 X | 32 + 8 X | (8 ... 32) * 8 X | 16 X |
| | Byte 0, 1 | Byte 2, 3, 4, 5, 6 | Byte 7, 8, 9, 10, 11 | Byte 12, ... | 2 Bytes |
| Sender CMA-Modul: Adresse des Absenders (Seriennummer und Component-Index) Receiver CMA-Modul: Adresse des Empfängers (Seriennummer und Component-Index) | | | | | |

Ein Broadcast wird von allen Teilnehmern empfangen.

*Tabelle 7. Broadcast Paket*

| | Header (mit Broadcast) | Sender CMA | Data | CRC |
|---|---|---|---|---|
| **Bits** | 16 | 32 + 8 | (8 ... 32) * 8 | 16 |
| **Beispiel** | siehe Protokoll Header | X | X | X |
| **Byte** | 0, 1 | 2, 3, 4, 5, 6 | 7,... | 2 Bytes |
| Sender CMA: Adresse des Absenders. | | | | |

Der Transport Layer wird als Data in den Network Layer eingebettet. In diesem Layer wird die Wiederholung von korrupten Telegrammen und Aufteilung von großen Datenmengen in mehrere Telegramme geregelt. Auf ein Unicast Telegramm erfolgt immer eine Antwort vom adressierten Empfänger. Wenn ein weiterleitender Teilnehmer ein fehlerhaftes Unicast Telegramm empfängt, antwortet dieser mit dem entsprechenden Fehlerstatus. Auf ein Broadcast Telegramm wird nur geantwortet, wenn dieses fehlerhaft empfangen wurde. Die Antworten erfolgen immer mit einem Status Telegramm.

*Tabelle 8. Transport*

| | Transport Type | Sequence Number | | | |
|---|---|---|---|---|---|
| **Bits** | 4 | 20 | | | |
| **Beispiel Byte** | X 0, 1, 3 | X | | | |

*Tabelle 9. Transport Types*

| 0x1 | Status |
|---|---|
| 0x2 | Process Data |
| 0x4 | Data Set |
| 0x5 | Data Get |
| 0x6 | Data Send |
| 0x8 | BLOB Data Start |
| 0x9 | BLOB Data End |
| 0xA | BLOB Data |

Der Typ Process Data wird für regelmäßige Steuerungsaufgaben und zur regelmäßigen Informationsübertragung verwendet. Hierzu zählt z. B. Schaltereignisse, Notbetrieb, Testauslösung. Die Typen Data Set, Get und Send sollten ausschließlich als Unicast übertragen werden. Verwendet wird dieser Datentyp z. B. für das Schreiben oder Lesen einer Konfiguration oder zum Auslesen von Fehlerinformationen.

Sequence Number ist ein Zähler, der bei jedem versendeten Paket um 1 erhöht wird. Der Zähler wird genutzt, um bei Statusmeldungen einen Bezug auf ein Paket zu nehmen. Jeder Teilnehmer führt seinen eigenen Zähler. Ein Status wird als Antwort auf ein Empfangenes Paket gesendet.

Die Sequence Number eines Status Telegramms entspricht der Sequence Number des Telegramms, dem dieser Status zugeordnet ist (auf das geantwortet wird). Die Priorität ist P+1 (eine Prioritätsstufe geringer), wobei P die Priorität des Telegramms ist, dem dieser Status zugeordnet ist.

*Tabelle 10. Type Status*

|  | Transport Type | Sequence Number | Status |
|---|---|---|---|
| **Bits** | 4 | 20 | 8 |
| **Beispiel** **Byte** | 0x1 0, 1, 3 | X | X 4 |

*Tabelle 11. Status Werte*

| **0x20** | **OK** |
|---|---|
| 0x40 | Error |
|  |  |
| **0x20** | **OK** |
| 0x41 | Error - CRC incorrect |

Mit dem Status "OK" wird der korrekte Empfang eines Telegramms bestätigt.

Mit dem Status "Error - CRC incorrect" wird dem Absender signalisiert, dass die CRC Checksumme nicht korrekt ist.

*Tabelle 12. Process data*

|  | Transport Type | Sequence Number | Data |  |  |
|---|---|---|---|---|---|
| **Bits** | 4 | 20 | 30*8 |  |  |
| **Beispiel** **Byte** | 0x2 0, 1, 3 | X | X 4, ... |  |  |

*Tabelle 13. data set*

|  | Transport Type | Sequence Number | Start Address | Data |  |
|---|---|---|---|---|---|
| **Bits** **Beispiel** | 4 0x3 | 20 X | 16 X | 28*8 |  |
| **Byte** | 0, 1, 3 |  | 4, ... |  |  |
| Start-Adresse ("start-address"): Speicherstelle / Register Data: Es können bis zu 28 Byte Daten übertragen werden. Die Daten werden im empfangenden Gerät fortlaufend ab der Start Address in seine Register geschrieben. |  |  |  |  |  |

*Tabelle 14. date get*

|  | Transport Type | Sequence Number | Start Address | Data |  |
|---|---|---|---|---|---|
| **Bits**<br>**Beispiel** | 4<br>0x3 | 20<br>X | 16<br>X | 28*8 |  |
| **Byte** | 0, 1, 3 |  | 4, ... |  |  |
| Fordert Informationen von einem Teilnehmer an. Die Antwort darauf erfolgt mit dem Typ Data Send.<br>Adresse ("address"): Speicherstelle/Register<br>Data: Es können bis zu 28 Byte Daten übertragen werden um evtl. Subregister auszuwählen. |  |  |  |  |  |

*Tabelle 15. data send*

|  | Transport Type | Sequence Number | Start Address | Data |  |
|---|---|---|---|---|---|
| **Bits** | 4 | 20 | 16 | 28*8 |  |
| **Beispiel** | 0x3 | X | X |  |  |
| **Byte** | 0, 1, 3 |  | 4, ... |  |  |
| Start Address: Speicherstelle/Register<br>Data: Es wird die angefragte Anzahl an Bytes ab Start Address gesendet. Wurden mehr Bytes angefragt als vorhanden sind, werden nur die vorhandenen Byte gesendet. Die Antwort fällt in diesem Fall kürzer aus als die angefragte Länge. |  |  |  |  |  |

*Tabelle 16. Typ BLOB Data Start*

|  | BLOB ID | BLOB Segments | BLOB Size | BLOB CRC |
|---|---|---|---|---|
| **Bits**<br>**Beispiel** | ?<br>X | 16<br>X | 32<br>X | 16<br>X |
| **Byte** | 0, ... | ... |  |  |

Die Übertragung eines "binary large objects" (BLOB) erfolgt mit Typ "BLOB Data Start". Der Empfänger kann sich beim Empfang des Pakets auf den BLOB-Empfang einrichten. Das erste Datensegment wird mit BLOB-Data übertragen.

Beispiel eines konkreten Datenprotokolls für BLOB:

BLOB ID: Kennung des BLOBs
BLOB Segments: Anzahl der BLOB Segmente
BLOB Size: Größe des gesamten BLOB in Bytes (max. 4.294.967.295 Bytes)
BLOB CRC: CRC der BLOB Daten

*Tabelle 17. Typ BLOB Data Start*

|  | BLOB ID | Segment Number | Segment Size | Data |
|---|---|---|---|---|
| **Bits** | ? | 16 | 16 oder 32 | X |
| **Beispiel** | X | X | X | X |
| **Byte** | 0, ... | ... |  |  |
| übermittelt den BLOB segmentweise<br>BLOB ID: Kennung des BLOBs<br>Segment Number: Segmentnummer 0 ... n<br>Segment Size: Größe des Segments in Bytes<br>Data: Daten des Segments |  |  |  |  |

Der Application Layer wird als Data in den Transport Layer eingebettet.

Prozessdaten werden vorzugsweise als Broadcast vom Typ "Type Process Data" gesendet. Es gibt Prozessdaten und Prozesssteuerungen. Die vorhandenen Prozessdaten sind in der Kommunikationsmatrix dokumentiert. Prozessdaten spiegeln den Zustand der Geräte und z. B. dessen Ein- und Ausgänge wieder. Prozessdaten werden immer zyklisch als Broadcast gesendet. Zeitkritische Prozessdaten können zusätzlich zu ihrer zyklischen Übertragung auch bei einer Änderung des Informationsgehalts übertragen werden, um eine schnellere Reaktion zu erreichen. Ein Steuerbefehl zur Prozesssteuerung wird nur einmalig zum Zeitpunkt der Ausführung gesendet. Er kann als Unicast oder als Broadcast gesendet werden.

*Tabelle 18. Process Control*

|  | Identifier | Data |
|---|---|---|
| **Bits** | 8 | (8 ... 27) * 8 |
| **Beispiel** | X | X |
| **Byte** | 0 | 1, ... |
| Identifier: kennzeichnet welche Art von Daten übertragen werden. Data: Daten. Die Länge der Daten variiert je nach Identifier. | | |

Register Data dienen zum Konfigurieren von Modulen oder zum Auslesen von detaillierten Informationen. Hierfür werden Telegramme des Typs Data verwendet. Es sollte immer nur ein Modul über ein Unicast angesprochen werden. Es ist in einer Ausführung vorgesehen, dass die Registerdaten übertragen werden, indem alle Registerdaten als Klartext (ASCII) übertragen und Leerzeichen als Trennzeichen zwischen Parametern eingefügt werden.

**CC24 BBC Register:**

Für den Transport Layer mit Type Data Set und Type Data Get.

| Adresse | Data Type | Inhalt | Daten | Beispiel |
|---|---|---|---|---|
| Standard Register (werden von jedem Modul unterstützt) | | | | |
| 1 | Get | Moduladresse | Adresse | 200 |
| 2 | Get | Modul Ident Nummer | ID | 101 |
| 3 | Get | Modul Name | Namen Kürzel | CMM |
| 4 | Get | Modul Status | Status | 0x1002 |
| Allgemeine Hardware Register / Core Entsprechung ? | | | | |
| 100 | Get | Hardware Ident | Ident | 12345678_123 |
| 101 | Get | Hardware Seriennummer | Seriennummer | 123456 |
| Linienmodul / CCM - Core Circuit Module | | | | |
| 200 | Get | Anzahl der Leuchten Linien | Anzahl | 2 |
| 201 | Get | Anzahl aller Leuchten | Anzahl | 50 |
| 202 | Get | Leuchtenadresse Subregister: Leuchtenindex | Adresse | 0x3B673 |
| 203 | Set | Leuchten Einstellung | Leuchtendresse Strom PWM OnOff | 1,260 50 1 |
| 203 | Get | Leuchten Einstellung Subregister: Leuchtenadresse | Strom PWM OnOff | 1,260 50 1 |
| 204 | Get | Softwareversion Leuchte Subregister: Leuchtenadresse | Softwareversion | SW_V1.00.00 |
| 205 | Get | Hardwareversion Leuchte Subregister:: Leuchtenadresse | Hardwareversion | HW_V1.00.00 |

| Adresse | Data Type | Inhalt | Daten | Beispiel |
|---|---|---|---|---|
| 206 | Get | Stromaufnahme einer Leuchten Line<br><br>Subregister:<br>Linienindex | Stromaufnahme | 2,503 |
| 207 | Get | Stromaufnahme aller Leuchten Linien | Stromaufnahme | 6,723 |
| 208 | Get | Versorgungsspannung der Linien | Spannung | 18,972 |
| 209 | Get | Status Leuchten Linie<br><br>Subregister:<br>Linienindex | Status | 0x1002 |
| Batterie Ladermodul / CES - Core Emergency Supply | | | | |
| 300 | Get | Strommessung | Strom | 0,500 |
| 301 | Get | Spannungsmessung | Spannung | 19,083 |
| 302 | Get | Lader Status | Status | 0x01 |
| 303 | Get | Batterie Temperatur | Temperatur | 25,6 |
| I14-Modul (Hauptplatine) / Core Entsprechung ? | | | | |
| 400 | Get | Versorgungsspannung | Spannung | 22,056 |
| 401 | Get | Netzspannung | Spannung | 235,073 |
| 402 | Get | Board Temperatur | Temperatur | 22,5 |
| 403 | Get | Netzteil Temperatur | Temperatur | 24,8 |
| 404 | Get | Stromaufnahme Anlage | Strom | 10,050 |
| 405 | Get | Lüfter Drehzahl | Drehzahl (RPM) | 2500 |
| 406 | Set | UNIX Timestamp setzen | Timestamp | |
| 406 | Get | UNIX Timestamp lesen | Timestamp | 0x56237854 |
| CCIF Modul / Core Entsprechung → CIO Eingänge mit besonderen Eigenschaften | | | | |
| 500 | Get | Anzahl kritischer Kreise | Anzahl | 2 |
| 501 | Get | Status kritischer Kreis<br><br>Subregister: Index | Status | 0x0 |
| Digital IO Modul / CIO - Core I/O Modul | | | | |
| 600 | Get | Anzahl der Eingänge | Anzahl | 5 |
| 601 | Get | Anzahl der Ausgänge | Anzahl | 5 |
| 602 | Set | Ausgang Schalten | Index OnOff | |

| Adresse | Data Type | Inhalt | Daten | Beispiel |
|---|---|---|---|---|
| 603 | Get | Eingang Abfragen<br><br>Subregister: Index | Zustand | 0 |
| Vaux Modul / Core Entsprechung ? | | | | |
| 700 | Get | Anzahl Vaux Kanäle | Anzahl | 2 |
| 701 | Set | Ausgang Schalten<br><br>Set: Index OnOff | | 702 |

Die erfindungsgemäße Notlichtbeleuchtungsanlage, die CORE-Notlichtbeleuchtungsanlage, kann an ein System zur Fluchtweglenkung, d. h. an ein System zur Ermittlung eines sicheren Fluchtwegs, angebunden werden. Dieses System entscheidet, welche Piktogramme die Rettungszeichenleuchten anzeigen sollen und kommuniziert entsprechend über eine Schnittstelle mit der CORE-Notlichtbeleuchtungsanlage. Die Notlichtbeleuchtungsanlage selbst trifft keine Entscheidungen, die den Fluchtweg betreffen, denn in einem Brandfall kann die Notlichtbeleuchtungsanlage nicht erkennen, ob ein Fluchtweg passierbar ist oder nicht. Das ist die Aufgabe eines Fluchtweglenkungssystem. Es sind jedoch bevorzugt Schnittstellen für ein Fluchtweglenkungssystem zum Kennzeichnen der Rettungswege eingebunden. Ein Fluchtweg ist ein Rettungsweg für das schnelle Verlassen eines Gebäudes.

Es wird unterschieden zwischen statischer, dynamischer und adaptiver Fluchtweglenkung. Bei der statischen Fluchtweglenkung werden bei Aktivierung der Notlichtfunktion der Notlichtbeleuchtungsanlage die Rettungswegzeichen unabhängig von der Gefahrenlage aktiviert und bleiben statisch. Die dynamische Fluchtweglenkung geht einen Schritt weiter und stellt bei Aktivierung der Anlage die Piktogramme entsprechend der vom Fluchtweglenkungssystem erkannten Gefahrenlage ein. Die Anzeige bleibt jedoch nach der ersten Fluchtwegkennzeichnung statisch (einmalig variabel). Anders die adaptive Fluchtweglenkung. Sie passt die Piktogramme an die aktuelle Gefahrenlage an, die vom Fluchtweglenkungssystem fortlaufend ausgewertet wird. Die erfindungsgemäße Notlichtbeleuchtungsanlage ist bevorzugt in der Lage, die Piktogramme jederzeit und zuverlässig neu einzustellen.

Wie bereits eingangs erläutert, soll die Sicherheitsbeleuchtungsanlage Fluchtwege aus dem Gebäude aufzeigen, um eine Selbstrettung zu ermöglichen. Je nach Gefahrenlage können die Fluchtwege unterschiedlich sein. Ein Gebäude muss über eine geeignete Infrastruktur zur zuverlässigen Ermittlung der Gefahrenlage verfügen.

Die Fluchtweglenkung kann bei verschiedenen Situationen notwendig sein. Im Brandfall kann es sein, dass Fluchtwege durch Feuer und Rauch nicht mehr oder gerade noch passierbar sind. Bauliche Maßnahmen (z. B. Druckbelüftung) können trotz Rauch einen Fluchtweg passierbar halten. Ein Fluchtweglenkungssystem ermittelt die Fluchtwege. Im Evakuierungsfall, d. h. wenn ein Gebäude geräumt werden muss, sind u. U. nicht alle Ausgänge verfügbar. Es sind noch weitere Gefahrenlagen denkbar, bei denen die Fluchtweglenkung eingesetzt werden könnte, beispielsweise:

- Bombendrohung
- Geiselnahme
- AMOK-Lauf

Ein Analog Input System soll in verschiedene Module der erfindungsgemäßen Notlichtbeleuchtungsanlage implementiert werden. Mit einem "Analog Input" kann ein Netzwächter oder eine Batteriespannungsmessung realisiert werden.

Ein Digital Input System soll in verschiedene CORE Module implementiert werden. Dieser Eingang wird für verschiedene Steuerungsaufgaben verwendet. Übliche Eingangsspannungen sind 230VAC/50Hz, 220VAC/60Hz und 24VDC.

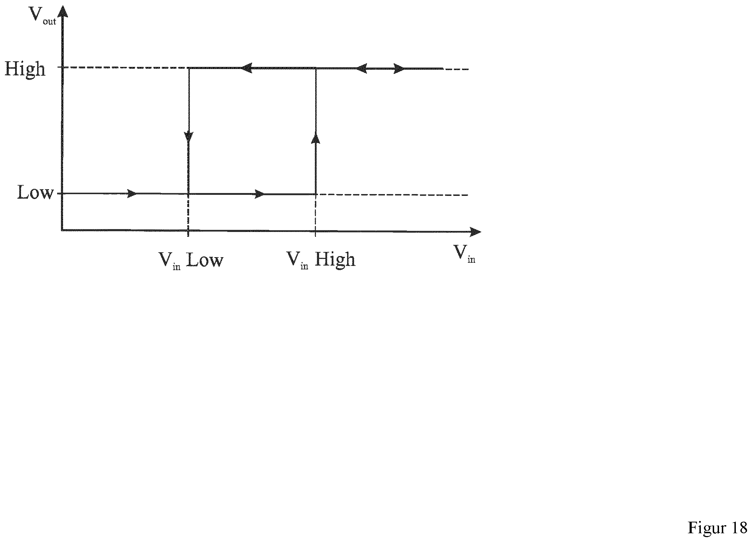

Figur 18: Die Eingangskennlinie beschreibt den Verlauf der Ausgangsspannung $V_{out}$ in Abhängigkeit von der Eingangsspannung $V_{in}$. Die Umschaltung beinhaltet eine Hysterese, die sich aus jeweiligen High- und Low-Spannungswerten (bzw. zwei hoch-Spannungswerten, für $V_{in}$ und $V_{out}$, und zwei niedrig-Spannungswerten, für $V_{in}$ und $V_{out}$) ergibt.

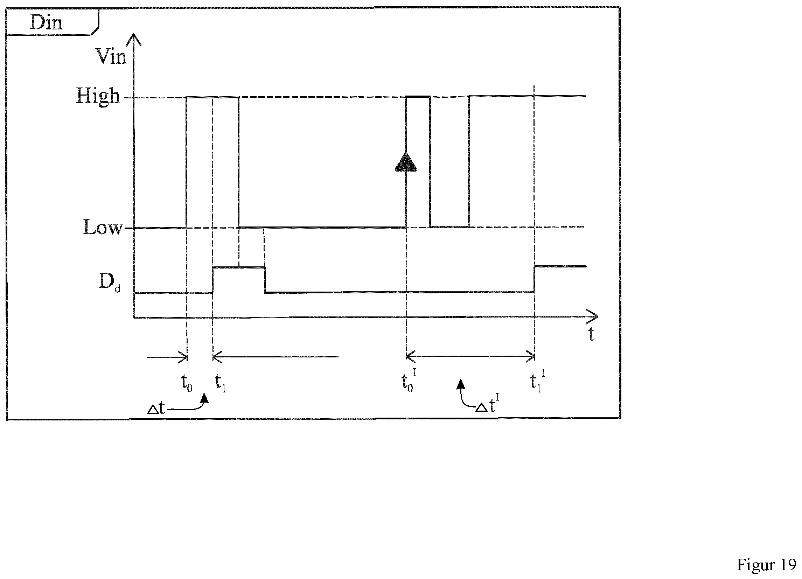

Figur 19: Das Zeitverhalten der digitalen Eingänge Din wird durch die beiden Parameter Mindestdauer $\Delta t$ und Entprellung $\Delta t^l$ bestimmt. Die Mindestdauer $\Delta t$, vorgegeben durch die Zeitpunkte $t_0$ und $t_1$, gibt an, wie lange ein Zustandswechsel der Eingangsspannung Vin von Low auf High am Eingang anliegen muss, bis er vom Ausgang (Din) zur weiteren Verwertung als Signal Dd übernommen wird. Die Entprellung $\Delta t^l$, vorgegeben als Zeitintervall durch die Zeitpunkte $t_0^l$ und $t_1^l$ auf der Zeitachse t, gibt an, wie lange gewartet wird, bis ein Zustandswechsel als stabil angesehen

wird. Die Entprellung $\Delta t^I$ wird mit der pos. Eingangsflanke von Vin angestoßen.

Konfiguration des Digital Input:

- Eingang
- EventID bei steigender Flanke
- EventID bei fallender Flanke
- EventID bei steigender oder fallender Flanke
- High-Schwelle in mV
- Low-Schwelle in mV
- Mindestdauer in Millisekunden (0 = keine)
- Entprellung in Millisekunden (0 = keine)

Ein Critical Circuit Interface (CCIF) - Kritischer Kreis - überwacht eine Leitungsschleife mit einem Abschlusswiderstand von 10 kOhm auf Unterbrechung und Kurzschluss. Das CCIF soll in verschiedene CORE Module implementiert werden.

Folgende Zustände sollen detektiert werden können:

- Leiterschleife im Sollzustand (Schleifenwiderstand zwischen 5 kOhm und 15 kOhm)
- Leiterschleife aufgetrennt (Schleifenwiderstand > 15 kOhm)
- Leiterschleife hochohmig (Schleifenwiderstand > 15 kOhm)
- Leiterschleife kurzgeschlossen (Schleifenwiderstand < 5 kOhm)
- Leiterschleife hochohmig kurzgeschlossen (Schleifenwiderstand < 5 kOhm)

Die Versorgungsspannung des CCIF darf nicht durch einen Kurzschluss oder andere auf die Leiterschleife aufgebrachte Spannungen beeinflusst werden. Die Auslöseschwellen verfügen über eine Hysterese von TBD kOhm, um Grenzwert.

Wenn die Messschaltung des kritischen Kreises angesprochen hat, ist eine Diagnose zur Prüfung der Schleife erforderlich. Zur Prüfung des Kritischen Kreises sind zwei Messungen erforderlich:

1. Feststellen von Fremdspannung auf der Schleife - Spannungsmessung (AC und DC) der Schleife und der Schleifenenden gegen PE
2. Widerstandsmessung der Schleife (Unterbrechung, Leitungsschluss) - Messung mit einem Widerstandsmesser (z. B. Multimeter). Mit einer strombegrenzten Hilfsspannungsquelle von 24V (max. z. B. 20 mA) und Messung des Stroms. Der Widerstand wird berechnet.

Der Messwert kann in regelmäßigen Abständen oder beim Auftreten des Fehlers protokolliert werden.

Die erfindungsgemäße Sicherheitsbeleuchtungsanlage verfügt bevorzugt über eine Einrichtung zur Messung des Erdschlusses. Ein Erdschluss liegt vor, wenn ein Leiter oder ein unter Spannung stehendes Teil Kontakt zum Schutzleiter, direkt zur Erde oder zu einem geerdeten Gehäuse hat. Eine Erdschlussüberwachung muss Verbindungen zwischen Batteriepolen sowie Verbraucherstromkreisen gegen Erde erkennen und melden.

Gemäß der Norm IEC 61557-2, VDE 0413/Teil 2 muss der Isolationswiderstand R_ISO bei einer Nennspannung von $\Leftarrow$ 500V mindestens 500 kOhm betragen. Bei Nennspannung <= 250V, >= 250 kOhm. Fehler- und Ableitstrom 0,5mA je Kreis

Bei der erfindungsgemäßen Notlichtbeleuchtungsanlage wird der Erdschluss bevorzugt im Batteriemanager und in den Leuchtenstromkreisen überwacht. Eine Messung erfolgt bevorzugt mit Mittelwert, um einen vorhandenen Erdschluss sicher zu erkennen. Der Batteriemanager überwacht den Erdschluss zwischen den Batteriepolen und Erde (PE) und meldet ab einem Widerstand von 10 bis 200 kOhm einen Erdschluss (die Schwelle orientiert sich am Einstellbereich in Isolationswächtern). Jeder Leuchtenstromkreis überwacht den Erdschluss im Stromkreis zwischen L und PE sowie N und PE. Die Auslöseschwelle liegt zwischen 10 und 200 kOhm. Eine Auslösung wird mit dem gemessenen Widerstand dokumentiert, um eine Fehlersuche zu erleichtern. Der Fehler bleibt bestehen, bis er quittiert wurde. Stromkreise mit Erdschluss schalten nicht ein.

Fehlermechanismen, die zum Erdschluss führen können:

- Beschädige Isolation an einem Leiter
- Loses Kabel, offenes Ende hat Kontakt zu BAT+, BAT-, L, N oder PE.
- Falscher Anschluss einer Leuchte (L, N)

Um auch einen schleichenden Erdschluss detektieren zu können, bei dem der Widerstand über eine gewisse Zeit sinkt, wird vorgeschlagen, dass der Widerstandswert ständig geloggt wird oder in einer alternativen Lösung, dass er innerhalb eines Zeitrasters ab Erreichen einer Schwelle gemessen wird. Der aktuelle Widerstandswert wird mit der letzten Messung verglichen und bei Absinken (Trend) erfolgt eine Warnung.

Wenn der gemessene Wert des Erdschlusses dicht an der Erkennungsschwelle liegt, so könnte Jitter entstehen, sofern keine Hysterese definiert ist. Die erste Messung, die unter/über der Erkennungsschwelle liegt, löst den Fehler aus. Eine automatische Rücksetzung erfolgt nicht (kein Jitter möglich).

Ein Relais Output System wird vorzugsweise in verschiedene CORE-Module implementiert. An den Relaisausgang kann Peripherie an eine CORE-Anlage angeschlossen werden, z. B. Steuersignal für eine Anzeige, Lüfter einschalten.

Es kann ein Netzteil vorgesehen werden, z. B. mit 3,3 V. Das Netzteil soll den Mikrocontroller mit seiner Peripheriebeschaltung und andere logische Schaltungen in einem CORE-Modul versorgen. Die Eingangsspannung wird von einem externen 24V Netzteil zur Verfügung gestellt. Es wird die Standard 24V CORE Schutzbeschaltung am Spannungseingang des Moduls verwendet.

Erfindungsgemäß ist vorgesehen, dass eine 24V-Schutzschaltung an jedem Spannungsversorgungseingang der CORE Module eingesetzt wird. Es schützt die nachfolgende Elektronik der Module vor ESD, Burst und Surge.

Eine Ausführung der Erfindung sieht eine sog. CORE-Compact vor - eine kleine, günstige Zentralbatterieanlage für die Versorgung eines Brandabschnitts. Es handelt sich hierbei um ein Stromversorgungssystem mit Leistungsbegrenzung (LPS). Sie lässt sich nahtlos in das CORE System, d. h. die Sicherheitsbeleuchtungsanlage, die diese Erfindung betrifft, integrieren.

Ein Gehäuse aus Metall kann vorgesehen sein. Es ist sicherbar durch ein Schloss, so vom Anwender gewünscht. Hierfür ist insbesondere eine Sollbruchstelle im Gehäuse vorgesehen, welche ausgebrochen werden kann und in die ein Schloss eingesetzt werden kann.

Technische Daten der CORE-Compact:

| | |
|---|---|
| Autonomiezeit | 1h / 3h / 8h |
| Anzahl Kreise | 4 |
| Max. Leuchten pro Kreis | 40 |
| Max. Leuchten gesamt | 80 |
| Gangreserve Uhr | 1 Jahr |
| Dauer Bootvorgang (Kaltstart) | < 1 Minute |
| Schutzklasse | I |
| Schutzart | IP20 (Gehäuse) |
| **Schnittstellen extern** | |
| Ethernet 10/100 Mbit/s | 1 |
| Kritischer Kreis (Ruhestromschleife) | 1 |
| Digitaler Weitbereichseingang | 4 |

| Relaisausgänge (Wechsler) | 4 |
| --- | --- |
| | Davon Standardbelegung (EN 50171), vom Nutzer änderbar: <br><br> • System betriebsbereit <br> • Speisung aus Batterie <br> • Sammelstörung |
| Hilfsspannungsausgang | 1x 24V/500mA, batteriegestützt, über Software schaltbar, kurzschlussfest |
| CORE Bus | 1 (Ausgang für externe Module) |
| USB für Service (z.B. Speicherstick) | 1 |
| **Schnittstellen intern** | |
| USB für interne Erweiterung | 1 |
| SD-Karte | 1 |
| Erweiterungssteckplatz wie NLSR 3.0 | 1 |
| **Zu messende Parameter** | |
| Batteriespannung | (EN 50171 6.7) |
| Batteriestrom | Ladung und Entladung (EN 50171 6.7) |
| Batterietemperatur | Sensor in Nähe der Batte.... |
| Gerätetemperatur (optional) | |
| Verbraucherstrom | Bei Bereitschaftsparallelbetrieb nach EN 50171 6.7 |
| Stromabgabe des Ladegeräts | Bei Bereitschaftsparallelbetrieb nach EN 50171 6.7 |
| Eingangsspannung 230V | |
| Ausgangsstrom pro Stromkreis | |

Die durchschnittliche Leistung einer Leuchte liegt bei 3W. Typischerweise haben Installationen ca. 40 Leuchten pro Anlage.

Bei der Dimensionierung der Batterie ist eine Alterungsreserve von 25% zu kalkulieren. Maximal benötigte Energie:

Energie: 80 Leuchten * 3W * 1h * 1,25 = 300 Wh
Min. Ladung Batterie: 300 Wh / 19,2V = 15,6 Ah
Energie: 80 Leuchten * 3W * 3h * 1,25 = 900 Wh
Min. Ladung Batterie:900 Wh / 19,2V = 46,9 Ah

Energie: 80 Leuchten * 3W * 8h * 1,25 = 2400 Wh
Min. Ladung Batterie: 2400 Wh / 19,2V = 125 Ah

Im 8h Betrieb wird die maximale Anschlussleistung nicht benötigt. Daher ist mit einer maximalen Energie von 900 Wh zu rechnen.

Typisch benötigte Energie:

Energie: 40 Leuchten * 3W * 3h * 1,25 = 450 Wh
Min. Ladung Batterie: 450 Wh / 19,2V = 23,4 Ah
Energie: 40 Leuchten * 3W * 1h * 1,25 = 150 Wh
Min. Ladung Batterie: 150 Wh / 19,2V = 7,8 Ah

Max. Ausgangsleistung an einem Kreis

$$3W * 40 = 120W$$

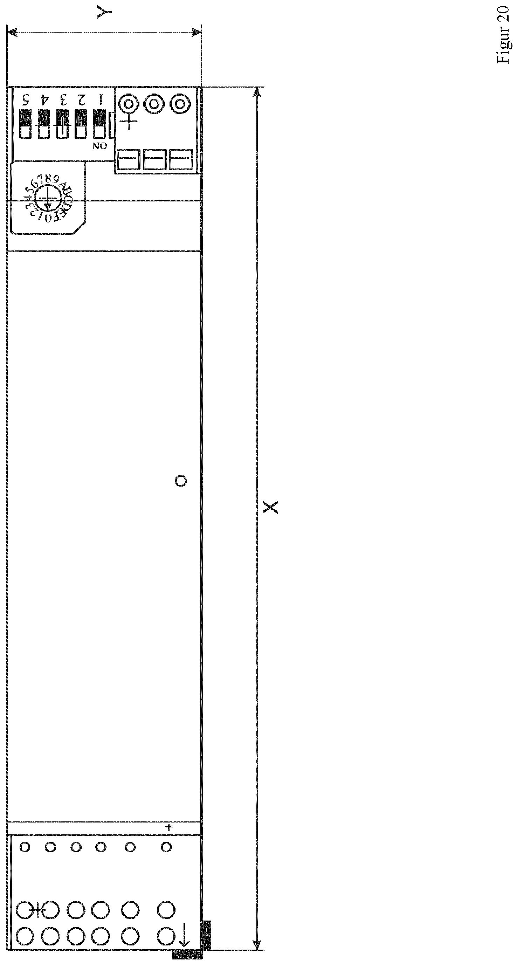

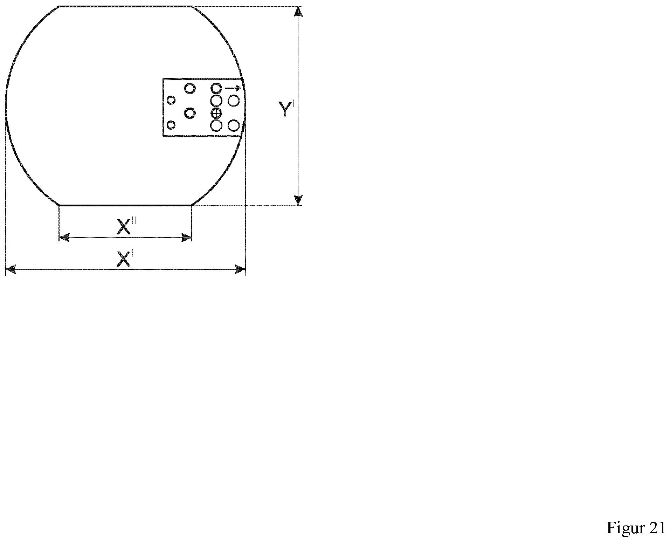

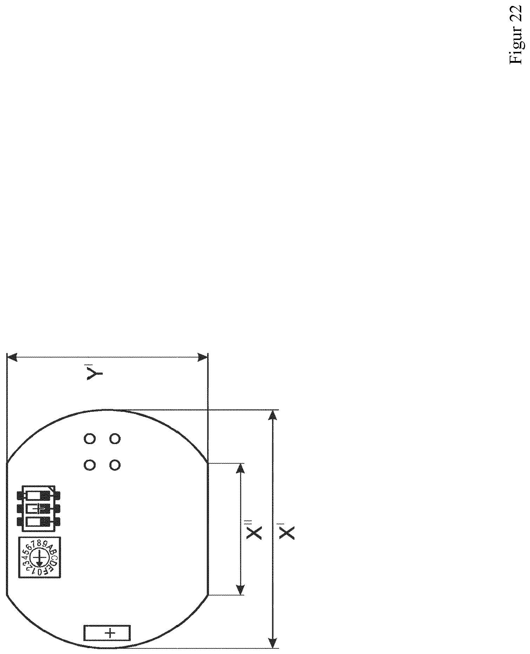

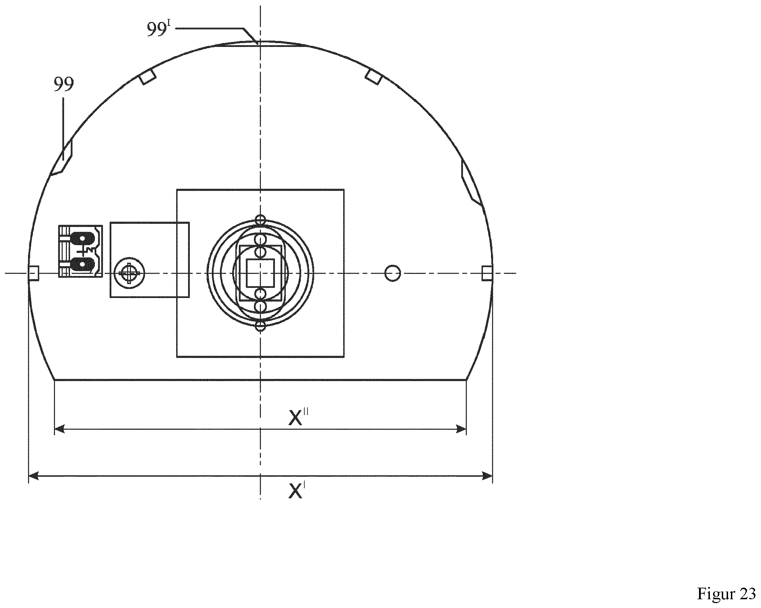

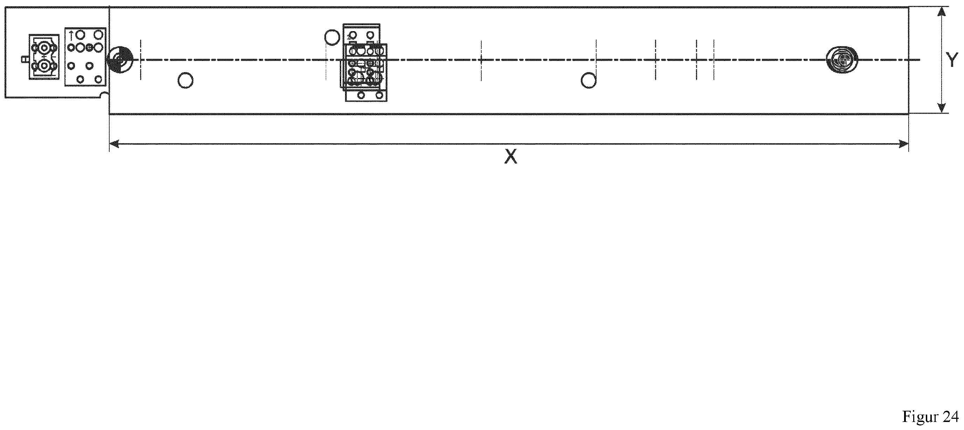

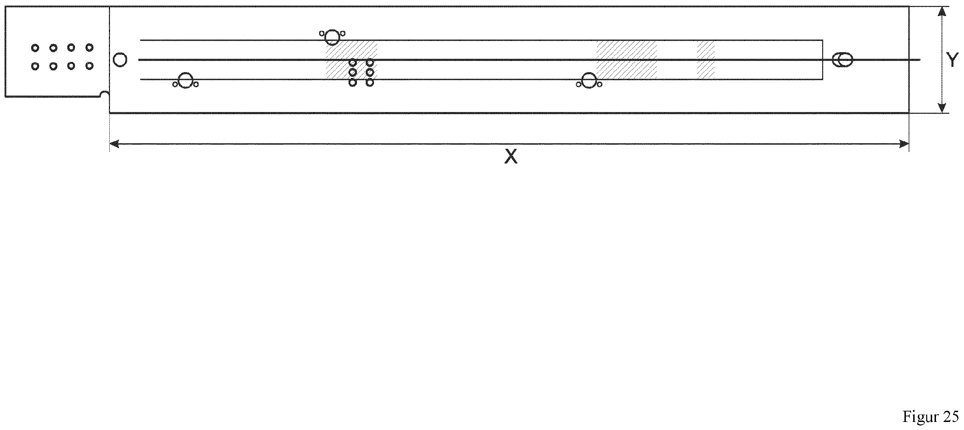

Max. Ausgangsleistung gesamt
3W * 80 * 240W
Externe Module (z. B. "CIO") können über den Core-Bus-Ausgang der "Core-Compact 24" angeschlossen werden. Für eine Vernetzung mit anderen Core Stationen müssen evtl. Core Bus Hubs (in, out, out) bzw. Core Bus Module (mit integriertem Hub) eingesetzt werden.
Als Bedieninterface wird in einer Ausführung eine Website bereitgestellt, über die die Bedienung erfolgt. Diese Website wird von einem Webserver auf dem Gerät bereitgestellt. Zusätzlich ist am Gerät selbst ein kleiner Touchscreen vorhanden, der die normativ geforderten Anzeigen und Bedienung bereitstellt. Es sollen zudem grundlegende Funktionen, z. B. für einen Check, bei der Installation, bereitgestellt werden. Zur Signalisierung von Störungen ist ein Piezolautsprecher vorzusehen.
Die Endstromkreise der CORE -Compact stellen eine Schutzkleinspannung von 24V (DC) zur Verfügung. Die Kommunikation zwischen Leuchte und den übrigen Komponenten der Notlichtbeleuchtungsanlage findet über die Versorgungsleitung statt. Die Leuchten können bevorzugt auch als Allgemeinlicht oder an Fremdanlagen verwendet werden. Dazu soll die Datenschnittstelle deaktiviert werden können, damit andere auf die Versorgungsleitung aufmodulierte Daten keine Aktion der Leuchte auslösen. (Netzteilmodus)
Als universelles Betriebsgerät kann ein Gerät eingesetzt werden, gemäß Figur 20 (Format MU) oder gemäß Figur 21 sowie Figur 22 (Format RLED).
Betriebsgeräte können integriert sein, wie z. B. in Figur 23 gezeigt (Format IL)
oder gemäß Figur 24 sowie Figur 25 (Format KM). Auf unterschiedliche Verhältnisse von Längen X, $X^I$, $X^{II}$ und Breiten Y, $Y^I$, wie Länge X ist größer als Breite Y der gezeigten Betriebsgeräte, wird hingewiesen. Vorteilhaft ist eine Ausstattung mit Aussparungen für Nutzerstege bzw. für Schienen 99, $99^I$.
Die universellen Vorschaltgeräte im Format MU und RLED können mit den in der nachfolgenden Tabelle genannten Ausgangsspannungen und Strömen konfiguriert werden:

| LED | Spannung / V | Strom / mA | Const. Voltage / Const. Current | Anmerkung |
|---|---|---|---|---|
| 1ERT | 2,98 | 300 | CC | |

| LED | Spannung / V | Strom / mA | Const. Voltage / Const. Current | Anmerkung |
|---|---|---|---|---|
| | 3,05 | 400 | CC | optional |
| | 3,1 | 500 | CC | optional |
| | 3,14 | 600 | CC | optional |
| 3ERT | 8,9 | 300 | CC | |
| | 9,01 | 400 | CC | optional |
| | 9,1 | 500 | CC | optional |
| 4ERT | 11,75 | 300 | CC | |
| | 11,84 | 400 | CC | optional |
| AM 15 LP | 12 | 150 | CV | |
| AX 21 LP | 12 | 201 | CV | |
| 6HP | 12 | 301 | CV | |
| 1x OLED | 6 | 500 / 40% | CC | |
| 2x OLED | 12 | 500 / 40% | CC | |
| 1x MGL 15LP | 12 | 150 | CV | |
| 2x MGL 15LP | 12 | 260 | CV | |
| 1x MMW 60LP | 12 | 110 | CV | |
| 2x MMW 60LP | 12 | 220 | CV | |
| FlexitDisplay | 12 | 220 | CV | |

Die OLED Panels werden mit einer 300Hz, PWM betrieben. Die An Zeit beträgt 40%.

Format IL: 3.1V / 850mA Konstantstrom

Format KM: 12,8V / 150mA Konstantstrom

Die Leuchten werden vorzugsweise wie folgt gesteuert:

- Dimmung in 16 Helligkeitsstufen.

  ○ Niedrigste Stufe aus.
  ○ Höchste Stufe max. zulässiger LED Strom.
  ○ Alle 16 Dimmwerte (LED-Kennlinie) werden bei der Produktion der Leuchte oder im Servicefall beim Austausch des Betriebsgeräts in das universelle Betriebsgerät gespeichert.

- Änderung der Helligkeit: 200ms von Benutzereingabe bis Helligkeitsänderung.

Eine Helligkeitstabelle definiert die monotone Kennlinie zur Ansteuerung des LED-Treibers (monoton = nächster Wert ist gleich oder höher). Die Tabelle enthält 16 Stützstellen mit Spannung (in mV), Strom (in mA) und Duty-Cycle (in %). Der erste Wert entspricht 0% Helligkeit und der höchste 100%. Aus den Stützstellen kann durch lineare Interpolation jeder Helligkeitswert (in %) eingestellt werden.

| Stufe | Stufe | Spannung [mV] | Strom [mA] | Bemerkungen |
|---|---|---|---|---|
| 0 | 0% | 0 | 0 | Niedrigste Stufe: Leuchtmittel aus |
| 1 | 7% | | | |
| 2 | 13% | | | |

(fortgesetzt)

| Stufe | Stufe | Spannung [mV] | Strom [mA] | Bemerkungen |
|---|---|---|---|---|
| | | | | |
| 7 | 47% | | | |
| 8 | 53% | | | |
| | | | | |
| 14 | 93% | | | |
| 15 | 100% | | | Höchste Stufe: max. zulässiger LED Strom |

Beim Erstellen der erfindungsgemäßen Notlichtbeleuchtungsanlage wird die Einstellung von zumindest den folgenden Parametern vorgenommen:

- Seriennummer.
- Typenkennung (Schlüssel für Produktdatenbank für Leuchtentyp, HW-Revision, usw.).
- Ausgangsspannung.
- Ausgangsstrom.
- Spannungsgrenzwerte für Funktionsprüfung.
- Stromgrenzwerte für Funktionsprüfung.
- Deaktivierung der Datenschnittstelle (Netzeilmodus).

Die Konfiguration in der Produktion erfolgt im letzten Schritt der Montage. Hier wird das LED-Betriebsgerät konfiguriert und die gesamte Leuchte auf Funktion geprüft (z. B. korrekte Verkabelung). Die Konfiguration erfolgt über das gleiche Kommunikationsverfahren wie im Betrieb mit der Zentralbatterieanlage. An dieser Stelle kann ggf. auch ein Firmwareupdate eingespielt werden. Im Servicefall kann das LED- Betriebsgerät durch ein Servicetool oder über die Zentralbatterieanlage konfiguriert werden.

Jede Leuchte erhält in einer bevorzugten Ausführung eine 32-Bit-Seriennummer. Diese kann zur Detektierung der Leuchte verwendet werden. Die Detektion von allen Leuchten an einem Endstromkreis soll nicht länger als 5 Minuten dauern. Nach der Detektion kann eine Short ID (verkürzte Adresse, die von der Anlage festgelegt wird) zur Kommunikation verwendet werden. Jede Leuchte erhält eine 4-stellige, alphanumerische Bezeichnung, die bei der Leuchtenproduktion aus der Seriennummer generiert wird. Beim Tausch eines Betriebsgeräts soll die Bezeichnung der Leuchte erhalten werden. Die Bezeichnung, die im Betriebsgerät gespeichert ist, muss dazu durch die Anlage geändert werden können.

Die zuvor dargestellten Kombinationen und Ausführungsbeispiele lassen sich auch in zahlreichen weiteren Verbindungen und Kombinationen betrachten.

### Bezugszeichenliste

| | |
|---|---|
| 100 | Beleuchtungsanlage |
| 1, 1$^I$, 101, 201 | Notlichtbeleuchtungsanlage |
| 3, 103 | Kompaktanlage |
| 301, 301$^I$, 301$^{II}$, 301$^{III}$, | Notlichtbeleuchtungsanlagen |
| 5, 5$^I$ | exemplarische Bauteilgruppe umfassend Anschlussbauteile und/oder Kontroll-LEDs |
| 7 | Gehäuse |
| 9 | Netzteil, insbesondere 24-Volt-Spannungsversorgung |
| 11, 11$^I$, 11$^{II}$, 11$^{III}$, 11$^{IV}$ | Modul |
| 113 | Sammelmodul bzw. Baugruppe mit mehreren Modulen |
| 15, 15$^I$, 15$^{II}$, 115, 115$^I$, 115$^{II}$ | externes Modul, insbesondere Core-Modul |
| 17 | Vernetzung von extern verteilten Komponenten, wie Modulen oder Notlichtbeleuchtungsanlagen |
| 19, 19$^I$ | Spannungsversorgungs-Teil-Bus, wie ein 24-Volt-Bus |
| 21, 21$^I$, 21$^{II}$, 21$^{III}$ | Endstromkreis |
| 25, 25$^I$, 25$^{II}$, 25$^{III}$ | Leuchtmittel, insbesondere LED montiert auf einen Sockel |
| 27, 27$^I$, 27$^{II}$, 27$^{III}$, 27$^{IV}$ | Leuchte, insbesondere Leuchte eines Notlichts |

(fortgesetzt)

| | |
|---|---|
| 29, 29$^I$ | Leitung mit Kontaktierungsstellen |
| 31, 31$^I$, 31$^{II}$, 31$^{III}$ | Notlichtleuchte |
| 33 | Notlichtleuchten-Modul |
| 35 | Notlichtleuchte, insbesondere Leuchte, ausgestattet mit mehreren LEDs |
| 37, 37$^I$ | Vorschaltgerät, insbesondere Master-Vorschaltgerät |
| 39 | Spannungsausgang, insbesondere 24-Volt-Ausgang |
| 41, 41$^I$ | Vorschaltgerät, insbesondere Slave-Vorschaltgerät |
| 43, 43$^I$ | isolierte Ports, insbesondere als Ausgänge |
| 45, 45$^I$ | Bus-IN Koppler |
| 47 | Bus-Hub, insbesondere Bus-Hub OUT |
| 49, 49$^I$ | Daten-Bus, insbesondere CAN-Bus-Anschluss |
| 51, 151, 351, 351$^I$ | Bus, insbesondere Anlagen-Bus |
| 51$^I$ | Leuchten-Bus |
| 53, 53$^I$, 53$^{II}$, 53$^{III}$, 153, 153$^I$, 153$^{II}$, 253, 253$^I$, 353, 353$^I$ | Teil-Bus, insbesondere von Modul zu Modul |
| 55, 55$^I$ | Steckanschluss, insbesondere Steckerbuchse |
| 57 | LINUX-Board |
| 59, 59$^I$ | Prozessor |
| 61 | Bus-Unterbrechungsstelle, insbesondere Störung für eine Datenübertragung |
| 63 | Anschluss für weitere, insbesondere externe, Module |
| 65, 65$^I$ | Schnittstelle, wie eine UART-Schnittstelle |
| 67, 67$^I$, 67$^{II}$, 67$^{III}$, 67$^{IV}$, 67$^V$, 67$^n$ | Schnittstelle |
| 69 | HTTP-Datenformat |
| 71 | HTTP-Internet Server |
| 73 | Cloud-Speicher |
| 75, 75$^I$ | Touch-Screen, vorzugsweise Eingabebildschirm |
| 77 | Taster und Anzeige |
| 79, 79$^I$ | Tragschiene |
| 81 | Stromnetz |
| 83, 83$^I$ | Batterie, insbesondere Akkumulator |
| 85 | WLAN-Gerät wie WLAN-Repeater oder ein WLAN-Router |
| 87 | Smart Device wie ein Smart-Phone oder ein Tablet |
| 89 | Anwendungssoftware |
| 91 | Modulverwaltung |
| 92 | Nachrichten |
| 93 | Paketverwaltung |
| 94 | Byte Stream und Status |
| 95 | Schnittstellenverwaltung |
| 97 | Hardware |
| 99, 99$^I$ | Aussparung für Nutzerstege |
| ATS | Automatisches Prüfsystem |
| API | Core Bus Application Programming Interface |
| BAT | Batterielade- und steuergerät, insbesondere Batteriezustandsüberwachung |
| BBC, BBC$^I$, BBC$^{II}$, BBC$^{III}$, BBC$^{IV}$, BBC$^V$, BBC$^{VI}$, BBC$^{VII}$ | Base-Board-Controller, wie ein Prozessorboard |
| Bin | Batterieversorgungseingang |
| BM | Boot-Management-Modul |
| CA | Core App |
| CBH | Bus-Splitter-Modul |
| CCC | Modul zur Überwachung eines kritischen Kreises |
| CCM | Core-Circuit-Modul |

| | |
|---|---|
| CCM$^I$, CCM$^{II}$ | Core-Circuit-Modul, insbesondere Stromkreis-Modul mit Treiber für Leuchten |
| CCM2, CCM2$^I$, CCM2$^{II}$ | Core-Circuit-Modul, insbesondere Stromkreis-Modul |
| CCIF, CCIF$^I$ | Critical Circuit Interface Modul, insbesondere kritischer Kreis bzw. eine Schnittstelle zur Stromkreisüberwachung |
| CES | Core-Emergency-Supply-Modul, wie ein Modul mit einer Notstromquelle |
| CEV | Netzteilmodul |
| CIO | Core-Input-Output-Modul |
| CIM | Eingangs-Modul |
| CLM, CLM$^I$ | Core-Line-Monitor, wie ein Netzwächter-Modul |
| CMA, CMA$^I$ | Fernmeldeanzeige-Modul |
| CMAS | Fernmeldeanzeige-Modul-Steuersoftware |
| CMT | Meldetableau-Modul |
| CMB | Mainboard-Modul |
| CMM, CMM$^1$ | Leuchtenmanagement-Modul |
| CMMS | Leuchtenmanagement-Modul-Steuersoftware |
| CMO | Computer-Modul-Platine |
| COM | Ausgangs-Modul |
| CPS | Core-Power-Supply-Modul |
| GUI | General User Interface |
| BusIn | Dateneingang |
| BusOUT | Datenausgang |
| D$_{in}$ | digitaler Eingang |
| D$_{out}$ | digitaler Ausgang |
| D$_d$ | am Eingang übernommenes digitales Signal |
| E$_{in}$, E$_{in}$$^I$ | Energieversorgungseingang |
| E$_{out}$ | Energieversorgungsausgang |
| EC | Ereignis-Umsetzer, insbesondere Verwerter eines Ereignissignals |
| EP | Ereignis-Erzeuger, insbesondere Quelle eines systeminternen Ereignissignals |
| EP$^I$ | Ereignis-Erzeuger, insbesondere Quelle eines externen Ereignissignals |
| EX | Erweiterungsanschluss |
| ET | Ethernet-Modul, insbesondere Ethernet Anschluss, wie ein LAN Anschluss |
| EB, EB$^I$ | Ethernet-Bus |
| FSB | Direkte Front-Side-Bus- Schnittstelle |
| I2C | Datenbus |
| JTAG | Schnittstelle |
| JSON | Java Script Object Notation Schnittstelle |
| JSON$^I$ | Datenformat JSON |
| L/N | Versorgungsspannung (Wechselspannung (AC) oder Gleichspannung (DC)) |
| KOM, KOM$^I$ | Kommunikation |
| L$^I$ | Schalteingang |
| LM | Leuchtmittel-Modul |
| LM2 | Leuchtmittel-Duo-Modul |
| OS | Linux-Betriebssystem |
| REG | Registrierung |
| RWD | responsives Webdesign, wie ein Bootstrap Design |
| SD | Speicherkartenmodul, insbesondere SD-Kartensteckplatz |
| SSL | Sicherheitsprotokoll Security Socket Layer |
| t | Zeit |
| t$_0$, t$_0$$^I$, t$_1$, t$_1$$^I$ | Zeitpunkt |
| $\Delta$t | Mindestdauer |
| $\Delta$t$^I$ | Entprellungsdauer |

(fortgesetzt)

| | |
|---|---|
| TX | Prozessor-Modul |
| Vin | Eingangssignal Spannungsamplitude |
| Vout | Ausgangssignal Spannungsamplitude |
| UI | User Interface |
| USB, USB$^I$ | universeller-serieller-Bus-Modul, insbesondere USB-Anschluss |
| WD | Wireless Device, wie ein Gerät, das zur drahtlosen Kommunikation ausgestattet ist |
| WiFi, WiFi , WiFi$^{II}$, WiFi$^{III}$, WiFi$^{IV}$ | drahtloses Datennetzwerk-Modul, insbesondere WLAN-Anschluss |
| WS | Webserver, insbesondere lighttpd-Webserver |
| X, X$^I$, X$^{II}$ | Erstreckung |
| Y, Y$^I$ | Erstreckung |

**Patentansprüche**

1. Notlichtbeleuchtungsanlage (1,1', 101, 201),
die sich modular aus einzelnen, jeweils autark arbeitenden, gebäudeweit verteilbaren Modulen (11, 11$^I$, 11$^{II}$, 11$^{III}$, 11$^{IV}$, 15, 15$^I$, 15$^{II}$, 113, 115, 115$^I$, 115$^{II}$), jedes eine eigene Kernfunktion wahrnehmend, zusammensetzt,
die über einen internen Bus untereinander verbunden sind,
**dadurch gekennzeichnet, dass**
durch den einzigen internen Bus eine Verbindung zwischen allen Modulen einer Zentrale durch ein Durchschleifen von Modul zu Modul hergestellt ist,
wobei der interne Bus (49, 49$^I$, 51, 151, 351, 351$^I$, EB, EB$^I$) unverändert als externer Bus (49, 49$^I$, 51, 151, 351, 351$^I$, EB, EB$^I$) weiterführbar ist,
so dass an den externen Bus (49, 49$^I$, 51, 151, 351, 351$^I$, EB, EB$^I$) weitere Module (CBH, CCC, CCM, CCM$^I$, CCM$^{II}$, CCM2, CCM2$^I$, CCM2$^{II}$, CCIF, CCIF$^I$, CES, CMA, CMA$^I$ CMM, CMM$^I$, CPS, LM, LM2) anschließbar sind.

2. Notlichtbeleuchtungsanlage (1,1$^I$, 101, 201) nach Anspruch 1, **dadurch gekennzeichnet, dass**
zumindest ein Notlichtleuchten-Modul (33) vorhanden ist, wobei an wenigstens einem Notlichtleuchten-Modul (33) zumindest eine Notlichtleuchte (31, 31$^I$, 31$^{II}$, 31$^{III}$, 35), aufweisend eine oder mehrere Lampen, insbesondere mehrere Notlichtleuchten (31, 31$^I$, 31$^{II}$, 31$^{III}$, 35), angeschlossen ist, und/oder
dass ein Leuchten-Management-Modul (CMM, CMM$^I$) vorhanden ist.

3. Notlichtbeleuchtungsanlage (1,1$^I$, 101, 201) nach Anspruch 1 oder 2, **dadurch gekennzeichnet, dass**
jedes Modul (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) zumindest zwei Bus-Anschlüsse (49, 49$^I$, 55, 55$^I$, 63) aufweist, zumindest einen ersten Anschluss (49, 49$^I$, 55, 55$^I$, 63) für einen Eingangskanal und zumindest einen zweiten Anschluss (49, 49$^I$, 55, 55$^I$, 63) für einen Ausgangskanal.

4. Notlichtbeleuchtungsanlage (1,1$^I$, 101, 201) nach Anspruch 3, **dadurch gekennzeichnet, dass**
jedes Modul (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) einen Puffer für eine Aufnahme eines über den Eingangskanal eintreffenden Signals aufweist, bevor das Signal gegebenenfalls an dem Ausgangskanal zur Verfügung steht, um das Modul zu verlassen und an ein nachfolgendes Modul (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) gesendet zu werden.

5. Notlichtbeleuchtungsanlage (1, 1$^I$, 101, 201) nach einem der vorstehenden Ansprüche,
**dadurch gekennzeichnet, dass**
die Notlichtbeleuchtungsanlage (1, 1$^I$, 101, 201) ein Stromkreis-Modul (CCM, CCM$^I$, CCM$^{II}$, CCM2, CCM2$^I$, CCM2$^{II}$) aufweist, an das ein Stromkreis (21, 21$^I$, 21$^{II}$, 21$^{III}$) angeschlossen ist, an welchem mehrere, über den Stromkreis (21, 21$^I$, 21$^{II}$, 21$^{III}$) steuerbare Notlichtleuchten (31, 31$^I$, 31$^{II}$, 31$^{III}$, 35) angeschlossen sind,
wobei insbesondere die Notlichtleuchten (31, 31$^I$, 31", 31$^{III}$, 35) mit dem Stromkreis-Modul (CCM, CCM$^I$, CCM$^{II}$,

CCM2, CCM2$^I$, CCM2$^{II}$) in einer bidirektionalen Kommunikation, z. B. über eine Powerline Communication, vorzugsweise ausgebildet in einer Einleitertechnik, stehen.

**6.** Notlichtbeleuchtungsanlage (1, 1$^I$, 101, 201) nach einem der vorstehenden Ansprüche,
**dadurch gekennzeichnet, dass**
der Bus (51, 51$^I$, 151, 351, 351$^I$) ein differentiell operierender Bus (51, 51$^I$, 151, 351, 351$^I$), wie auf einer physikalischen Ebene ein CAN-Bus (49, 49$^1$), entspricht,
wobei insbesondere der interne Bus (51, 151, 351, 351$^I$) galvanisch getrennt mit mindestens einem externen Modul (15, 15$^I$, 15$^{II}$, 115, 115$^I$, 115$^{II}$) vernetzt ist.

**7.** Notlichtbeleuchtungsanlage (1, 1$^I$, 101, 201) nach einem der vorstehenden Ansprüche,
**dadurch gekennzeichnet, dass**
der interne Bus über einen Koppler (45, 45$^I$) an einen Bus-Hub (47) angeschlossen ist, wobei insbesondere Stichleitungen und/oder externe Verdrahtungen mittels des Bus-Hubs (47) mit dem internen Bus verbunden sind.

**8.** Notlichtbeleuchtungsanlage (1, 1$^I$, 101, 201) nach Anspruch 7, **dadurch gekennzeichnet, dass**
der Bus-Hub (47) mindestens einen isolierten Port (43, 43$^I$), vorzugsweise zwei isolierte Ports (43, 43$^I$), zur Vernetzung (17) von externen, verteilten Modulen (15, 15$^I$, 15$^{II}$, 115, 115$^I$, 115$^{II}$) und/oder weiteren Notlichtbeleuchtungsanlagen (1, 1$^I$, 101, 201) aufweist, der einen Ausgang des internen Busses darstellt.

**9.** Notlichtbeleuchtungsanlage (1, 1$^I$, 101, 201) nach einem der vorstehenden Ansprüche,
**dadurch gekennzeichnet, dass**
ein externes, zur Ermittlung von sicheren Fluchtwegen eingerichtetes System an den externen Bus anschließbar ist,
wobei insbesondere eine Schnittstelle (67, 67$^I$, 67$^{II}$, 67$^{III}$, 67$^{IV}$, 67$^V$, 67$^n$, JTAG) zu dem internen Bus vorhanden ist,
über die eine Fluchtwegslenkung durchführbar ist,
und wobei die Fluchtwegslenkung dynamisch ist, die mittels Notleuchten (31, 31$^I$, 31$^{II}$, 31$^{III}$, 35) und mittels Sicherheitsleuchten durchgeführt wird,
wobei anhand von Bewegungssensoren und/oder Präsenzsensoren eine Fluchtwegslenkung stattfindet.

**10.** Notlichtbeleuchtungsanlage (1,1$^I$, 101, 201) nach einem der vorstehenden Ansprüche, wobei als wenigstens ein weiteres Modul eines oder als weitere Module mehrere der folgenden Module vorhanden sind:

- Überwachungsmodul (CMM-Modul),
- Modul zur zentralen Einspeisung (CPS-Modul)
- ein CMB-Modul als Mainboard-Modul,
- ein CEV-Modul als Modul für eine schaltbare Spannungsversorgung,
- ein CIM-Modul als, insbesondere digitales, Eingangs-Modul,
- ein COM-Modul als, insbesondere digitales, Ausgangs-Modul,
- in CCC-Modul als Modul zur Überwachung eines kritischen Kreises,
- ein CES-Modul als ein Modul mit einer Notstromquelle,
- ein CBH-Modul als ein Bus-Splitter-Modul,
- ein CLM-Modul als ein Netzwächter-Modul,
- ein CMA-Modul als ein Fernmeldeanzeige-Modul,
- ein CMT-Modul als ein Meldetableau-Modul und/oder
- eine Notstromquelle (CES-Modul).

**11.** Verfahren zum Betrieb einer Notlichtbeleuchtungsanlage (1,1$^I$, 101, 201) mit mehreren Notlichtleuchten, insbesondere einer Notlichtbeleuchtungsanlage (1,1$^I$, 101, 201) nach einem der vorstehenden Ansprüche, wobei einzelne Komponenten der Notlichtbeleuchtungsanlage (1,1$^I$, 101, 201) in gesonderten Modulen (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) vorhanden sind,
wobei zwischen den Modulen mit Hilfe eines Bus-Systems, das einen internen Bus (51, 51$^I$, 151, 351, 351$^I$) einer Zentrale und einen externen Bus (51, 151, 351, 351$^I$) für gebäudeweit verteilte Module (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) umfasst, kommuniziert wird,
wobei die Module (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) zumindest teilweise in Serie verschaltet sind und

wobei ein Funktionieren des internen Busses (51, 51$^I$, 151, 351, 351$^I$) und des externen Busses (51, 151, 351, 351$^I$) von einem einzigen Überwachungsmodul (CMM, CMM$^I$) überwacht wird.

12. Verfahren nach Anspruch 11, **dadurch gekennzeichnet, dass** ein Signal über das Bus-System von einem ersten Modul (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) zu einem zweiten Modul (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) geleitet wird und in dem zweiten Modul zunächst in einem darin befindlichen Puffer verarbeitet wird, von wo aus das Signal weiterverarbeitet wird, insbesondere an eines oder mehrere Module (11, 11$^I$, 11$^{II}$, 11$^{III}$, 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) weitergeleitet, an das erste Modul zurückgeschickt oder an Leuchtmittel (25, 25$^I$, 25$^{II}$, 25$^{III}$, LM, LM2) zum Ein- oder Ausschalten derselben weitergeleitet wird.

13. Verfahren nach einem der Ansprüche 11 oder 12, **dadurch gekennzeichnet, dass** das Bus-System durch ein Versenden von Datenpaketen kommuniziert, wobei insbesondere die Datenpakete ausgewählt werden aus der Gruppe bestehend aus: Prozessdaten, wie Messwerte, Befehle, insbesondere Befehle zum Programmieren von Modulen (11, 11$^I$, 11$^{II}$ 11$^{III}$ 11$^{IV}$, 15, 15$^I$, 15$^{II}$, 113, 115, 115$^I$, 115$^{II}$, CBH, CCC, CCM, CCM$^I$ , CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2), Rückantworten auf Befehle, Ereignisse, wie Netzwiederkehr, Netzwiederkehr, Betriebsartumschaltung, Zustandswechsel an einem Eingang, Betriebsparameter, Stromwerte, Spannungswerte, Leuchtenströme, Daten zur Identifikation einzelner Module (11, 11$^I$, 11$^{II}$ 11$^{III}$ 11$^{IV}$, 15, 15$^I$, 15$^{II}$, 113, 115, 115$^I$, 115$^{II}$, CBH, CCC, CCM, CCM$^I$, CCM$^{II}$, CCM2, CCM2$^I$, CCM2$^{II}$, CCIF, CCIF$^I$, CES, CEV, CIO, CLM, CLM$^I$, CMA, CMA$^I$, CIM, CMA, CMA$^I$, CMT, CMB, CMM, CMM$^I$, COM, CPS, LM, LM2) oder Leuchten (27, 27$^I$, 27$^{II}$, 27$^{III}$, 27$^{IV}$) oder die Information, dass ein kritischer Kreis (61) getrennt ist.

14. Verfahren zur Erstellung einer Notlichtbeleuchtungsanlage (1,1$^I$, 101, 201), insbesondere einer Notlichtbeleuchtungsanlage (1,1$^I$, 101, 201) nach einem der Ansprüche 1 bis 11, die nach ihrer Erstellung update-fähig ist, wobei mehrere Module (11, 11$^1$, 11$^{II}$, 11$^{III}$ 11$^{IV}$, 15, 15$^I$, 15$^{II}$, 113, 115, 115$^I$, 115$^{II}$), ausgewählt aus der nachfolgenden Gruppe Stromkreis-Modul (CCM, CCM$^I$, CCM$^{II}$, CCM2, CCM2$^I$, CCM2"), Eingang-Modul (CIM, CIO), Ausgangs-Modul (COM, CIO), Netzteil-Modul (CEV), Notlichtleuchten-Modul (33), Prozessor-Modul (TX, BBC, BBC$^I$, BBC", BBC$^{III}$, BBC$^{IV}$, BBC$^V$, BBC$^{IV}$, BBC$^{VII}$), Leuchten-Management-Modul (CMM, CMM$^I$), installiert und über einen externen Bus (51, 151, 351, 351$^I$) verbunden werden.

Figur 1

Figur 2

Figur 3

Figur 4

EP 3 879 942 A1

Figur 5

EP 3 879 942 A1

Figur 6

301

87

WiFi^I

ET

TX

BBC^III

351

WiFi^II

ET

TX

BBC^IV

301^I

EB

85

Figur 7

Figur 8

Figur 9

Figur 10

Figur 11

Figur 12

EP 3 879 942 A1

Figur 13

EP 3 879 942 A1

Figur 14

Figur 15

Figur 16

Figur 17

Bus OUT

Bus IN

49

29<sup>I</sup>

253<sup>I</sup>

253

19<sup>I</sup>

19

115<sup>I</sup>

115

9

115<sup>II</sup>

79

79<sup>I</sup>

Figur 18

EP 3 879 942 A1

Figur 19

Figur 20

Figur 21

Figur 22

Figur 23

EP 3 879 942 A1

Figur 24

Figur 25

Europäisches
Patentamt

European
Patent Office

Office européen
des brevets

**EUROPÄISCHER RECHERCHENBERICHT**

Nummer der Anmeldung

EP 21 16 1371

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | GB 2 404 474 A (COOPER LIGHTING AND SECURITY L [GB]) 2. Februar 2005 (2005-02-02) * Seite 14, Zeilen 1-7; Abbildungen 1,2,4 * | 1-5, 10-12,14 | INV. H05B47/165 H05B47/18 H02J9/06 G08B29/06 H05B45/10 H05B47/21 H05B47/23 G08B7/06 |
| Y | * * * * * * * * * * * * * * * * * * * * * * * * * * * * * * * * * * * * | 6-9,13 | |
| | ----- | | RECHERCHIERTE SACHGEBIETE (IPC) |
| Y,D | DE 10 2007 018884 A1 (GFS GES FUER STROMVERSORGUNGST [DE]) 31. Oktober 2007 (2007-10-31) * Absätze [0004], [0011], [0022]; Abbildung 1 * * * * * | 6-9,13 | H05B H02J G08B |
| | ----- | | |
| Y,D | DE 10 2014 112726 A1 (INOTEC SICHERHEITSTECHNIK GMBH [DE]) 10. März 2016 (2016-03-10) * Absätze [0012], [0021] - [0038], [0052] - [0063], [0072]; Anspruch 1; Abbildungen 1, 2, 3a * * * | 9 | |
| | ----- -/-- | | |

Der vorliegende Recherchenbericht wurde für alle Patentansprüche erstellt

| Recherchenort | Abschlußdatum der Recherche | Prüfer |
|---|---|---|
| München | 29. Juni 2021 | Müller, Uta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

Seite 1 von 2

Europäisches Patentamt

European Patent Office

Office européen des brevets

**EUROPÄISCHER RECHERCHENBERICHT**

**Nummer der Anmeldung**

EP 21 16 1371

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2008/009637 A1 (PATENT TREUHAND GES FUER ELEKTRISCHE GLUEHLAMPEN MBH [DE] ET AL.) 24. Januar 2008 (2008-01-24) * Abbildungen 1, 46 * * * * * * * * * ----- | 1-14 | |
| A,D | US 5 734 230 A (EDWARDS M LARRY [US] ET AL) 31. März 1998 (1998-03-31) * Abbildung 5 * ----- | 1-14 | |
| A | DE 10 2008 017533 B3 (RP TECHNIK E K [DE]) 4. Juni 2009 (2009-06-04) * Absätze [0004], [0014], [0031]; Abbildung 3 * ----- | 1-14 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 29. Juni 2021 | Müller, Uta |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
Dokument

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 21 16 1371

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2021

| Im Recherchenbericht angeführtes Patentdokument | Datum der Veröffentlichung | Mitglied(er) der Patentfamilie | Datum der Veröffentlichung |
|---|---|---|---|
| GB 2404474 A | 02-02-2005 | KEINE | |
| DE 102007018884 A1 | 31-10-2007 | KEINE | |
| DE 102014112726 A1 | 10-03-2016 | KEINE | |
| WO 2008009637 A1 | 24-01-2008 | AU 2007276204 A1 | 24-01-2008 |
| | | CN 101491161 A | 22-07-2009 |
| | | DE 102006033673 A1 | 24-01-2008 |
| | | EP 2044814 A1 | 08-04-2009 |
| | | JP 5156743 B2 | 06-03-2013 |
| | | JP 2009544130 A | 10-12-2009 |
| | | KR 20090035712 A | 10-04-2009 |
| | | US 2009309512 A1 | 17-12-2009 |
| | | WO 2008009637 A1 | 24-01-2008 |
| US 5734230 A | 31-03-1998 | AU 5927696 A | 18-12-1996 |
| | | EP 0777929 A1 | 11-06-1997 |
| | | US 5734230 A | 31-03-1998 |
| | | WO 9638896 A1 | 05-12-1996 |
| DE 102008017533 B3 | 04-06-2009 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014112726 A1
- DE 102007018884 A2
- DE 102006033673 A1
- DE 10007895 A1
- GB 2404474 A
- US 5734230 A
- EP 2081415 B1